# EUROPEAN PATENT APPLICATION

(11) **EP 4 002 537 A1**
(43) Date of publication of application: **25.05.2022**
(21) Application number: 21208850.4
(22) Date of filing: 17.11.2021
(51) Int. Cl.: H01M 10/04, H01M 50/403, H01M 50/46, H01M 50/463, H01M 50/474, H01M 50/477, H01M 50/489, H01M 50/497, H01M 10/0587, H01M 10/0585, H01M 10/0525

(54) **SPACERS FOR ELECTRODES, ELECTRODE STACKS AND BATTERIES AND SYSTEMS AND METHODS THEREFOR**

(30) Priority: 18.11.2020 US 202063115266 P; 18.11.2020 US 202063115578 P
(71) Applicant: Enovix Operations Inc., Fremont, CA 94538 (US)
(72) Inventor: CALCATERRA, Anthony, Milpitas, 95035 (US); LAHIRI, Ashok, Cupertino, 95014 (US); CARDOZO, Benjamin L., Palo Alto, 94306 (US); VALDES, Bruno A., Sunnyvale, 94087 (US); DALTON, Jeremie J., San Jose, 95131 (US); LEE, Kim Han, Pleasanton, 94588 (US); RAMASUBRAMANIAN, Murali, Fremont, 94539 (US); BUSACCA, Robert S., San Francisco, 94118 (US)
(74) Representative: Carpmaels & Ransford LLP

(57) **Abstract**

A battery includes an electrode assembly. The electrode assembly has a population of unit cells, each unit cell including an electrode current collector layer, an electrode layer, a separator layer, a counter-electrode layer, and a counter-electrode current collector layer in stacked succession. The electrode layer has an electrode active material, and the counter-electrode layer has a counter-electrode active material. One of the electrode active material and the counter-electrode material is a cathodically active material and the other of the electrode active material and the counter-electrode material is an anodically active material. A subset of the unit cell population includes a pair of spacer members located between the electrode current collector layer and the counter-electrode current collector layer. At least a portion of the counter-electrode active material is located between the spacer members in a common plane defined by the x and z axes.

## Description

### CROSS-REFERENCE TO RELATED APPLICATIONS

This application claims priority to U.S. Provisional Patent Application 63/115,266, filed 18 November 2020 and U.S. Provisional Application Serial No. 63/115,578 filed 18 November 2020. Both of these provisional applications are incorporated herein in their entireties by reference.

Reference is made to U.S. Patent Application No. 16/533,082, filed on 06 August 2019, which claims priority to U.S. Provisional Patent Application No. 62/715,233, filed 06 August 2018, and to International Patent Application No. PCT/US2018/061245, filed 15 November 2018, which claims priority to US Provisional Applications Nos. 62/586,737, filed 15 November 2017 and 62/715,233, filed 06 August 2018, each of these applications are hereby incorporated by reference in their entireties.

### FIELD

The field of the disclosure relates generally to energy storage technology, such as battery technology. More specifically, the field of the disclosure relates to systems and methods for the assembly of energy storage systems, such as electrodes for use in secondary batteries, including lithium based batteries.

### BACKGROUND

Lithium based secondary batteries have become desirable energy sources due to their comparatively high energy density, power and shelf life. Examples of lithium secondary batteries include non-aqueous batteries such as lithium-ion and lithium-polymer batteries.

Known energy storage devices, such as batteries, fuel cells and electrochemical capacitors, typically have two-dimensional laminar architectures, such as planar or spirally wound (i.e., jellyroll) laminate structures, where a surface area of each laminate is approximately equal to its geometric footprint (ignoring porosity and surface roughness).

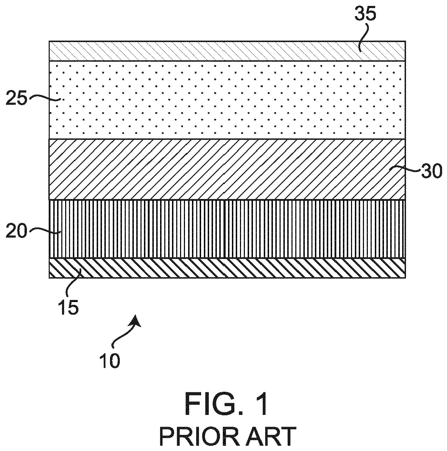

Figure 1 illustrates a cross-sectional view of a known laminar type secondary battery, indicated generally at 10. The battery 10 includes a positive electrode current collector 15 in contact with a positive electrode 20. A negative electrode 25 is separated from the positive electrode 20 by a separator 30. The negative electrode 25 is in contact with a negative electrode current collector 35. As shown in Figure 1, the battery 10 is formed in a stack. The stack is sometimes covered with another separator layer (not shown) above the negative electrode current collector 35, and then rolled and placed into a can (not shown) to assemble the battery 10. During a charging process, a carrier ion (typically, lithium) leaves the positive electrode 20 and travels through separator 30 into the negative electrode 25. Depending upon the anode material used, the carrier ion either intercalates (e.g., sits in a matrix of negative electrode material without forming an alloy) or forms an alloy with the negative electrode material. During a discharge process, the carrier ion leaves the negative electrode 25 and travels back through the separator 30 and back into the positive electrode 20.

Three-dimensional secondary batteries may provide increased capacity and longevity compared to laminar secondary batteries. The production of such three-dimensional secondary batteries, however, presents manufacturing and cost challenges. Precision manufacturing techniques used, to-date, can yield secondary batteries having improved cycle life but at the expense of productivity and cost of manufacturing. When known manufacturing techniques are sped up, however, an increased number of defects, loss of capacity and reduced longevity of the batteries can result.

Thus, it would be desirable to produce three-dimensional batteries while addressing the issues in the known art.

### BRIEF DESCRIPTION

An embodiment includes a secondary battery for cycling between a charged state and a discharged state. The battery comprises an enclosure and an electrode assembly disposed within the enclosure, wherein the electrode assembly has mutually perpendicular transverse, longitudinal, and vertical axes corresponding to the x, y and z axes, respectively, of a three-dimensional Cartesian coordinate system. The electrode assembly comprises a population of unit cells, each unit cell comprises an electrode current collector layer, an electrode layer, a separator layer, a counter-electrode layer, and a counter-electrode current collector layer in stacked succession in the longitudinal direction. The electrode layer comprises an electrode active material, and the counter-electrode layer comprises a counter-electrode active material. One of the electrode active material and the counter-electrode material is a cathodically active material and the other of the electrode active material and the counter-electrode material is an anodically active material. A subset of the unit cell population further comprises a pair of spacer members located in the stacked succession between the electrode current collector layer and the counter-electrode current collector layer. One of the spacer members is spaced in the transverse direction from the other spacer member. At least a portion of the counter-electrode active material of the counter-electrode layer is located between the spacer members such that the portion of the counter-electrode active material and the spacer members lie in a common plane defined by the x and z axes.

Another embodiment includes an electrode assembly having mutually perpendicular transverse, longitudinal, and vertical axes corresponding to the x, y and z axes, respectively, of a three-dimensional Cartesian coordinate system. The electrode assembly comprises a population of unit cells, each unit cell comprises an electrode current collector layer, an electrode layer, a separator layer, a counter-electrode layer, and a counter-electrode current collector layer in stacked succession in the longitudinal direction. The electrode layer comprises an electrode active material, and the counter-electrode layer comprises a counter-electrode active material. One of the electrode active material and the counter-electrode material is a cathodically active material and the other of the electrode active material and the counter-electrode material is an anodically active material. A subset of the unit cell population further comprises a pair of spacer members located in the stacked succession between the electrode current collector layer and the counter-electrode current collector layer. One of the spacer members is spaced in the transverse direction from the other spacer member. At least a portion of the counter-electrode active material of the counter-electrode layer is located between the spacer members such that the portion of the counter-electrode active material and the spacer members lie in a common plane defined by the x and z axes.

Another embodiment includes a method of manufacturing a unit cell for use with a secondary battery. The method comprises stacking an electrode current collector layer, an electrode layer, a separator layer, a counter-electrode layer, and a counter-electrode current collector layer in succession in the longitudinal direction. The electrode layer comprises an electrode active material, and the counter-electrode layer comprises a counter-electrode active material. One of the electrode active material and the counter-electrode material is a cathodically active material and the other of the electrode active material and the counter-electrode material is an anodically active material. The method includes placing a pair of spacer members in the stacked succession between the electrode current collector layer and the counter-electrode current collector layer. One of the spacer members is spaced in a transverse direction from the other spacer member. At least a portion of the counter-electrode active material of the counter-electrode layer is located between the spacer members such that the portion of the counter-electrode active material and the spacer members lie in a common plane defined by an x axis and a z axis.

Another embodiment includes a method of manufacturing an electrode assembly for use with a secondary battery. The method comprises stacking an electrode current collector layer, an electrode layer, a separator layer, a counter-electrode layer, and a counter-electrode current collector layer in succession in the longitudinal direction. The electrode layer comprises an electrode active material, and the counter-electrode layer comprises a counter-electrode active material. One of the electrode active material and the counter-electrode material is a cathodically active material and the other of the electrode active material and the counter-electrode material is an anodically active material. The method includes placing a pair of spacer members in the stacked succession between the electrode current collector layer and the counter-electrode current collector layer. One of the spacer members is spaced in a transverse direction from the other spacer member. At least a portion of the counter-electrode active material of the counter-electrode layer is located between the spacer members such that the portion of the counter-electrode active material and the spacer members lie in a common plane defined by an x axis and a z axis.

Another embodiment includes a method for merging a plurality of webs of electrode materials. The process comprises unwinding a first web of the electrode material along a first web merge path, the first web comprising a population of electrode sub-units delineated by corresponding weakened tear patterns and a population of first conveying features. The process further includes unwinding a second web of the electrode material along a second web merge path downstream of the first web merge path, the second web comprising a population of electrode sub-units delineated by corresponding weakened tear patterns and a population of second conveying features. The process also includes conveying a belt comprising a plurality of projections in a web merge direction adjacent the first web merge path and the second web merge path. The plurality of projections is configured to engage with the first conveying features of the first web and the second conveying features of the second web. The process further includes inserting a population of spacer members between the first web of electrode material and the second web of electrode material. The process includes overlaying the second web of the electrode material on the first web of electrode material at a second web merge location downstream of the first web merge location, the population of spacer members being captured between the first web of electrode material and the second web of electrode material.

Yet another embodiment includes a battery for cycling between a charged state and a discharged state, the battery comprising an enclosure and an electrode assembly disposed within the enclosure, wherein the electrode assembly has mutually perpendicular transverse, longitudinal, and vertical axes corresponding to the x, y and z axes, respectively, of a three-dimensional Cartesian coordinate system. The electrode assembly comprises a population of unit cells, each unit cell having a main body, a first edge margin, a second edge margin separated in the transverse direction from the first edge margin, a front, a back separated in the longitudinal direction from the front, a top, and a bottom separated in the vertical direction from the top, each main body comprising an electrode current collector layer, an electrode layer, a separator layer, a counter-electrode layer, and a counter-electrode current collector layer in stacked succession in the longitudinal direction. The electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material. Each of the first edge margin and the second edge margin comprises (i) the electrode current collector layer, the separator layer, and the counter-electrode current collector layer, and (ii) a tape spacer, each of the tape spacers being adhered to at least one of (i) the electrode current collector, (ii) the electrode layer, (iii) the separator, and (iv) the counter-electrode current collector, the counter-electrode layer having a first end and a second end spaced in the transverse direction from the first end to define a transverse extent of the counter-electrode layer, the transverse extent of the counter-electrode layer terminating prior to the first edge margin and second edge margin.

Yet another embodiment includes an electrode assembly for cycling between a charged state and a discharged state in a battery, the battery comprising an enclosure and an electrode assembly disposed within the enclosure, wherein the electrode assembly has mutually perpendicular transverse, longitudinal, and vertical axes corresponding to the x, y and z axes, respectively, of a three-dimensional Cartesian coordinate system. The electrode assembly comprises a population of unit cells, each unit cell having a main body, a first edge margin, a second edge margin separated in the transverse direction from the first edge margin, a front, a back separated in the longitudinal direction from the front, a top, and a bottom separated in the vertical direction from the top, each main body comprising an electrode current collector layer, an electrode layer, a separator layer, a counter-electrode layer, and a counter-electrode current collector layer in stacked succession in the longitudinal direction. The electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material. Each of the first edge margin and the second edge margin comprises (i) the electrode current collector layer, the separator layer, and the counter-electrode current collector layer, and (ii) a tape spacer, each of the tape spacers being adhered to at least one of (i) the electrode current collector, (ii) the electrode layer, (iii) the separator, and (iv) the counter-electrode current collector, the counter-electrode layer having a first end and a second end spaced in the transverse direction from the first end to define a transverse extent of the counter-electrode layer, the transverse extent of the counter-electrode layer terminating prior to the first edge margin and second edge margin.

Still another embodiment includes a unit cell for a battery configured to cycle between a charged state and a discharged state, the unit cell having mutually perpendicular transverse, longitudinal, and vertical axes corresponding to the x, y and z axes, respectively, of a three-dimensional Cartesian coordinate system, the unit cell having a main body, a first edge margin, a second edge margin separated in the transverse direction from the first edge margin, a front, a back separated in the longitudinal direction from the front, a top, and a bottom in the vertical direction from the top, the main body comprising an electrode current collector layer, an electrode layer, a separator layer, a counter-electrode layer, counter-electrode layer, and a counter-electrode current collector layer in stacked succession in the longitudinal direction. The electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material. Each of the first edge margin and the second edge margins of the main body comprises (i) the electrode current collector layer, the separator layer, and the counter-electrode current collector layer, and (ii) a first tape spacer disposed in the first edge margin and a second tape spacer disposed in the second edge margin; each of the first tape spacer and the second tape spacer being adhered to at least one of (i) the electrode current collector, (ii) the electrode layer, (iii) the separator, and (iv) the counter-electrode current collector, the counter-electrode layer having a first end and a second end spaced in the transverse direction from the first end to define a transverse extent of the counter-electrode layer, the transverse extent of the counter-electrode layer terminating prior to the first edge margin and second edge margin.

Still another embodiment includes an electrode assembly for a battery configured to cycle between a charged state and a discharged state, the electrode assembly having mutually perpendicular transverse, longitudinal, and vertical axes corresponding to the x, y and z axes, respectively, of a three-dimensional Cartesian coordinate system, the electrode assembly having a main body, a first edge margin, a second edge margin separated in the transverse direction from the first edge margin, a front, a back separated in the longitudinal direction from the front, a top, and a bottom in the vertical direction from the top, the main body comprising an electrode current collector layer, an electrode layer, a separator layer, a counter-electrode layer, counter-electrode layer, and a counter-electrode current collector layer in stacked succession in the longitudinal direction. The electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material. Each of the first edge margin and the second edge margins of the main body comprises (i) the electrode current collector layer, the separator layer, and the counter-electrode current collector layer, and (ii) a first tape spacer disposed in the first edge margin and a second tape spacer disposed in the second edge margin; each of the first tape spacer and the second tape spacer being adhered to at least one of (i) the electrode current collector, (ii) the electrode layer, (iii) the separator, and (iv) the counter-electrode current collector, the counter-electrode layer having a first end and a second end spaced in the transverse direction from the first end to define a transverse extent of the counter-electrode layer, the transverse extent of the counter-electrode layer terminating prior to the first edge margin and second edge margin.

Another embodiment includes a method of preparing a unit cell for a battery configured to cycle between a charged state and a discharged state, the method comprising: stacking an electrode current collector layer, an electrode layer, a separator layer, a counter-electrode layer, and a counter-electrode current collector layer in stacked succession in the longitudinal direction; wherein the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, adhering a tape spacer to at least one of the electrode current collector layer, the electrode layer, the separator layer, the counter-electrode layer, or the counter-electrode current collector layer within a first edge margin and a second edge margin such that the first edge margin and the second edge margin comprises (i) the electrode current collector layer, the separator layer, and the counter-electrode current collector layer, and (ii) the tape spacer, wherein the counter-electrode layer has a first end and a second end spaced in the transverse direction from the first end to define a transverse extent of the counter-electrode layer, and the counter-electrode layer is provided such that the transverse extent of the counter electrode layer terminates prior to the first edge margin and second edge margin.

Another embodiment includes a method of preparing an electrode assembly for a battery configured to cycle between a charged state and a discharged state, the method comprising: stacking an electrode current collector layer, an electrode layer, a separator layer, a counter-electrode layer, and a counter-electrode current collector layer in stacked succession in the longitudinal direction; wherein the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, adhering a tape spacer to at least one of the electrode current collector layer, the electrode layer, the separator layer, the counter-electrode layer, or the counter-electrode current collector layer within a first edge margin and a second edge margin such that the first edge margin and the second edge margin comprises (i) the electrode current collector layer, the separator layer, and the counter-electrode current collector layer, and (ii) the tape spacer, wherein the counter-electrode layer has a first end and a second end spaced in the transverse direction from the first end to define a transverse extent of the counter-electrode layer, and the counter-electrode layer is provided such that the transverse extent of the counter electrode layer terminates prior to the first edge margin and second edge margin.

### BRIEF DESCRIPTION OF THE DRAWINGS

Figure 1 is a cross-section of an existing laminar battery.
Figure 2 is a schematic diagram of one suitable embodiment of an electrode manufacturing system according to the present disclosure.
Figure 3 is an enlarged schematic view of one suitable embodiment of a laser system according to the present disclosure.
Figure 4 is an isometric view of one suitable embodiment of a cutting plenum according to the present disclosure.
Figure 5 is a truncated top view of exemplary webs of base material formed into electrodes after having been processed through the electrode manufacturing system of the current disclosure.
Figure 6 is a top view of an exemplary web of base material having electrode patterns formed thereon.
Figure 6A is a perspective view of a portion of the web of base material as an exemplary negative electrode.
Figure 6B is a perspective view of a portion of the web of base material as an exemplary positive electrode.
Figure 7 is an enlarged top view of a portion of a web of base material having an exemplary electrode pattern formed thereon
Figure 8 is an isometric view of base material formed into a web of electrode material including electrode patterns after having been processed through the electrode manufacturing system of the current disclosure.
Figure 8A is a top view of a portion of the web of electrode material of Figure 8.
Figure 9 is an isometric view of one suitable embodiment of a rewind roller of the electrode manufacturing system of the current disclosure.
Figure 10 is a top view of one suitable embodiment of a brushing station of the current disclosure.
Figure 11 is a side view of the exemplary brushing station shown in Figure 10.
Figure 12 is an isometric view of one suitable embodiment of an inspection station according to the current disclosure.
Figure 13 is a top view of a chuck according to one suitable embodiment of the current disclosure.
Figure 14 is a partial schematic view of a merging and stacking arrangement according to the current disclosure.
Figure 14A is a partial side view of a stacking device according to the current disclosure.
Figure 14B is an enhanced detail view illustrating a portion of an unwind section of the stacking device of Fig. 14A.
Figures 14C1-C3 illustrate a side, front and top view, respectively of the merging arrangement according to the present disclosure.
Figure 14D is an isometric view of an electrode material tensioning section of the electrode manufacturing system of the present disclosure.
Figures 14E1-E2 include side views and Figures 14E3-E4 include top views of untapered (top) and tapered (bottom) projections according to embodiments of the disclosure.
Figure 14F1 shows an isometric view (left), Figure 14F2 shows a top view and Figure 14F3 shows side view (right) of counter rotating brushes according to an embodiment of the present disclosure.
Figure 14G shows an enlarged view of an initial contact point shown in Fig. 14B of a web with a merge sprocket according to an embodiment of the present disclosure.
Figures 14H1-H3 show three views, a top view, a side view and a perspective view, respectively, of a web interacting with a merge sprocket according to an embodiment of the present disclosure.
Figure 15 is a cross section of a multi-layer stack of electrodes according to the current disclosure.
Figure 15A is a partial top view of a web of electrode material according to the current disclosure.
Figure 16A is a side view of a multi-layer stack of electrode sub-units according to the current disclosure.
Figure 16B is a partial top view of the multi-layer stack of electrode sub-units of Figure 16A.
Figure 16C is a partial top view of the multi-layer stack of Figure 16A after rupture of a second perforation.

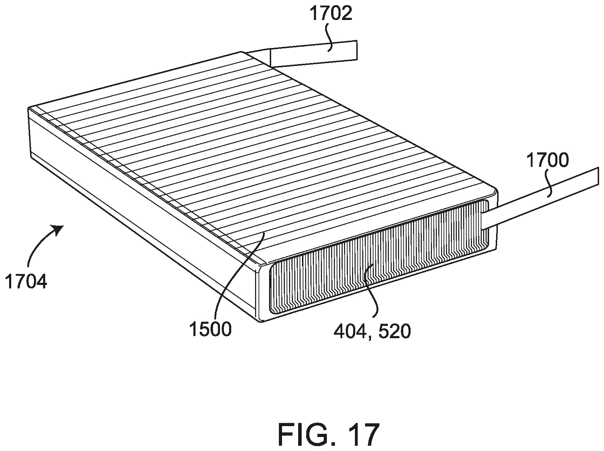

Figure 17 is an isometric view of a stacked cell according to the current disclosure.

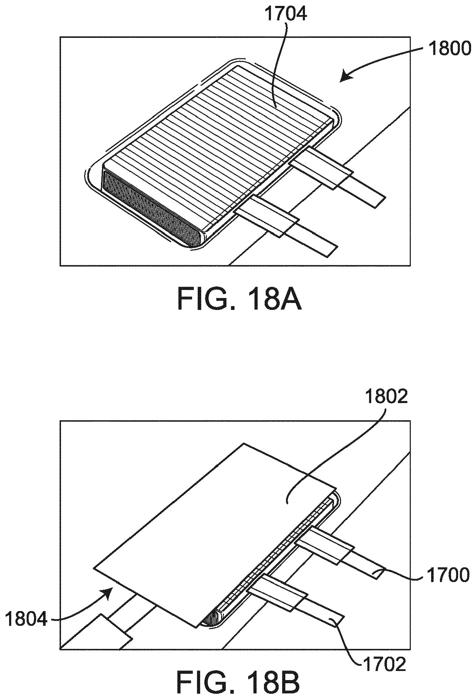

Figures 18A and 18B are sequential isometric views of a stacked cell having a battery package placed thereon.
Figure 19 is a side view of a merging section of the system of the present disclosure.
Figure 20 is a side view of a high volume stacking system of the present disclosure.
Figure 20A is a partial close-up view of a toothed below of the high volume stacking system of Fig. 20.
Figure 21 is a perspective view of a receiving unit according to the present disclosure.
Figure 22 is a front view of a receiving unit of Fig. 21.
Figure 23 is a schematic view of an embodiment of a punching and stacking system of the present disclosure.
Figures 24A, 24B and 24C are a top view of a merged material web highlighting an electrode sub-unit, an electrode sub-unit and a series of stacked electrode sub-units of the present disclosure, respectively.
Figure 24D is a truncated view of an embodiment of a merged material web including a population of electrode sub-units.
Figure 24E is an isometric view of a receiving unit of the present disclosure.
Figure 24F is a front view illustrating a receiving unit having a population of electrode sub-units being stacked thereon.
Figure 25 is an isometric view of a de-merge sprocket of the punching and stacking system of the present disclosure.
Figure 26A is a top view of a punch head during a punching operation according to an embodiment of the present disclosure.
Figure 26B is an isometric view of the punch head shown in Fig. 26A.
Figure 26C is a detail view of portion C of Fig. 26A.
Figure 27 illustrates a spacer member on a web of electrode material according to an embodiment of the present disclosure.
Figure 28 is a cross-sectional view along the line A-A of the web of electrode material with the spacer members of Fig. 27.
Figure 29 is an isometric view of a stacked cell including the spacer members in accordance with an embodiment of the present disclosure.
Figures 30A-F are cross sectional views taken along section 30A-D of Figure 29 showing a single electrode sub-unit according to different embodiments of the present disclosure.
Figures 31A-D are cross sectional views taken along section 31A-D of Figure 29 showing a single electrode sub-unit according to different embodiments of the present disclosure.
Figures 32A-D are cross sectional views taken along section 32A-D of Figure 29 showing a single electrode sub-unit according to different embodiments of the present disclosure.
Figures 33A-B illustrates embodiments of unit cells and electrode sub-units according to embodiments of the present disclosure.
Figures 34A-B illustrate cross sectional views taken along section 30A-D of Figure 29 showing a single electrode sub-unit according to different embodiments of the present disclosure that include supplemental spacers.
Figure 35 illustrates an electrode sub-unit including spacer members being stacked according to an embodiment of the present disclosure.

### DEFINITIONS

"A," "an," and "the" (i.e., singular forms) as used herein refer to plural referents unless the context clearly dictates otherwise. For example, in one instance, reference to "an electrode" includes both a single electrode and a plurality of similar electrodes.

"About" and "approximately" as used herein refers to plus or minus 10%, 5%, or 1% of the value stated. For example, in one instance, about 250 µm would include 225 µm to 275 µm. By way of further example, in one instance, about 1,000 µm would include 900 µm to 1,100 µm. Unless otherwise indicated, all numbers expressing quantities (e.g., measurements, and the like) and so forth used in the specification and claims are to be understood as being modified in all instances by the term "about." Accordingly, unless indicated to the contrary, the numerical parameters set forth in the following specification and attached claims are approximations. Each numerical parameter should at least be construed in light of the number of reported significant digits and by applying ordinary rounding techniques.

"Anode" as used herein in the context of a secondary battery refers to the negative electrode in the secondary battery.

"Anode material" or "Anodically active" as used herein means material suitable for use as the negative electrode of a secondary battery

"Cathode" as used herein in the context of a secondary battery refers to the positive electrode in the secondary battery

"Cathode material" or "Cathodically active" as used herein means material suitable for use as the positive electrode of a secondary battery.

"Conversion chemistry active material" or "Conversion chemistry material" refers to a material that undergoes a chemical reaction during the charging and discharging cycles of a secondary battery.

"Counter electrode" as used herein may refer to the negative or positive electrode (anode or cathode), opposite of the Electrode, of a secondary battery unless the context clearly indicates otherwise.

"Cycle" as used herein in the context of cycling of a secondary battery between charged and discharged states refers to charging and/or discharging a battery to move the battery in a cycle from a first state that is either a charged or discharged state, to a second state that is the opposite of the first state (i.e., a charged state if the first state was discharged, or a discharged state if the first state was charged), and then moving the battery back to the first state to complete the cycle. For example, a single cycle of the secondary battery between charged and discharged states can include, as in a charge cycle, charging the battery from a discharged state to a charged state, and then discharging back to the discharged state, to complete the cycle. The single cycle can also include, as in a discharge cycle, discharging the battery from the charged state to the discharged state, and then charging back to a charged state, to complete the cycle.

"Electrochemically active material" as used herein means anodically active or cathodically active material.

"Electrode" as used herein may refer to the negative or positive electrode (anode or cathode) of a secondary battery unless the context clearly indicates otherwise. In addition, an "electrode layer" can take its normal technical meaning in the context of this disclosure, and may mean a layer of such an electrode.

"Electrode current collector layer" as used herein may refer to an anode (e.g., negative) current collector layer or a cathode (e.g., positive) current collector layer.

"Electrode material" as used herein may refer to anode material or cathode material unless the context clearly indicates otherwise.

"Electrode structure" as used herein may refer to an anode structure (e.g., negative electrode structure) or a cathode structure (e.g., positive electrode structure) adapted for use in a battery unless the context clearly indicates otherwise.

"Longitudinal axis," "transverse axis," and "vertical axis," as used herein refer to mutually perpendicular axes (i.e., each are orthogonal to one another). For example, the "longitudinal axis," "transverse axis," and the "vertical axis" as used herein are akin to a Cartesian coordinate system used to define three-dimensional aspects or orientations. As such, the descriptions of elements of the disclosed subject matter herein are not limited to the particular axis or axes used to describe three-dimensional orientations of the elements. Alternatively stated, the axes may be interchangeable when referring to three-dimensional aspects of the disclosed subject matter. In addition, a "longitudinal direction", a "transverse direction", and a "vertical direction" can take their normal technical meaning in the context of this disclosure, and may mean directions which are substantially in the direction of the longitudinal axis, transverse axis, and vertical axis respectively.

"Weakened region" refers to a portion of the web that has undergone a processing operation such as scoring, cutting, perforation or the like such that the local rupture strength of the weakened region is lower than the rupture strength of a non-weakened region. A "weakened tear pattern" can take its normal technical meaning in the context of this disclosure, and may also refer to a "weakened region".

A "electrode sub-unit", which is also referred to as a "unit cell" can take its normal technical meaning in the context of this disclosure, and may mean a most basic unit of a battery, such as a lithium ion battery. In other words, an "electrode sub-unit" can refer to a single electrochemical cell, which can include an anode, a cathode, an anode current collector, a cathode current collector, and a separator.

A "population" can take its normal technical meaning in the context of this disclosure, and may also refer to a plurality of, a collection of, or a grouping of certain items. For example, a "population of electrode sub-units" may refer to a grouping of electrode sub-units, where one or more electrode sub-units is present. In another example, a "population of spacer members" may refer to a grouping of spacer members, where one or more spacer members is present.

A "member" can take its normal technical meaning in the context of this disclosure, and may refer to a distinct, or individually separable, feature. For example, a "member of a unit cell population" may refer to a specific unit cell selected from the grouping of unit cells provided in the population. A "subset" can take its normal technical meaning in the context of this disclosure, and may also refer to a distinct, or individually separable, feature. For example, a "subset of a unit cell population" may similarly refer to a single unit cell provided in the population.

"Stacked succession" can take its normal technical meaning in the context of this disclosure, and may refer to layers which are positioned one after another and ordered into a stack. In other words, this may refer to an arrangement whereby each layer is positioned on top of an underlying layer and/or below an adjacent layer. It may also be understood that the layers can be arranged directly on top of or below each other, or a gap can be present between the adjacent layers.

A "layer" of material can take its normal technical meaning in the context of this disclosure, and may mean a substantially planar piece of material. Alternatively, the layer may not be entirely planar, but may have a fixed thickness of material which is deposited on top of a non-planar base surface.

An "interface" can take its normal technical meaning in the context of this disclosure, and may refer to the area at which one layer meets another layer in a stacked succession of layers (i.e. the region between the two adjacent layers). In addition, a "face" of the layer can take its normal technical meaning in the context of this disclosure, and may refer to a portion of a layer which is positioned towards an adjacent. In other words, two layers which are adjacent and forming an interface can be referred to as being "face-to-face".

A "spacer member" can take its normal technical meaning in the context of this disclosure, and may refer to a continuous or discontinuous strips of organic or inorganic material, which can be placed in a stacked succession so as to create an expansion gap within a stacked succession of layers. In other words, the "spacer member" may refer to a structure used to create and/or maintain a certain amount of space between otherwise adjacent layers in a stack of layers.

A "terminus" can take its normal technical meaning in the context of this disclosure, and may refer to an end or an extremity of a component. For example, a "terminus of a unit cell" refers to an end portion of the unit in any one of the transverse direction, the vertical direction, or the longitudinal direction.

A "web" can take its normal technical meaning in the context of this disclosure, and may refer to a long, thin, and flexible material, such as a ribbon of material which is used in a manufacturing process. A web may be processed through web manufacturing (e.g. processing by moving over rollers) to form sheets of componentry.

### DETAILED DESCRIPTION

Embodiments of the present disclosure relate to apparatuses, systems and methods for the production of electrode components for batteries, such as three-dimensional secondary batteries that improve the speed of manufacture of the battery components, while retaining or improving battery capacity and battery longevity, and reducing the occurrences of defects during the manufacturing process.

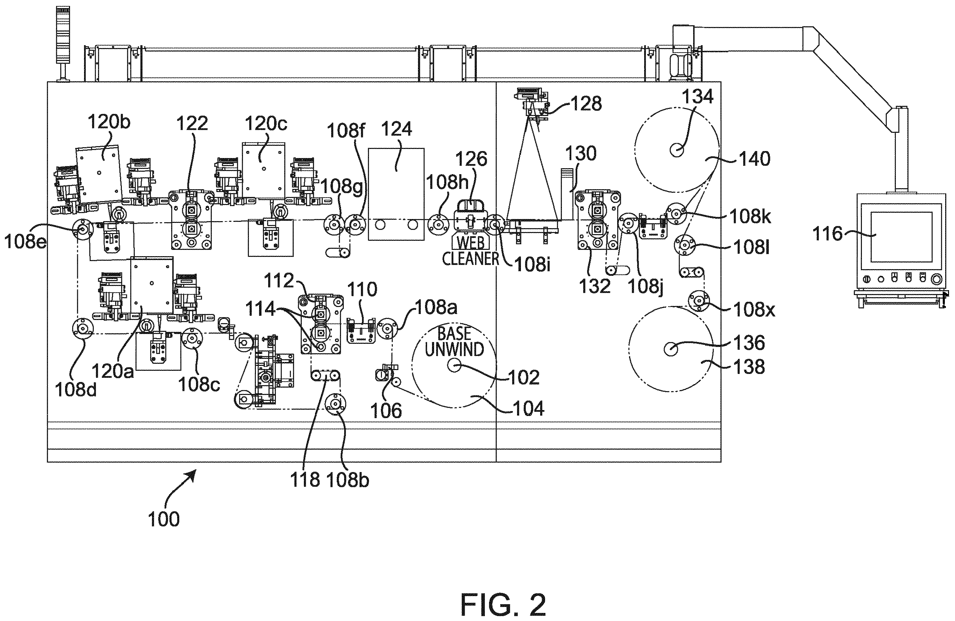

An exemplary system for the production of electrode components, including electrodes and separators, for use in batteries will be described with reference to Fig. 2. The electrode production (or manufacturing) system, indicated generally at 100, includes a number of discrete stations, systems, components, or apparatuses that function to enable the efficient production of precision electrodes for use in batteries. The production system 100 is described first generally, with respect to Fig. 2, and subsequently additional detail of each component is then further described after the broader production system 100 is introduced.

In the illustrated exemplary embodiment, the production system 100 includes a base unwind roller 102 for holding and unwinding a web of base material 104. The web of base material 104 may be a web of electrode material (i.e., a web of anode material or a web of cathode material), separator material or the like suitable for the production of an electrode assembly for a secondary battery. The web of base material 104 is a thin sheet of material that has been wound into the form of a roll, having a center through hole sized for placement on the base unwind roller 102. In some embodiments, the web of base material 104 is a multi-layer material including, for example, an electrode current collector layer (i.e., an anode current collector layer or a cathode current collector layer), and an electrochemically active material layer (i.e., a layer of anodically active material or a layer of cathodically active material) on at least one major surface thereof, and in other embodiments the web of base material may be a single layer (e.g., a web of separator material). The base unwind roller 102 may be formed from metal, metal alloy, composite, plastic or any other material that allows the production system 100 to function as described herein. In one embodiment, the unwind roller 102 is made of stainless steel and has a diameter of 3 inches (76.2 mm).

As seen in the embodiment of Fig. 2, the web of base material 104 is passed across an edge guide 106, to facilitate unwinding of the web of base material 104. In one embodiment, the edge guide 106 uses a through-beam type optical sensor to detect the position of one edge of the web of base material 104 relative to a fixed reference point. Feedback is sent from the edge guide 106 to a "web steering" roller, generally the unwind roller 102, which will move in a direction perpendicular to the direction of travel of the web of base material 104. In this embodiment, the web of base material 104 then passes around an idler 108a and into a splicing station 110. The idler 108a (also may be referred to as an idle roller) facilitates maintaining proper positioning and tension of the web of base material 104, as well as to change the direction of the web of base material 104. In the embodiment shown in Fig. 2, the idler 108a receives the web of base material 104 in a vertical direction, and is partially wrapped around the idler 108a such that the web of base material 104 leaves the idler 108a in an output direction substantially ninety degrees from the input direction. However, it should be appreciated that the input and output directions may vary without departing from the scope of this disclosure. In some embodiments, the production system 100 may use multiple idlers 108a-108x to change the direction of the web of base material one or more times as it is conveyed through the production system 100. The idlers 108a-108x may be formed from metal, metal alloy, composite, plastic, rubber or any other material that allows the production system 100 to function as described herein. In one embodiment, the idlers 108a-108x are made of stainless steel and have dimensions of 1 inch (25.4 mm) diameter × 18 inches (457.2 mm) length..

The splicing station 110 is configured to facilitate splicing two separate webs together. In one suitable embodiment, as a first web of base material 104 is unwound, such that a trailing edge (not shown) of the web of base material 104 is stopped within the splicing station 110, a leading edge (not shown) of a second web of base material 104 is unwound into the splicing station 110 such that the trailing edge of the first web and the leading edge of the second web are adjacent one another. The user may then apply an adhesive, such as an adhesive tape, to join the leading edge of the second web to the trailing edge of the first web to form a seam between the two webs and create a continuous web of base material. Such process may be repeated for numerous webs of base material 104, as dictated by a user. Thus, the splicing station 110 allows for the possibility of having multiple webs of base material being spliced together to form one continuous web. It should be appreciated that in other embodiments, a user may splice webs of the same, or different, materials together if desired.

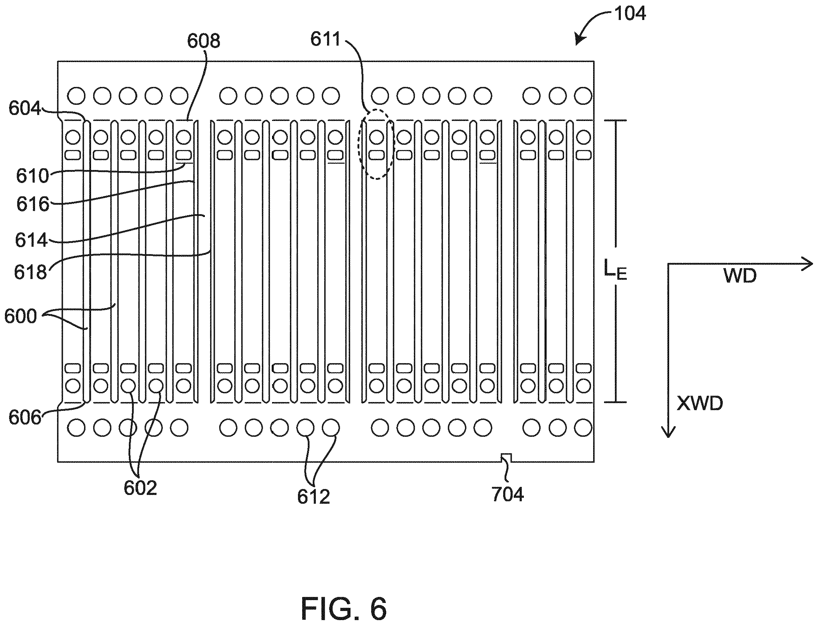

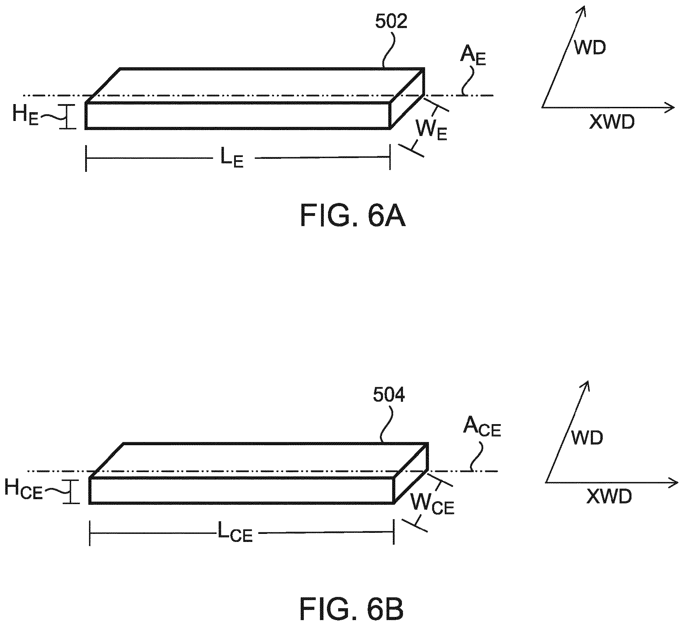

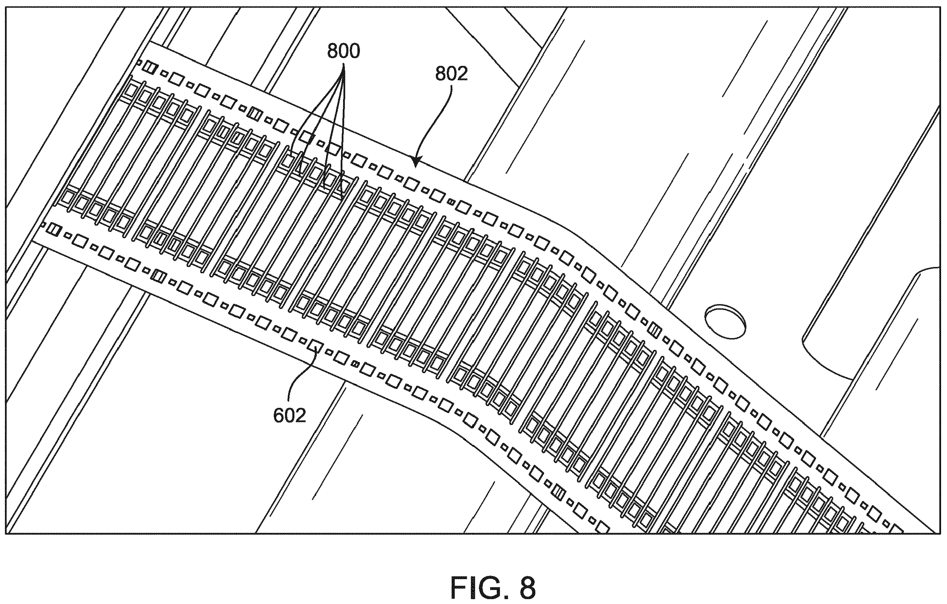

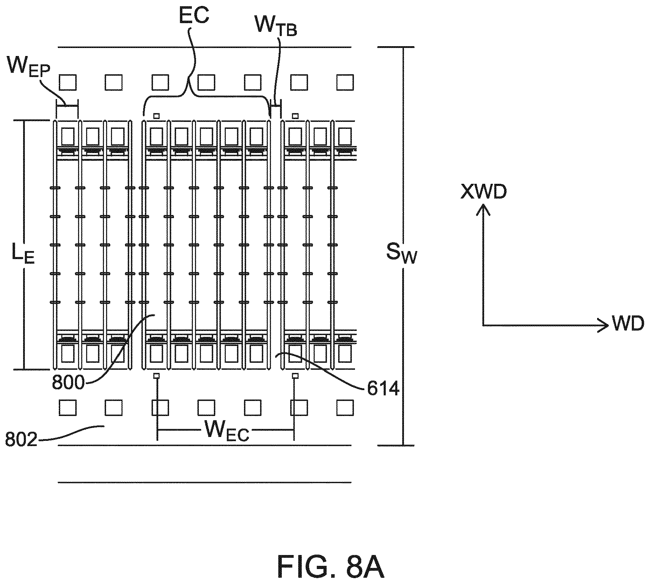

In one suitable embodiment, upon exiting the splicing station 110, the web of base material 104 is then conveyed in the down-web direction WD such that it may enter a nip roller 112. The nip roller 112 is configured to facilitate controlling the speed at which the web of base material 104 is conveyed through the production system 100. In one embodiment, the nip roller 112 includes at least two adjacent rollers having a space therebetween defining a nip. The nip is sized such that the web of base material 104 is pressed against each of the two adjacent rollers 114, with enough pressure to allow friction of the rollers to move the web of base material 104, but a low enough pressure to avoid any significant deformation or damage to the web of base material 104. In some suitable embodiments, the pressure exerted against the web of base material 104 by adjacent rollers 114 (e.g., nip rollers) is set between 0 to 210 pounds of force across the cross-web span of the web S_{w} (i.e., the edge to edge distance of the web in the cross-web direction XWD) (Figs. 6, 8A) of base material 104 in the cross web direction XWD, such as 0 lb, 5 lb, 10 lb, 15 lb, 20 lb, 25 lb, 30 lb, 35 lb, 40 lb, 45 lb, 50 lb, 55 lb, 60 lb, 65 lb, 70 lb, 75 lb, 80 lb, 85 lb, 90 lb, 95 lb, 100 lb, 110 lb, 120 lb, 130 lb, 140 lb, 150 lb, 160 lb, 170 lb, 180 lb, 190 lb, 200 lb, or 210 lb of force.

In one suitable embodiment, at least one of the adjacent rollers 114 is a compliant roller which may be a high friction roller driven by an electric motor, and another of the adjacent rollers is a low friction passive roller. The compliant roller may have at least an exterior surface made from rubber or polymer capable of providing sufficient grip on the web of base material 104 to provide a pushing or pulling force on the web of base material 104 to convey it through the production system 100. In one embodiment, at least one of the adjacent rollers 114 is a steel roller having a diameter of about 3.863 inches (98.12 mm). In another embodiment, at least one of the adjacent rollers 114 is a rubber roller having a diameter of about 2.54 inches (64.51 mm). In yet another embodiment, one or more of the adjacent rollers 114 include a rubber ring placed thereon which may be adjusted for placement at any location along the width of the roller, each ring having an outer diameter of about 3.90 inches (99.06 mm). In one embodiment, one or more rubber rings are placed on the rollers to contact the web of base material 104 at a continuous outer edge thereof to drive the web of base material 104 in the down-web direction WD. Accordingly, the speed of the web of base material 104 is controlled by controlling the rate of rotation of the high friction roller via a user interface 116. In embodiments, the speed of the web in the web direction is controlled to be from 0.001 m/s to 10 m/s. In embodiments, the maximum speed of the web in the web direction WD is dictated by the inertia of the web and system components, such that the web maintains proper alignment, flatness and tensioning as further described herein. In other embodiments, each of the adjacent rollers 114 may be made from any high friction or low friction material, that allows the production system 100 to function as described herein. It should be appreciated that either or both of the adjacent rollers 114 may be connected to a motor (not shown) for controlling the speed of the web of base material 104 passing through the nip. The production system 100 may include one or more additional nip rollers 122, 132 to facilitate control of the speed of the web of base material 104 conveyed through the production system 100, which may be controlled via the user interface 116. When multiple nip rollers are used, each of the nip rollers may be set via the user interface 116 to the same speed such that the web of base material 104 is conveyed smoothly through production system 100. In embodiments, the speed of the web of base material 104 in the web direction WD is controlled to be from 0.001 m/s to 10 m/s.

The production system 100 may also include a dancer 118. As seen in Fig. 2, the illustrated dancer 118 includes a pair of rollers spaced apart from one another, but connected about a central axis between the pair of rollers of the dancer 118. The pair of rollers of the dancer 118 may rotate about the central axis, thereby passively adjusting the tension on the web of base material 104. For example, if the tension on the web of base material 104 exceeds a predetermined threshold, the pair of rollers of the dancer 118 rotate about the central axis to reduce the tension on the web. Accordingly, the dancer 118 may use the mass of the dancer alone (e.g., the mass of one or more of the pair of rollers), a spring, torsion rod or other biasing/tensioning device which may be user adjustable or controllable via user interface 116, to ensure a proper tension is consistently maintained on the web of base material. In one embodiment, the mass of the dancer 118 and inertia of the dancer are reduced or minimized to allow for web tension at or below 500 gram force, for example by using hollow rollers made of aluminum. In other embodiments, the rollers of the dancer 118 are made of other lightweight materials such as carbon fiber, aluminum alloys, magnesium, other lightweight metals and metal alloys, fiberglass or any other suitable material that allows for a mass low enough to provide a web tension at or below 500 gram force. In yet another embodiment, the rollers of the dancer 118 are counterbalanced to allow a tension in the web of base material 104 of 250 gram force or less.

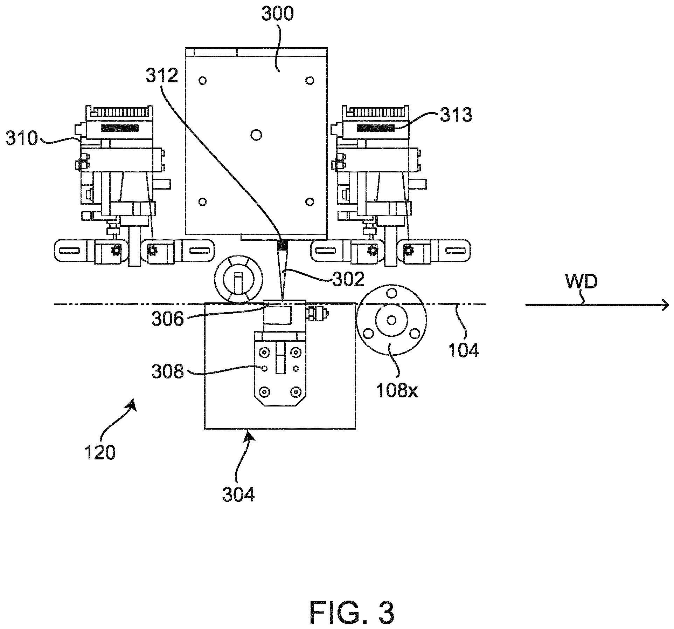

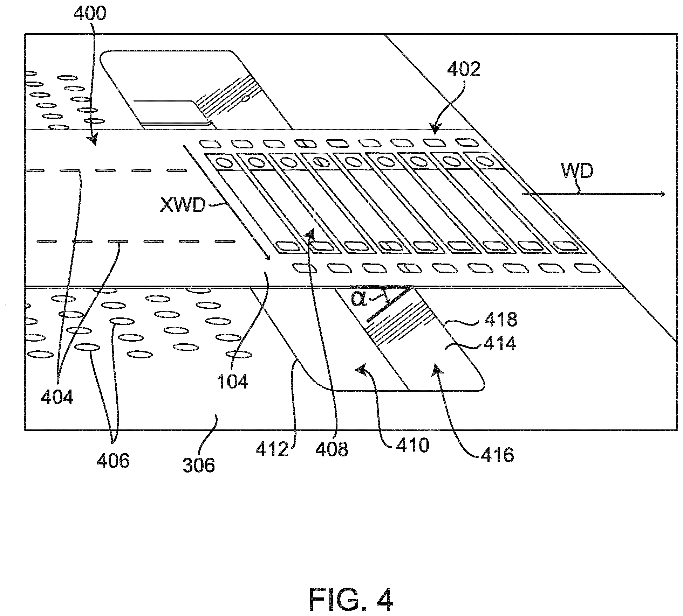

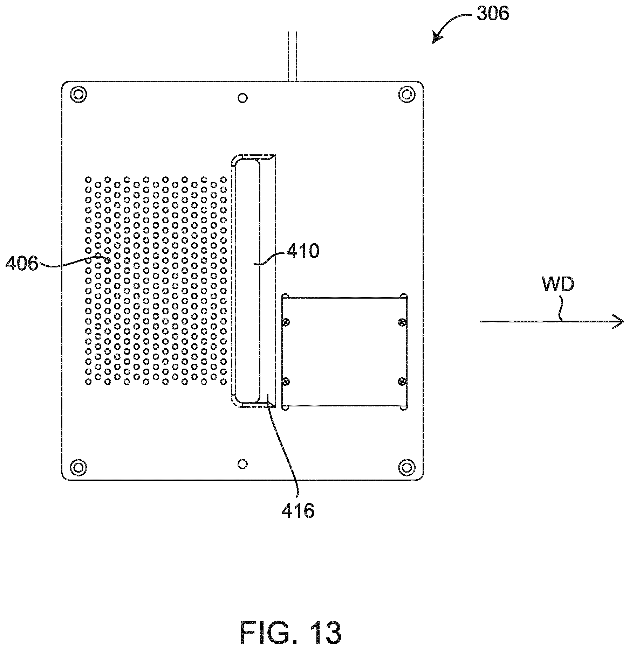

The production system 100 includes one or more laser systems 120a, 120b, 120c. The embodiment shown in Fig. 2 includes three laser systems 120a-c, but it should be appreciated that any number of laser systems may be used to allow the production system 100 to function as described herein. Further description of the laser systems 120a-c is made with reference to Fig. 3. In one suitable embodiment, at least one of the laser systems 120a-c includes a laser device 300 configured to emit a laser beam 302 toward a cutting plenum 304 (Fig. 3). In the illustrated embodiment, the cutting plenum 304 includes a chuck 306 and a vacuum 308. Details of the chuck 306 are best shown in Figs. 4 and 13, which are further described below. In one suitable embodiment and as illustrated in Fig. 3, adjacent the laser system 120, are one or more inspection devices 310, 312, which may be visual inspection devices such as a camera or any other suitable inspection system which allows the production system 100 to function as further described herein.

The exemplary production system 100 illustrated in Fig. 2 includes one or more cleaning stations such as a brushing station 124 and an air knife 126. Each cleaning station is configured to remove or otherwise facilitate removal of debris (not shown) from the web of base material 104, as described further herein.

The production system 100 of Fig. 2 includes an inspection system 128 to identify defects and an associated defect marking device 130 to mark the web of base material 104 to identify locations of identified defects, as described further herein.

In one suitable embodiment, the web of base material 104 is rewound via a rewind roller 134 together with a web of interleaf material 138, which is unwound via interleaf roller 136 to create a roll of electrodes 140 with layers of the electrodes separated by interleaf material 138. In some embodiments, the web of base material 104 can be rewound via the rewind roller 134 without the web of interleaf material 138.

It should be noted that the series of nip rollers 112, 122, 132, idlers 108a-x, and dancers 118a-x may be together referred to as a conveying system for conveying the web of base material 104 through the production system 100. As used herein, conveying system or conveying of the web of base material 104 refers to intended movement of the web of base material 104 through the production system in the web direction WD.

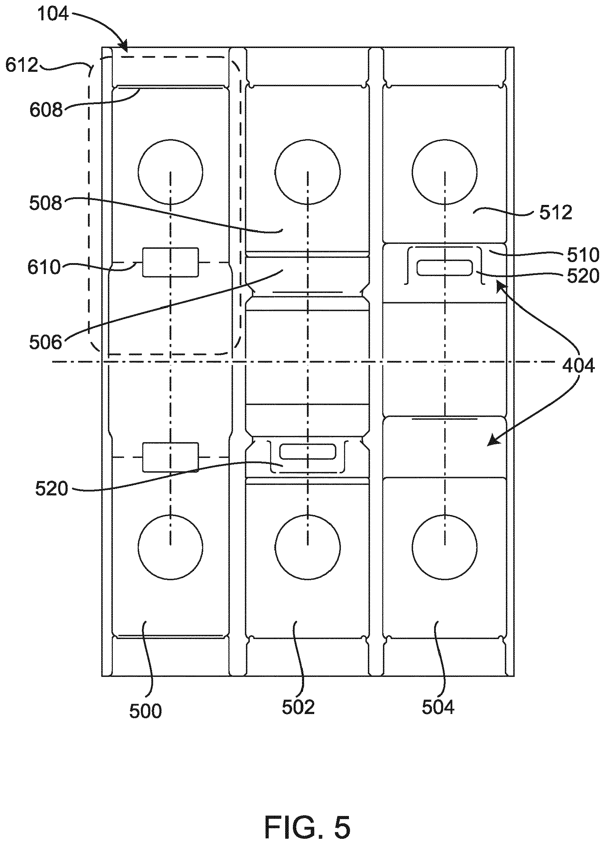

With reference to Fig. 5, the web of base material 104 may be any material suitable for the production of electrode components for use in batteries as described herein. For example, web of base material 104 may be an electrically insulating separator layer 500, an anode material 502 or a cathode material 504. In one suitable embodiment, the web of base material 104 is an electrically insulating and ionically permeable polymeric woven material suitable for use as a separator in a secondary battery.

In another suitable embodiment and with reference still to Fig. 5, the web of base material 104 is a web of anode material 502, which may include an anode current collector layer 506 and an anodically active material layer 508. The anode current collector layer 506 may comprise a conductive metal such as copper, copper alloys or any other material suitable as an anode current collector layer. The anodically active material layer 508 may be formed as a first layer on a first surface of the anode current collector layer 506 and a second layer on a second opposing surface of the anode current collector layer 506. In another embodiment, the anode current collector layer 506 and anodically active material layer 508 may be intermixed. The first surface and the second opposing surface may be referred to as major surfaces, or front and back surfaces, of the web of base material 104. A major surface, as used herein, refers to the surfaces defined by the plane formed by the length of the web of base material in the down-web direction WD and the span of the web of base material 104 in the cross-web direction XWD.

In general, when the web of base material 104 is a web of anode material, the anodically active material layer(s) thereof will (each) have a thickness of at least about 10um. For example, in one embodiment, the anodically active material layer(s) will (each) have a thickness of at least about 40um. By way of further example, in one such embodiment, the anodically active material layer(s) will (each) have a thickness of at least about 80um. By way of further example, in one such embodiment, the anodically active material layers will (each) have a thickness of at least about 120um. Typically, however, the anodically active material layer(s) will (each) have a thickness of less than about 60um or even less than about 30um.

In general, the negative electrode active material may be selected from the group consisting of: (a) silicon (Si), germanium (Ge), tin (Sn), lead (Pb), antimony (Sb), bismuth (Bi), zinc (Zn), aluminum (Al), titanium (Ti), nickel (Ni), cobalt (Co), and cadmium (Cd); (b) alloys or intermetallic compounds of Si, Ge, Sn, Pb, Sb, Bi, Zn, Al, Ti, Ni, Co, or Cd with other elements; (c) oxides, carbides, nitrides, sulfides, phosphides, selenides, and tellurides of Si, Ge, Sn, Pb, Sb, Bi, Zn, Al, Ti, Fe, Ni, Co, V, or Cd, and their mixtures, composites, or lithium-containing composites; (d) salts and hydroxides of Sn; (e) lithium titanate, lithium manganate, lithium aluminate, lithium-containing titanium oxide, lithium transition metal oxide, ZnCo2O4; (f) particles of graphite and carbon; (g) lithium metal, and (h) combinations thereof.

Exemplary anodically active materials include carbon materials such as graphite and soft or hard carbons, or graphene (e.g., single-walled or multi-walled carbon nanotubes), or any of a range of metals, semi-metals, alloys, oxides, nitrides and compounds capable of intercalating lithium or forming an alloy with lithium. Specific examples of the metals or semi-metals capable of constituting the anode material include graphite, tin, lead, magnesium, aluminum, boron, gallium, silicon, Si/C composites, Si/graphite blends, silicon oxide (SiOx), porous Si, intermetallic Si alloys, indium, zirconium, germanium, bismuth, cadmium, antimony, silver, zinc, arsenic, hafnium, yttrium, lithium, sodium, graphite, carbon, lithium titanate, palladium, and mixtures thereof. In one exemplary embodiment, the anodically active material comprises aluminum, tin, or silicon, or an oxide thereof, a nitride thereof, a fluoride thereof, or other alloy thereof. In another exemplary embodiment, the anodically active material comprises silicon or an alloy or oxide thereof.

In one embodiment, the anodically active material is microstructured to provide a significant void volume fraction to accommodate volume expansion and contraction as lithium ions (or other carrier ions) are incorporated into or leave the negative electrode active material during charging and discharging processes. In general, the void volume fraction of (each of) the anodically active material layer(s) is at least 0.1. Typically, however, the void volume fraction of (each of) the anodically active material layer(s) is not greater than 0.8. For example, in one embodiment, the void volume fraction of (each of) the anodically active material layer(s) is about 0.15 to about 0.75. By way of the further example, in one embodiment, the void volume fraction of (each of) the anodically active material layer(s) is about 0.2 to about 0.7. By way of the further example, in one embodiment, the void volume fraction of (each of) the anodically active material layer(s) is about 0.25 to about 0.6.

Depending upon the composition of the microstructured anodically active material and the method of its formation, the microstructured anodically active material may comprise macroporous, microporous, or mesoporous material layers or a combination thereof, such as a combination of microporous and mesoporous, or a combination of mesoporous and macroporous. Microporous material is typically characterized by a pore dimension of less than 10 nm, a wall dimension of less than 10 nm, a pore depth of 1-50 micrometers, and a pore morphology that is generally characterized by a "spongy" and irregular appearance, walls that are not smooth, and branched pores. Mesoporous material is typically characterized by a pore dimension of 10-50 nm, a wall dimension of 10-50 nm, a pore depth of 1-100 micrometers, and a pore morphology that is generally characterized by branched pores that are somewhat well defined or dendritic pores. Macroporous material is typically characterized by a pore dimension of greater than 50 nm, a wall dimension of greater than 50 nm, a pore depth of 1-500 micrometers, and a pore morphology that may be varied, straight, branched, or dendritic, and smooth or rough-walled. Additionally, the void volume may comprise open or closed voids, or a combination thereof. In one embodiment, the void volume comprises open voids, that is, the negative electrode active material contains voids having openings at the lateral surface of the negative electrode active material through which lithium ions (or other carrier ions) can enter or leave the anodically active material; for example, lithium ions may enter the anodically active material through the void openings after leaving the cathodically active material. In another embodiment, the void volume comprises closed voids, that is, the anodically active material contains voids that are enclosed by anodically active material. In general, open voids can provide greater interfacial surface area for the carrier ions whereas closed voids tend to be less susceptible to solid electrolyte interface while each provides room for expansion of the anodically active material upon the entry of carrier ions. In certain embodiments, therefore, it is preferred that the anodically active material comprise a combination of open and closed voids.

In one embodiment, the anodically active material comprises porous aluminum, tin or silicon or an alloy, an oxide, or a nitride thereof. Porous silicon layers may be formed, for example, by anodization, by etching (e.g., by depositing precious metals such as gold, platinum, silver or gold/palladium on the surface of single crystal silicon and etching the surface with a mixture of hydrofluoric acid and hydrogen peroxide), or by other methods known in the art such as patterned chemical etching. Additionally, the porous anodically active material will generally have a porosity fraction of at least about 0.1, but less than 0.8 and have a thickness of about 1 to about 100 micrometers. For example, in one embodiment, the anodically active material comprises porous silicon, has a thickness of about 5 to about 100 micrometers, and has a porosity fraction of about 0.15 to about 0.75. By way of further example, in one embodiment, the anodically active material comprises porous silicon, has a thickness of about 10 to about 80 micrometers, and has a porosity fraction of about 0.15 to about 0.7. By way of further example, in one such embodiment, the anodically active material comprises porous silicon, has a thickness of about 20 to about 50 micrometers, and has a porosity fraction of about 0.25 to about 0.6. By way of further example, in one embodiment, the anodically active material comprises a porous silicon alloy (such as nickel silicide), has a thickness of about 5 to about 100 micrometers, and has a porosity fraction of about 0.15 to about 0.75.

In another embodiment, the anodically active material layer comprises fibers of aluminum, tin or silicon, or an alloy thereof. Individual fibers may have a diameter (thickness dimension) of about 5 nm to about 10,000 nm and a length generally corresponding to the thickness of the anodically active material. Fibers (nanowires) of silicon may be formed, for example, by chemical vapor deposition or other techniques known in the art such as vapor liquid solid (VLS) growth and solid liquid solid (SLS) growth. Additionally, the anodically active material will generally have a porosity fraction of at least about 0.1, but less than 0.8 and have a thickness of about 1 to about 200 micrometers. For example, in one embodiment, the anodically active material comprises silicon nanowires, has a thickness of about 5 to about 100 micrometers, and has a porosity fraction of about 0.15 to about 0.75. By way of further example, in one embodiment, the anodically active material comprises silicon nanowires, has a thickness of about 10 to about 80 micrometers, and has a porosity fraction of about 0.15 to about 0.7. By way of further example, in one such embodiment, the anodically active material comprises silicon nanowires, has a thickness of about 20 to about 50 micrometers, and has a porosity fraction of about 0.25 to about 0.6. By way of further example, in one embodiment, the anodically active material comprises nanowires of a silicon alloy (such as nickel silicide), has a thickness of about 5 to about 100 micrometers, and has a porosity fraction of about 0.15 to about 0.75.

In yet other embodiments, the negative electrode (i.e., the electrode or the counter-electrode) is coated with a particulate lithium material selected from the group consisting of stabilized lithium metal particles, e.g., lithium carbonate-stabilized lithium metal powder, lithium silicate stabilized lithium metal powder, or other source of stabilized lithium metal powder or ink. The particulate lithium material may be applied on the negative electrode active material layer by spraying, loading or otherwise disposing the lithium particulate material onto the negative electrode active material layer at a loading amount of about 0.05 to 5 mg/cm², e.g., about 0.1 to 4 mg/cm², or even about 0.5 to 3 mg/cm². The average particle size (Dso) of the lithium particulate material may be 5 to 200 µm, e.g., about 10 to 100 µm, 20 to 80 µm, or even about 30 to 50 µm. The average particle size (Dso) may be defined as a particle size corresponding to 50% in a cumulative volume-based particle size distribution curve. The average particle size (Dso) may be measured, for example, using a laser diffraction method.

In general, the anode current collector will have an electrical conductivity of at least about 10³ Siemens/cm. For example, in one such embodiment, the anode current collector will have a conductivity of at least about 10⁴ Siemens/cm. By way of further example, in one such embodiment, the anode current collector will have a conductivity of at least about 10⁵ Siemens/cm. Exemplary electrically conductive materials suitable for use as anode current collectors include metals, such as, copper, nickel, cobalt, titanium, and tungsten, and alloys thereof.

Referring again to Fig. 5, in another suitable embodiment, the web of base material 104 is a web of cathode material 504, which may include a cathode current collector layer 510 and a cathodically active material layer 512. The cathode current collector layer 510 of the cathode material may comprise aluminum, an aluminum alloy, titanium or any other material suitable for use as a cathode current collector layer. The cathodically active material layer 512 may be formed as a first layer on a first surface of the cathode current collector layer 510 and a second layer on a second opposing surface of the cathode current collector layer 510. The cathodically active material layer 512 may be coated onto one or both sides of cathode current collector layer 510. Similarly, the cathodically active material layer 512 may be coated onto one or both major surfaces of cathode current collector layer 510. In another embodiment, the cathode current collector layer 510 may be intermixed with cathodically active material layer 512.

In general, when the web of base material 104 is a web of cathode material, the cathodically active material layer(s) thereof will (each) have a thickness of at least about 20um. For example, in one embodiment, the cathodically active material layer(s) will (each) have a thickness of at least about 40um. By way of further example, in one such embodiment the cathodically active material layer(s) will (each) have a thickness of at least about 60um. By way of further example, in one such embodiment the cathodically active material layers will (each) have a thickness of at least about 100um. Typically, however, the cathodically active material layer(s) will (each) have a thickness of less than about 90um or even less than about 70um.

In one embodiment, the positive electrode may comprise, or may be, an intercalation-type chemistry active material, a conversion chemistry active material, or a combination thereof.

Exemplary conversion chemistry materials useful in the present disclosure include, but are not limited to, S (or Li₂S in the lithiated state), LiF, Fe, Cu, Ni, FeF₂, FeO_{d}F_{3.2d}, FeF₃, CoF₃, CoF₂, CuF₂, NiF₂, where 0 ≤ d ≤ 0.5, and the like.

Exemplary cathodically active materials also include any of a wide range of intercalation type cathodically active materials. For example, for a lithium-ion battery, the cathodically active material may comprise a cathodically active material selected from transition metal oxides, transition metal sulfides, transition metal nitrides, lithium-transition metal oxides, lithium-transition metal sulfides, and lithium-transition metal nitrides may be selectively used. The transition metal elements of these transition metal oxides, transition metal sulfides, and transition metal nitrides can include metal elements having a d-shell or f-shell. Specific examples of such metal element are Sc, Y, lanthanoids, actinoids, Ti, Zr, Hf, V, Nb, Ta, Cr, Mo, W, Mn, Tc, Re, Fe, Ru, Os, Co, Rh, Ir, Ni, Pb, Pt, Cu, Ag, and Au. Additional cathode active materials include LiCoO₂, LiNi_{0.5}Mn_{1.5}O₄, Li(NiₓCo_{y}Al_{z})O₂, LiFePO₄, Li₂MnO₄, V₂O₅, molybdenum oxysulfides, phosphates, silicates, vanadates, sulfur, sulfur compounds, oxygen (air), Li(NiₓMn_{y}Co_{z})O₂, and combinations thereof.

In general, the cathode current collector will have an electrical conductivity of at least about 10³ Siemens/cm. For example, in one such embodiment, the cathode current collector will have a conductivity of at least about 10⁴ Siemens/cm. By way of further example, in one such embodiment, the cathode current collector will have a conductivity of at least about 10⁵ Siemens/cm. Exemplary cathode current collectors include metals, such as aluminum, nickel, cobalt, titanium, and tungsten, and alloys thereof.

Referring again to Fig. 5, in another suitable embodiment, the web of base material 104 is a web of electrically insulating but ionically permeable separator material. Electrically insulating separator layer 500 is adapted to electrically isolate each member of the anode population from each member of the cathode population of a secondary battery. Electrically insulating separator layer 500 will typically include a microporous separator material that can be permeated with a non-aqueous electrolyte; for example, in one embodiment, the microporous separator material includes pores having a diameter of at least 50 Å, more typically in the range of about 2,500 Å, and a porosity in the range of about 25% to about 75%, more typically in the range of about 35-55%

In general, when the web of base material 104 is a web of electrically insulating separator material, the electrically insulating separator material will have a thickness of at least about 4um. For example, in one embodiment, the electrically insulating separator material will have a thickness of at least about 8um. By way of further example, in one such embodiment the electrically insulating separator material will have a thickness of at least about 12um. By way of further example, in one such embodiment the electrically insulating separator material will have a thickness of at least about 15um. Typically, however, the electrically insulating separator material will have a thickness of less than about 12um or even less than about 10um.

In general, the separator may be selected from a wide range of separators having the capacity to conduct carrier ions between the positive and negative active material of a unit cell. For example, the separator may comprise a microporous separator material that may be permeated with a liquid, nonaqueous electrolyte. Alternatively, the separator may comprise a gel or solid electrolyte capable of conducting carrier ions between the positive and negative electrodes of a unit cell.

In one embodiment, the separator may comprise a polymer based electrolyte. Exemplary polymer electrolytes include PEO-based polymer electrolytes, polymer-ceramic composite electrolytes, polymer-ceramic composite electrolytes, and polymer-ceramic composite electrolyte.

In another embodiment, the separator may comprise an oxide based electrolyte. Exemplary oxide-based electrolytes include lithium lanthanum titanate (Li_{0.34}La_{0.56}TiO₃), Al-doped lithium lanthanum zirconate (Li_{6.24}La₃Zr₂Al_{0.24}O_{11.98}), Ta-doped lithium lanthanum zirconate (Li_{6.4}La₃Zr_{1.4}Ta_{0.6}O₁₂) and lithium aluminum titanium phosphate (Li_{1.4}Al_{0.4}Ti_{1.6}(PO₄)₃).

In another embodiment, the separator may comprise a solid electrolyte. Exemplary solid electrolytes include sulfide based electrolytes such as lithium tin phosphorus sulfide (Li₁₀SnP₂S₁₂), lithium phosphorus sulfide (β-Li₃PS₄) and lithium phosphorus sulfur chloride iodide (Li₆PS₅Cl_{0.9}I_{0.1}).

In one embodiment, the separator comprises a microporous separator material comprising a particulate material and a binder, and having a porosity (void fraction) of at least about 20 vol. %. The pores of the microporous separator material will have a diameter of at least 50 Å and will typically fall within the range of about 250 to 2,500 Å. The microporous separator material will typically have a porosity of less than about 75%. In one embodiment, the microporous separator material has a porosity (void fraction) of at least about 25 vol %. In one embodiment, the microporous separator material will have a porosity of about 35-55%.

The binder for the microporous separator material may be selected from a wide range of inorganic or polymeric materials. For example, in one embodiment, the binder is an organic material selected from the group consisting of silicates, phosphates, aluminates, aluminosilicates, and hydroxides such as magnesium hydroxide, calcium hydroxide, etc. For example, in one embodiment, the binder is a fluoropolymer derived from monomers containing vinylidene fluoride, hexafluoropropylene, tetrafluoropropene, and the like. In another embodiment, the binder is a polyolefin such as polyethylene, polypropylene, or polybutene, having any of a range of varying molecular weights and densities. In another embodiment, the binder is selected from the group consisting of ethylene-diene-propene terpolymer, polystyrene, polymethyl methacrylate, polyethylene glycol, polyvinyl acetate, polyvinyl butyral, polyacetal, and polyethyleneglycol diacrylate. In another embodiment, the binder is selected from the group consisting of methyl cellulose, carboxymethyl cellulose, styrene rubber, butadiene rubber, styrene-butadiene rubber, isoprene rubber, polyacrylamide, polyvinyl ether, polyacrylic acid, polymethacrylic acid, and polyethylene oxide. In another embodiment, the binder is selected from the group consisting of acrylates, styrenes, epoxies, and silicones. In another embodiment, the binder is a copolymer or blend of two or more of the aforementioned polymers.

The particulate material comprised by the microporous separator material may also be selected from a wide range of materials. In general, such materials have a relatively low electronic and ionic conductivity at operating temperatures and do not corrode under the operating voltages of the battery electrode or current collector contacting the microporous separator material. For example, in one embodiment, the particulate material has a conductivity for carrier ions (e.g., lithium) of less than 1×10⁻⁴ S/cm. By way of further example, in one embodiment, the particulate material has a conductivity for carrier ions of less than 1×10⁻⁵ S/cm. By way of further example, in one embodiment, the particulate material has a conductivity for carrier ions of less than 1×10⁻⁶ S/cm. Exemplary particulate materials include particulate polyethylene, polypropylene, a TiO₂-polymer composite, silica aerogel, fumed silica, silica gel, silica hydrogel, silica xerogel, silica sol, colloidal silica, alumina, titania, magnesia, kaolin, talc, diatomaceous earth, calcium silicate, aluminum silicate, calcium carbonate, magnesium carbonate, or a combination thereof. For example, in one embodiment, the particulate material comprises a particulate oxide or nitride such as TiO₂, SiO₂, Al₂O₃, GeO₂, B₂O₃, Bi₂O₃, BaO, ZnO, ZrO₂, BN, Si₃N₄, Ge₃N₄. See, for example, P. Arora and J. Zhang, "Battery Separators" Chemical Reviews 2004, 104, 4419-4462). In one embodiment, the particulate material will have an average particle size of about 20 nm to 2 micrometers, more typically 200 nm to 1.5 micrometers. In one embodiment, the particulate material will have an average particle size of about 500 nm to 1 micrometer.

In an alternative embodiment, the particulate material comprised by the microporous separator material may be bound by techniques such as sintering, binding, curing, etc. while maintaining the void fraction desired for electrolyte ingress to provide the ionic conductivity for the functioning of the battery.

In an assembled energy storage device, the microporous separator material is permeated with a non-aqueous electrolyte suitable for use as a secondary battery electrolyte. Typically, the non-aqueous electrolyte comprises a lithium salt and/or mixture of salts dissolved in an organic solvent and/or solvent mixture. Exemplary lithium salts include inorganic lithium salts such as LiClO₄, LiBF₄, LiPF₆, LiAsF₆, LiCl, and LiBr; and organic lithium salts such as LiB(C₆H₅)₄, LiN(SO₂CF₃)₂, LiN(SO₂CF₃)₃, LiNSO₂CF₃, LiNSO₂CF₅, LiNSO₂C₄F₉, LiNSO₂C₅F₁₁, LiNSO₂C₆F₁₃, and LiNSO₂C₇F₁₅. Exemplary organic solvents to dissolve the lithium salt include cyclic esters, chain esters, cyclic ethers, and chain ethers. Specific examples of the cyclic esters include propylene carbonate, butylene carbonate, γ-butyrolactone, vinylene carbonate, 2-methyl-γ-butyrolactone, acetyl-γ-butyrolactone, and γ-valerolactone. Specific examples of the chain esters include dimethyl carbonate, diethyl carbonate, dibutyl carbonate, dipropyl carbonate, methyl ethyl carbonate, methyl butyl carbonate, methyl propyl carbonate, ethyl butyl carbonate, ethyl propyl carbonate, butyl propyl carbonate, alkyl propionates, dialkyl malonates, and alkyl acetates. Specific examples of the cyclic ethers include tetrahydrofuran, alkyltetrahydrofurans, dialkyltetrahydrofurans, alkoxytetrahydrofurans, dialkoxytetrahydrofurans, 1,3-dioxolane, alkyl-1,3-dioxolanes, and 1,4-dioxolane. Specific examples of the chain ethers include 1,2-dimethoxyethane, 1,2-diethoxythane, diethyl ether, ethylene glycol dialkyl ethers, diethylene glycol dialkyl ethers, triethylene glycol dialkyl ethers, and tetraethylene glycol dialkyl ethers.

In In one embodiment, the microporous separator may be permeated with a non-aqueous, organic electrolyte including a mixture of a lithium salt and a high-purity organic solvent. In addition, the electrolyte may be a polymer using a polymer electrolyte or a solid electrolyte.

In one embodiment, web of base material 104 may have an adhesive tape layer (not shown) adhered to one or both surfaces of the anodically active material layer 508, or cathodically active material layer 512, respectively. The adhesive layer may then later be removed subsequent to ablation and cutting (described below) to remove unwanted material or debris.

Embodiments of the laser systems 120a-c are further described with reference to Figs. 2-6. The web of base material 104 enters the laser system 120 in the web direction WD. In one embodiment, the web of base material 104 enters the laser system 120a in a first condition 400, having not yet been ablated or cut. Accordingly, the web of base material 104 in the first condition 400 should have substantially no defects or alterations from an initial state. The web of base material 104 passes over chuck 306, which includes a plurality of vacuum holes 406. The vacuum holes 406 are in fluid connection with vacuum 308, to draw a vacuum pressure on the web of base material 104 passing over the vacuum holes 406. The vacuum holes 406 may be staggered and/or be chamfered to allow the web of base material 104 to more easily pass thereover without snagging. The cross-sectional area of the holes must be small enough to prevent the web of base material 104 from being drawn therein, but large enough to allow proper airflow from the vacuum therethrough. The vacuum pressure facilitates maintaining the web of base material 104 in a substantially flat/planar state as it is conveyed across chuck 306. In some suitable embodiments, the laser system 120 is sensitive to focus, and in such embodiments it is critical to keep the web of base material 104 at a substantially constant distance from laser output 313, to ensure laser beam 302 is in focus when contacting the web of base material 104 during cutting or ablating processes. Accordingly, the vacuum pressure through vacuum holes 406 may be monitored and adjusted in real time, for example via user interface 116, to ensure that the web of base material 104 remains substantially flat across chuck 306 and does not lift or buckle while being processed. The cross-sectional shape of the vacuum holes may be circular, square, rectangular, oval or any other shape that allows the chuck 306 to function as described herein.

As seen in Fig. 4, the chuck 306 includes an opening 410 defined by an upstream edge 412 and the downstream edge 414. The illustrated chuck 306 includes a chamfer 416 on the downstream edge 414. In this embodiment, the chamfer 416 facilitates the web of base material 104 passing over downstream edge 414 without having the web of base material 104 catch or snag on the downstream edge 414. The angle α of the chamfer 416 may be between 1 degree and 90 degrees, such as 5 degrees, 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees, 85 degrees or any other angle that allows chamfer 416 to function as describes herein. It the illustrated embodiment, for example, the angle α is approximately 25 degrees. It has been found that performance is improved if the angle α of the chamfer 416 is greater than the deflection of the web of base material 104 passing over the chamfer 416. Upper edge 418 of chamfer 416 may be radiused to provide a smooth transition from the chamfer 416 to the surface of the chuck 306.

In one suitable embodiment, the chuck 306 is formed from aluminum. However, the chuck 306 may be formed from aluminum alloy, composites, metals or metal alloys or any other suitable material that allows chuck 306 to function as described herein.

In one suitable embodiment, the web of base material 104 is first ablated by laser beam 302 (Fig. 3) to create the ablations 404 (Fig. 4) in the web of base material 104. In one embodiment, the web of base material 104 is anode material 502, and the ablations 404 remove the anodically active material layer 508 to expose anode current collector layer 506 (Fig. 5). In another embodiment, the web of base material 104 is cathode material 504, and the ablations 404 remove the cathodically active material layer 512 to expose cathode current collector layer 510. In one embodiment, the ablations 404 are configured as electrode tabs 520 (adapted to electrically connect the cathode current collector and the anode current collector to the positive and negative terminals, respectively, of a secondary battery). When using the laser system 120a to make the ablations 404 in the web of base material 104, the power of the laser beam 302 is set to a level that is capable of substantially completely, or completely, removing the coating layer, but will not damage or cut through the current collector layer. In use, the laser beam 302 is controlled, for example via user interface 116, to create the ablations 404 while the web of base material 104 is in motion and being conveyed in down-web direction WD. The ablations 404 are created on each side of the web of base material 104, as best shown in Fig. 5. In one embodiment, after making the ablations 404, the laser system 120a forms fiducial features 602, as described further herein. In another embodiment, multiple lasers may be used to each ablate a portion of the web of base material 104 to each create one or more ablations 404 to increase the throughput of the production system 100.

With further reference to Figs. 2, 3 and 4, in another stage of the production process, the web of base material 104 is conveyed in the down-web direction WD toward a cutting area 408 of the laser system 120a. The cutting area 408 includes the opening 410 of chuck 306. In one embodiment, the opening 410 is in fluid communication with the vacuum 308, to draw a vacuum pressure on the web of base material 104 passing over the opening 410. In one suitable embodiment, the opening 410 is wider in a cross-web direction XWD than the web of base material 104, such that an entire width of the web of base material 104 in the cross-web direction XWD is suspended over the opening 410. In one embodiment, there may be a second vacuum, configured to equalize the pressure on the web of base material 104 opposite the chuck 306. In this embodiment, the equalization in pressure facilitates maintaining the web of base material 104 in a substantially flat/planar state and at a consistent height when passing over the opening 410, which facilitates maintaining focus of laser beam 302 on the web of base material 104. In one embodiment, a carrier web may be used to support the web of base material 104. In some embodiments, the carrier web is removably attached to the web of base material using a low tack adhesive or electrostatic pinning. In such embodiments, the attachment has sufficient adhesion to remain attached to the web of base material during processing, but is removable without causing damage to the web of base material. In one embodiment, the carrier web is a material that does not absorb the laser wavelength being used during processing of the web of base material 104, such that the carrier web will not be cut through, vaporized or ablated, and accordingly may be reused on other webs of base material.

The laser system 120a is configured to cut one or more patterns (such as individual electrode patterns 800 (Fig. 8), which may also be referred to as an electrode tear pattern), each being a member of a population of electrode structures, in the web of base material 104 while the web of base material is over the opening 410. With reference to Fig. 6, the patterns may include one or more lengthwise edge cuts 600 that define lengthwise edges of an electrode in the cross-web direction XWD. The lengthwise edge cuts 600 are cut using laser beam 302 cutting the web of base material 104 in the cross-web direction XWD while the web of base material is conveyed in the down-web direction WD. The cross-web direction XWD is orthogonal to the down-web direction WD. It should be noted that, in one embodiment, in order to create lengthwise edge cuts 600 that are substantially perpendicular to the down-web direction WD, the laser beam 302 must be controlled to travel at an angle with respect to the down-web direction WD, to account for the movement of the web of base material in the 104 in the down-web direction WD. For example, as the web of base material 104 moves in the down-web direction WD, the path of the laser beam 302 is projected onto the web of base material 104 at an initial cut location 604, and then is synchronized with the motion of the web of base material 104 in the web direction. Accordingly, the path of laser beam 302 is controlled to travel in both the cross-web direction XWD and the down-web direction WD until reaching end cut location 606 to create the lengthwise edge cuts 600. In this embodiment, a compensation factor is applied to the path of the laser beam 302 to allow cuts to be made in the cross-web direction XWD while the web of base material is continuously traveling in the web direction WD. It should be appreciated that the angle at which the laser beam 302 travels varies based upon the speed of the web of base material 104 in the down-web direction WD. In another embodiment, the web of base material 104 is temporarily stopped during the laser processing operation, and as such, the path of the laser beam 302 does not need to account for the motion of the travel of the web of base material in the down-web direction WD. Such embodiment, may be referred to as a step process, or step and repeat process. During laser processing, one or more of the laser systems 120a-c use a repeating alignment feature, such as fiducial features 602 to adjust/align the laser beam 302 during the laser processing operations, for example to compensate for possible variations in positioning of the web of base material 104.

It should be appreciated that, although the laser processing operations as described herein such that the lengthwise edge cuts 600 are defined in the cross-web direction XWD, such that repeating patterns of electrode patterns are aligned in the cross-web direction XWD, in other embodiments, the laser processing operations described herein can be controlled such that the lengthwise edge cuts 600, and all associated cuts, perforations and ablation operations are oriented respectively perpendicular. For example, lengthwise edge cuts 600 can be aligned in the down-web direction WD, such that populations of electrode patterns 800 are aligned in the down-web direction WD, rather than the cross-web direction XWD.

In one embodiment, laser system 120a cuts a tie bar 614 between one or more of the electrode patterns. The tie bar 614 may be used to delineate between groups of the electrode patterns. For example, in the embodiment shown in Fig. 6, a tie bar 614 is cut between groups of five individual electrode patterns. However, in other embodiments the tie bar 614 may be included after any number of individual electrode patterns, or not present at all. The tie bar is defined by an upstream and downstream tie bar edge cut 616, 618 respectively. In some embodiments, the tie bar 614 is sized to provide additional structural stiffness to the web during processing.

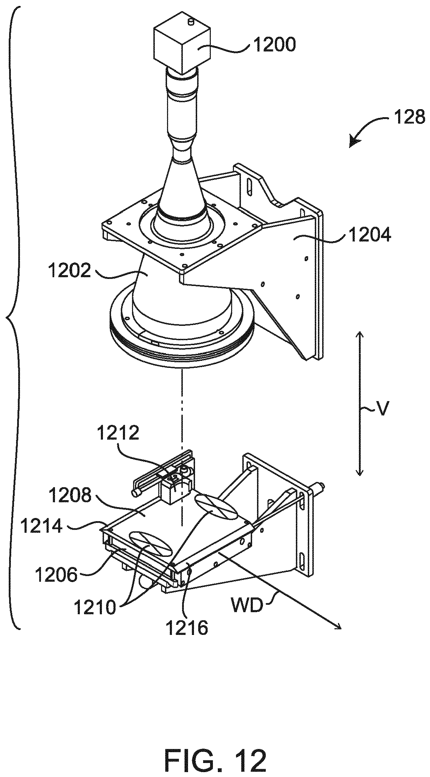

In addition, in one suitable embodiment, the laser system 120a cuts one or more of the repeating alignment features such as a plurality of the fiducial features 602 in the web of base material 104. In one embodiment, the fiducial features 602 are fiducial through-holes. The fiducial features 602 are cut at a known location on the web of base material 104. The fiducial features 602 are shown as circular in Fig. 6, but may be rectangular as shown in Fig. 5, or any size or shape that allows the production system 100 to function as described herein. The fiducial features 602 are tracked by one or more of visual inspection systems 310, 312 which measures the location and speed of travel. The measurement of the fiducial features 602 is then used to accurately allow for front to back alignment of the patterns on the web of base material 104 in both the down-web direction WD and cross-web direction XWD. The laser system 120a may also cut a plurality of tractor holes 612 that may be used for alignment of the web of base material 104, or may be used as holes that engage with a gear wheel 1210 (Fig. 12) for, conveying, positioning and tension control of the web of base material 104. Tractor holes 612 may be circular, square or any other shape that allows the production system 100 to function as described herein. In another suitable embodiment, the web of base material 104 has the plurality of tractor holes 612 and/or fiducial features 602 pre-cut therein prior to being unwound and conveyed through production system 100. In one embodiment, there is a one-to-one ratio of fiducial features 602 to electrode patterns 800. In other embodiments, there may be two or more fiducial features per each electrode pattern 800.

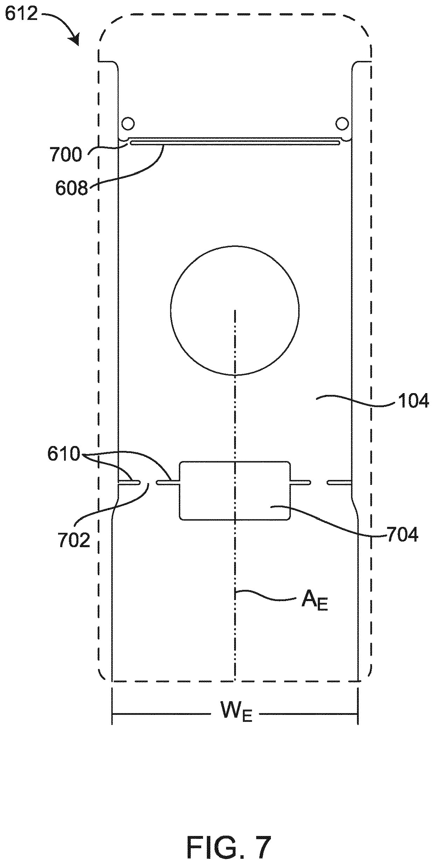

With reference to Figs. 2 and 6, in one suitable embodiment, the laser system 120a cuts a first perforation 608 and a second perforation 610 in the web of base material 104 as part of the electrode pattern. The first perforation 608 may also be referred to as the "outer perforation" because it lies at the outside of the electrode pattern in the cross-web direction XWD, and the second perforation 610 may also be referred to as the "inner perforation" because it lies inboard of the outer perforation in the cross-web direction XWD. The perforations 608, 610 are best shown in Fig. 7, which is an enlarged view of the portion 611 (Fig. 6) of web of base material 104. First perforation 608 is formed by laser cutting using laser beam 302, while the web of base material is positioned over the opening 410 in chuck 306. The first perforation 608 is formed as a linear slit (e.g., through-cut) in a direction aligned with the down-web direction WD. Importantly, the first perforation 608 does not extend across the entirety of the width of the electrode We. Instead, outer tear strips 700 remain on both the upstream and downstream edges of the perforation 608, to ensure the electrode pattern remains connected to the web of base material 104.

Similarly, with further reference to Figs. 6 and 7, the second perforations 610 are formed inboard (in the cross-web direction XWD) from the first perforations 608. In one suitable embodiment, the second perforations 610 are formed as a line of slits in the down-web direction WD separated by inner tear strips 702. In the embodiment shown, the second perforations 610 intersect through holes 704. In the illustrated embodiment, the inner tear strips 702 are at least two times the length of outer tear strips 700, such that the rupture force required to separate the outer tear strips is approximately half of the rupture force required to separate inner tear strips 702 from the web of base material 104. In other embodiments, the ratio of the rupture strength of the first and second tear strips may vary, but is preferred that the outer tear strips 700 have a rupture strength lower than the inner tear strips 702, such that upon application of a tensile, or shear, force applied to the edges of the web of base material 104, that the outer tear strips 700 will rupture before inner tear strips 702.

With reference to Figs. 3, 4 and 6, by performing the laser cuts for the lengthwise edge cuts 600, the fiducial features 602, and the first and second perforations 608, 610 over the opening 410 of the chuck 306, it allows debris to fall through the opening 410 and also allows the vacuum 308 to collect debris formed during the laser cutting process.

In one suitable embodiment, the laser system 120a is configured as a first ablation station. In this embodiment, the laser system 120a forms the ablations 404, as described above on a first surface of the web of base material 104. Upon exiting laser system 120a, the web of base material passes over idler 108d which flips the web of base material 104 in a manner such that a second surface (opposing the first surface) of the web of base material is positioned for processing by the laser system 120b, which is configured as a second ablation station in this embodiment. In this embodiment, the laser system 120b is configured to use the fiducial features 602 to ensure alignment in the down-web direction WD and cross-web direction XWD. Accordingly, the laser system 120b performs a second ablation process on the opposing surface of the web of base material 104, such that ablations 404 on each surface of the web of base material 104 are aligned in the down-web direction WD and the cross-web direction XWD. In one embodiment, the ablations 404 are configured as current collector tabs of the electrodes.

In one embodiment, the laser system 120c seen in Fig. 2 is configured as a laser cutting station. In this embodiment, the laser system 120c performs the laser cuts such as lengthwise edge cuts 600, and the first and second perforations 608 and 610.

In one suitable embodiment, one or more of the laser devices 300 of the laser systems 120a-c is 20 watt fiber laser. In embodiments, suitable laser devices 300 of the laser systems 120a-c have a laser power within the range of from 10 watts to 5,000 watts, such as from 10W to 100W, 100W to 250W, 250W to 1kW, 1kW to 2.5kW, 2.5kW to 5kW. Suitable laser devices 300 will include a laser beam having a wavelength of from 150nm to 10.6µm, for example such as from 150nm to 375nm, 375nm to 750nm, 750nm to 1,500nm, and 1,500nm to 10.6 µm. In embodiments, the laser devices 300 will be capable of laser pulse width types of one or more of continuous wave (cw), microsecond (µs), nanosecond (ns), picosecond (ps) and femtosecond (fs) pulse types. Any of these types of lasers may be used alone or in combination as laser devices 300 of laser systems 120a-c. In other suitable embodiments, the laser device 300 is any other laser capable of allowing laser systems 120a-c to perform as described herein.

In some embodiments, the web of base material 104 may include fiducial features 602 that have been machine punched, or laser cut, prior to being loaded into production system 100. In another suitable embodiment, the fiducial features 602 may be mechanically machine punched subsequently to forming ablations 404 on a first surface of the web of base material. In other suitable embodiments, the production system 100 may include one or more additional mechanical punches which may be used to form one or more of the lengthwise edge cuts 600, and/or the first and second perforation 608, 610.

In one embodiment, one or more of the rollers of the conveyor system may not be perfectly round, such that the roller has an eccentricity. In such case, especially if the eccentric roller is a nip roller, the web of base material may be conveyed in a manner such that a position of the web of base material 104 advances in a manner differently depending upon which portion of the eccentric roller is in contact with the web. For example, if the eccentric has a portion of the radius that exceeds the expected radius of the roller, the web may advance further in the down-web direction WD than expected, when the larger radius portion of the roller is pushing/pulling the web. Likewise, if the eccentric roller has a reduced radius portion, the web may advance a reduced distance in the down-web direction WD than expected. Accordingly, in one embodiment, the eccentric roller(s) may be mapped to determine the radius versus radial position. The laser system 120a-c may then be controlled to adjust the laser beam 302 position to account for the eccentricity based upon the mapping of the roller(s). In one embodiment, the mapping of the rollers may be stored in the memory of the user interface 116.

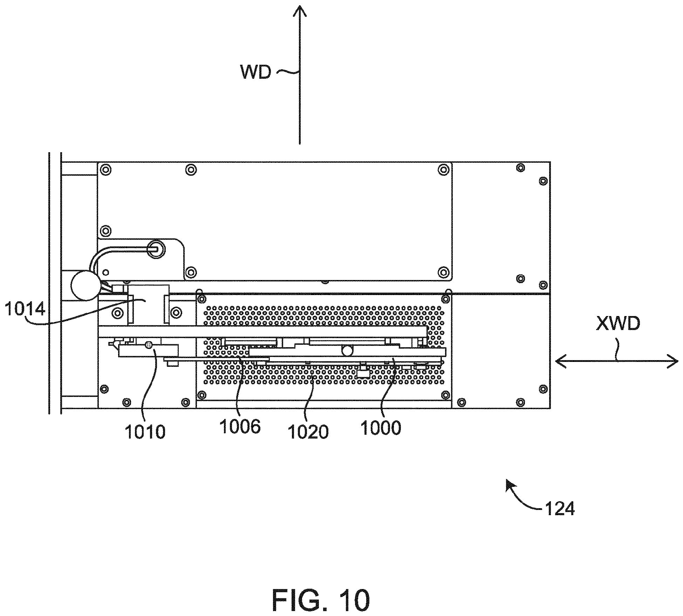

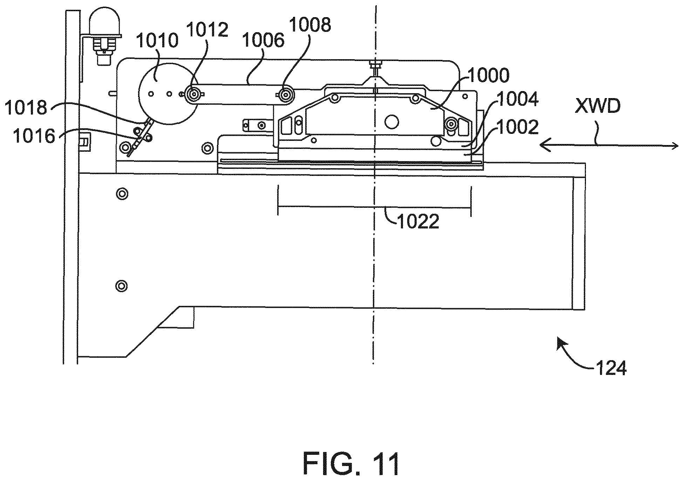

Upon having exited one or more of laser systems 120a-c, the web of base material may be conveyed to one or more cleaning stations such as brushing station 124 and air knife 126. In one suitable embodiment, the brushing station 124 includes a brush 1000 (Figs. 10 and 11) that travels in the cross-web direction XWD. The brush 1000 includes a set of bristles 1002 that are held by bristle holder 1004. The brush 1000 is configured to allow bristles 1002 to delicately contact a surface of the web of base material 104 and remove or dislodge any debris therefrom. The contact pressure of the bristles 1002 on the surface of the web of base material 104 must be low enough that it does not break, rupture or otherwise cause defects in the electrode patterns, and maintains the electrode patterns as attached to the web of base material 104. In one embodiment, the normal force between the bristles 1002 and the surface of the web of base material 104 is from 0 to 2 lbs, such as 0.1 lbs, 0.2 lbs, 0.3 lbs, 0.4 lbs, 0.5 lbs, 0.6 lbs, 0.7 lbs, 0.8 lbs, 0.9 lbs, 1.0 lbs, 1.1 lbs, 1.2 lbs, 1.3 lbs, 1.4 lbs, 1.5 lbs, 1.6 lbs, 1.7 lbs, 1.8 lbs, 1.9 lbs or 2.0 lbs. In other embodiments, the normal force may be greater than 2.0 lbs.

In one embodiment, the length of the bristles 1002 is ¾ inch (19.05 mm). In one embodiment, the bristles 1002 are inserted or clamped within bristle holder 1004 by approximately 1/8 inch. The diameter of the bristles may be from .003 inch (0.076 mm) to .010 inch (0.254 mm), such as .003 inch (0.076), .004 inch (0.101 mm), 0.005 inch (0.127 mm), 0.006 inch (0.152 mm), 0.007 inch (0.177 mm), 0.008 inch (0.203 mm), 0.009 inch (0.228 mm) and 0.010 inch (0.254 mm). In one suitable embodiment, the bristles 1002 are nylon bristles. However, in other embodiments the bristles 1002 may be any other natural or synthetic material that allows the brush 1000 to function as described herein.

With further reference to Figs. 10 and 11, in one suitable embodiment, to effect movement of the brush 1000 in the cross-web direction XWD, the brush 1000 is connected to crank arm 1006 via a rotatable coupling 1008, such as a bearing, bushing or the like. The crank arm 1006 is rotatably coupled to drive wheel 1010 via a second rotatable coupling 1012. The rotatable coupling is coupled to a position off center of the drive wheel 1010, such that the crank arm 1006 oscillates the brush 1000 in a back-and-forth motion in the cross-web direction XWD. The drive wheel 1010 is coupled to a motor 1014 to effect rotation of the drive wheel. A position sensor 1016 senses the position of a brush position marker 1018, which is coupled to the drive wheel 1010. Accordingly, the position sensor 1016 may measure the phase (e.g., angular position) and rotations per time of the drive wheel 1010. In one embodiment, the drive wheel 1010 is controlled to be within a range of 0 to 300 rotations per minute ("rpm") (e.g., 0 to 300 strokes per minute of brush 1000), such as 0 rpm, 25 rpm, 50 rpm, 75 rpm, 100 rpm, 125 rpm, 150 rpm, 175 rpm, 200 rpm, 225 rpm, 250 rpm, 275 rpm and 300 rpm. In other embodiments, the rpm of drive wheel 1010 may be greater than 300 rpm. It is noted that a constant rpm of drive wheel 1010 will cause a sinusoidal speed variation of brush 1000, due to the crank arm 1006 connection to drive wheel 1010.

In one suitable embodiment, a second brush (not shown) is located in a position to contact the opposing surface of the web of base material 104. In this embodiment, the second brush, which may be substantially the same as the first brush 1000 is configured to travel in a direction opposite to the first brush, and suitably 180 degrees out of phase with the first brush. The phase of the first brush and the second brush may be determined via the position sensor 1016, and an equivalent position sensor of the second brush. In this embodiment, the contact pressure of the bristles of the first brush and the second brush, together, must be low enough that it does not break, rupture or otherwise cause defects in the electrode patterns, and maintains the electrode patterns as attached to the web of base material 104.

In one embodiment, the brush 1000 has a bristle width 1022 that is wider in the cross-web direction XWD than the width of web of base material 104 in the cross-web direction XWD. For example, in one embodiment, the bristle width 1022 is of sufficient width that as the brush 1000 oscillates in the cross-web direction XWD, the bristles 1002 remain in contact with the surface of the web of base material 104 throughout the entire range of motion of the brush 1000. The rate of oscillation of the brush 1000 and the pressure exerted by the bristles 1002 against the surface of the web of base material 104 may be controlled by the user using the user interface 116.

The brushing station 124 may be equipped with a vacuum system configured to create a vacuum through brush station orifices 1020 to evacuate debris that has been brushed from one or more surfaces of the web of base material 104. In this embodiment, the debris may be brushed from the web of base material 104 and fall, or be suctioned through the brush station orifices 1020. The brush station orifices 1020 are illustrated as being round, but may be any shape that allows brushing station 124 to function as described herein. Further, the upper edges of the brush station orifices 1020 may be chamfered, and/or staggered in position to allow the web of base material 104 to more easily pass over them without having an edge of the web of base material get snagged thereon. In one embodiment, the vacuum level may be controlled to be from 0 to 140 inches H₂O, such as 0 in H₂0, 10 in H₂0, 20 in H₂0, 30 in H₂0, 40 in H₂0, 50 in H₂0, 60 in H₂0, 70 in H20, 80 in H₂0, 90 in H₂0, 100 in H₂0, 110 in H₂0, 120 in H₂0, 130 in H₂0, and 140 in H₂0. In some embodiments, the flow rate of the vacuum is controlled to be from about 0 to 425 cubic feet per minute ("cfm"), such as 0 cfm, 25 cfm, 50 cfm, 75 cfm, 100 cfm, 125 cfm, 150 cfm, 175 cfm, 200 cfm, 225 cfm, 250 cfm, 275 cfm, 300 cfm, 325 cfm, 350 cfm, 375 cfm, 400 cfm and 425 cfm. In other embodiments, the vacuum level and flow rate may be greater than 140 in H2O and 425 cfm, respectively. The vacuum level and flow rate are controlled to be within a range such that debris is pulled away from the web of base material 104 without creating unnecessary friction between the web of base material 104 and the conveying system components. Such vacuum levels and flow rates are, in some embodiments, applicable to all other components of the system using a vacuum.

In another suitable embodiment, one or more of the first brush and the second brush may include a load sensor that measures or monitors the pressure the brush is exerting upon the web of electrode material 802. As shown in Fig. 8, the web of electrode material 802 refers to the web after having been processed as described herein, such that a population of electrode patterns 800 have been formed therein. In this embodiment, the first brush and the second brush may be controlled, via user interface 116, to maintain a uniform brushing pressure on the web of electrode material 802 based upon variations in brush bristle wear or electrode thickness or surface roughness.

In another suitable embodiment, one or more of the first brush and the second brush are configured to move at least partially in the down-web direction WD at a rate of speed equivalent to the rate of speed of the web of electrode material 802, thus maintaining a substantially zero speed differential between the brush and the web of electrode material 802 in the down-web direction WD.

In yet another suitable embodiment, the brushing station 124 may be equipped with a phase measurement sensor 1016 to determine the phase of the first brush and the second brush. In one such embodiment, the phase sensor may measure the location of a home sensor flag 1018 of the first brush and the second brush. In this embodiment, the phase measurement sensor 1016 determines whether the first and second brushes are within a range of predetermined phase difference, such as 180 degrees out of phase, 90 degrees out of phase or zero degrees out of phase or any other suitable phase difference that allows the production system 100 to function as described herein. As used herein, the "phase" of a brush refers to an angular position of a brush, such that the bristles of two separate brushes would be aligned when "in phase."

In still another embodiment, an ultrasonic transducer (not shown) may be configured to impart ultrasonic vibrations to one or more of the first and second brushes to facilitate debris removal from the web of electrode material 802.

With further reference to Fig. 2, in one suitable embodiment, the web of base material 104 is conveyed through an air knife 126. As used herein, the term air knife refers to a device that uses high pressure air that is blown at the web of base material 104. The high pressure air contacts the surface of the web of base material 104 and removes debris therefrom. The air knife 126 is controlled to supply air at a pressure/velocity such that it does not break, rupture or otherwise cause defects in the electrode patterns, and maintains the electrode patterns as attached to the web of base material 104. In another embodiment, a second air knife 126 is configured to blow air at an opposing surface of the web of base material 104 and remove debris therefrom. In this embodiment, the second air knife may blow air in the same direction as the first air knife, or in a direction opposite the first air knife, or any other direction that allows the air knife 126 to function as described herein. In one embodiment, the air knife 126 station is equipped with a vacuum that facilitates removal of the debris that has been removed by the air knife 126.

With reference to Fig. 8, after having been processed by the laser systems 120a-c and cleaned by the brush station 124 and the air knife 126, the web of base material 104 exits the cleaning stations as a web containing a population of electrode patterns 800 within web of base material 104, collectively a web of electrode material 802.

With further reference to Figs. 2, 8 and 12, in one embodiment, web of electrode material 802 passes through inspection device 128. The inspection device 128 is a device configured to analyze the electrode material 802 and identify defects thereon. For example, in one embodiment, the inspection device 128 is a visual inspection device including a camera 1200, which may be a digital camera such as a digital 3-D camera configured to analyze the electrode patterns on the web of electrode material 802. In one embodiment, the camera 1200 is a digital light camera including a CMOS having a 48 megapixel sensitivity. The camera 1200 is optically coupled to a lens 1202, which may be a wide field of view lens. In one embodiment, the lens 1202 is a telecentric lens. The lens 1202 is held in place by a lens mount 1204, which in one embodiment may be adjustable in a vertical direction V to control a focus of the lens 1202. The lens 1202 is aimed to focus on the web of electrodes 802 as it passes over inspection plate 1206. In one embodiment, the inspection plate 1206 includes a transparent or semi-transparent top 1208 that allows light from a light source (not shown) housed within the inspection plate 1206 to shine therethrough to generate a backlight. In one suitable embodiment, the intensity and/or color of the light may be controlled via the user interface 116. In one embodiment, one or more additional lighting sources, such as an upstream light and a downstream light illuminate the web of electrode material 802 while within the inspection station 128. In some embodiments, each of the lighting sources are independently controllable for intensity and color. In one embodiment, the backlight includes a diffuse low angle ring light. The web of electrode material 802 may be secured and conveyed over the inspection plate 1206 by gear wheels 1210 that are configured to engage the tractor holes 612 of the web of electrode material 802. In doing so, the web of electrode material 802 is held taught against inspection plate 1206, to substantially eliminate curling of the web of electrode material 802. Each of the inspection plate leading edge 1214 and the inspection plate trailing edge 1216 may be chamfered (e.g., at angles similar to angle α) to allow the web of electrode material to pass smoothly thereover without snagging.

With continued reference to Fig. 12, in one embodiment, the inspection device 128 includes a trigger sensor 1212 that detects a predetermined feature of the web of electrode material 802, such as a fiducial feature 602, lengthwise edge cut 600 or any other feature that allows inspection device 128 to function as described herein. Upon detection of the predetermined feature, the trigger sensor 1212 sends a signal directly to camera 1200 or indirectly through the user interface 116, to trigger the camera 1200 to image an electrode of the web of electrode material 802. Upon imaging the electrode, camera 1200 may be configured to detect one or more metrics such as a height of the electrode, a size or shape of a feature that has been cut by one of the laser devices 120a-120c (Fig. 2), the pitch (distance) between electrodes or any other feature that allows the inspection device to function as described herein. For example, in one suitable embodiment, the inspection device 128 detect whether the ablations 404 (Fig. 4), lengthwise edge cuts 600, fiducial features 602, tractor holes 612, pitch between individual electrode structures, offset in the cross-web and web direction of tractor holes 612, and first and second perforations 608, 610 (Fig. 6) are within a predefined tolerance of size, shape, placement and orientation. In one suitable embodiment, a user may control which feature to inspect using the user interface 116.

With In one embodiment, the web of electrode material 802 is held substantially flat during analysis by the inspection device 128, such as by use of application of balanced vacuum or fluid (e.g., air) flow over the opposing sides of the web of electrode material 802. In this embodiment, by having the web of electrode material 802 be flat during inspection, more precise imaging and analysis may be conducted on the web of electrode material 802, and thus higher quality error and defect detection is enabled. In one embodiment, the inspection system may be configured to provide in-line metrology of the web of base material 104 and/or web of electrode material 802. For example, the inspection device 128 may be configured to measure metrics such as web thickness, sizes and shapes of the electrode patterns, and the like while the web is being conveyed in the down-web direction WD. These metrics may be transmitted to the user interface 116 for viewing or memory storage, or otherwise used to adjust production parameters of the production system 100.

In one embodiment, in the event the inspection system determines a defect is present on the web of electrode material 802 (Fig. 8), the marking device 130 (Fig. 2) will mark the web of electrode material to identify such defect. The marking device 130 may be a laser etching device, printer, stamper or any other marking device capable of placing a mark indicating a defect is present on a web of electrode material 802. In another suitable embodiment, the marking device 130 is controllable to mark the web of electrode material 802 with one or more of an identification number (ID) and known good electrodes (KGEs), allowing for the possibility to further mark the web of electrode material 802 with a grade, such as grade A, grade B, grade C or the like, indicating a quality measurement (such as number or type of defects) of a particular electrode within the web of electrode material 802.

Upon the processing of the web of base material 104 into the web of electrode material 802, the web of electrode material 802 has a web strength reduction in the down-web direction WD of from 25 percent to 90 percent as compared to the unprocessed web of base material 104. With reference to Fig. 8A, a portion of the web of electrode material 802 is shown. In this embodiment, the web of electrode material 802 includes electrode clusters EC comprising five electrode patterns 800 separated by a tie bar 614. However, it should be understood that in other embodiments, the electrode cluster EC may include any number of electrode patters including one or more, such as for example, 2, 3, 4, 5, 6, 7, 8, 9, 10, 11, 12, 13, 14, 15, 16, 17, 18, 19, 20 or any other number of electrode patterns 800 between tie bars 614. A distance L_{EC} is defined as a distance in the down-web direction WD between a centerpoint of a first electrode pattern of an electrode cluster EC to a centerpoint of a first electrode in a second electrode cluster EC.

In an exemplary embodiment, the cross-web span of the web Sw is 3X mm in the cross-web direction and a width W_{EP} of each electrode pattern 800 in the down-web direction WD is X mm. In this embodiment, the reduction in web strength in the down-web direction WD is 33 percent as compared to the unprocessed web of base material 104. The reduction in web strength is calculated as the width W_{EP} divided by the cross-web span Sw (i.e., X mm / 3X mm = 0.33).

In another exemplary embodiment, the cross-web span of the web Sw is 1.5X mm in the cross-web direction and a width W_{EP} of each electrode pattern 800 in the down-web direction WD is 1.3X mm. In this embodiment, the reduction in web strength in the down-web direction WD is 87 percent as compared to the unprocessed web of base material 104. The reduction in web strength is calculated as W_{EP} / S_{w} (i.e., 1.3X / 1.5X = 0.87). Web strength in the down-web direction WD is verified and measured as a breaking strength of the web of electrode material 802 using an electromechanical or hydraulic material tester with at least force feedback, and may include displacement feedback, such as an Instron brand testing machine.

In another exemplary embodiment, there is a strength reduction in the cross-web direction XWD of the web of electrode material 802 as compared to the web of base material 104. In a first exemplary embodiment, the electrode cluster width W_{EC} is 6X mm in the down-web direction WD, the width W_{TB} of the tie bar 614 is X mm in the down-web direction WD and the width W_{EP} of the electrode pattern is X mm in the down-web direction WD and the length L_{E} of the electrode pattern is 1.7X mm in the cross-web direction XWD. In this embodiment, the reduction in strength of the web of electrode material 802 in the cross-web direction XWD is about 77 percent as compared to the unprocessed web of base material 104. In another exemplary embodiment, the electrode cluster length L_{EC} is 10X mm, the width W_{TB} of the tie bar 614 is 0X mm (i.e., no tie bar) and the width W_{EP} of the electrode pattern is 2X mm and the length L_{E} of the electrode pattern is 1.7X mm. In this embodiment, the reduction in strength of the web of electrode material 802 in the cross-web direction XWD is about 92 percent as compared to the unprocessed web of base material 104. Web strength in the cross-web direction XWD is verified and measured as a breaking strength of the web of electrode material 802 using an electromechanical or hydraulic material tester with at least force feedback, and may include displacement feedback, such as an Instron brand testing machine.

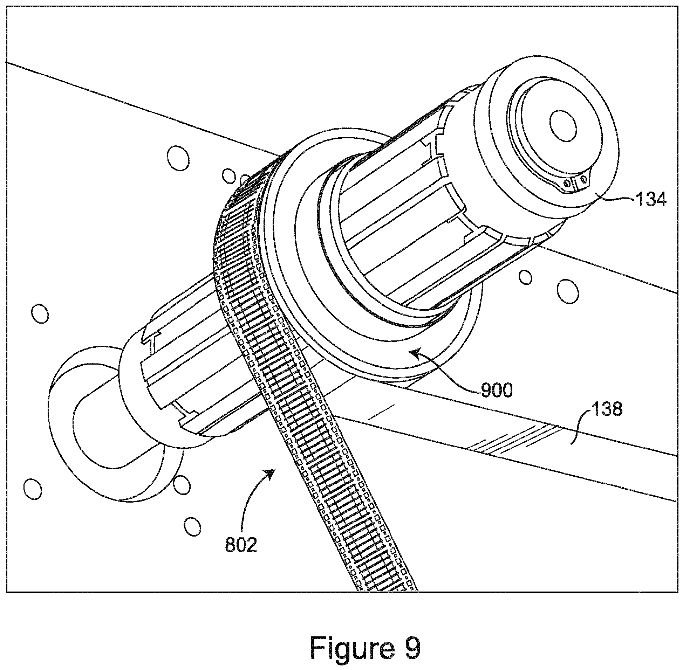

With further reference to Fig. 9, the web of electrode material 802 is then conveyed to the rewind roller 134, where it is wound together with web of interleaf material 138 to create a spool 900 having alternating layers of web of electrode material 802 and web of interleaf material 138.

In one suitable embodiment, the user interface 116 may include a processor and memory configured to store and execute instructions causing the production system 100 to function as described herein. The user interface 116 may further include a display device, such as a LCD or LED display and a set of controls, or virtual controls, that allow a user to control and adjust parameters of the production system 100, as well as view metrics such as web conveyance speed, tension, number of defects, and any other parameters that allow production system 100 to function as described herein.

In use, with reference to Fig. 2, the base unwind roller 102 of production system 100 is loaded with a web of base material 104. The web of base material 104 is passed across an edge guide 106, to facilitate unwinding of the web of base material 104. In this embodiment, the web of base material 104 is then passed around the idler 108a and into the splicing station 110. The idler 108a is used to facilitate maintaining proper positioning and tension of the web of base material 104, as well as to change the direction of the web of base material 104. The idler 108a receives the web of base material 104 in the vertical direction, and is partially wrapped around the idler 108a such that the web of base material 104 leaves the idler 108a in an output direction substantially ninety degrees from the input direction. However, it should be appreciated that the input and output directions may vary without departing from the scope of this disclosure. In some embodiments, the production system 100 may use multiple idlers 108a-108x to change the direction of the web of base material one or more times as it is conveyed through the production system 100. In this embodiment, the user unwinds the base material 104 through the idlers 108a-108x, for example as shown in Fig. 2.

In one embodiment, the splicing station 110 is used to splice two separate webs together. In this embodiment, a first web of base material 104 is unwound, such that a trailing edge (not shown) of the web of base material 104 is stopped within the splicing station 110, and a leading edge (not shown) of a second web of base material 104 is unwound into the splicing station 110 such that the trailing edge of the first web and the leading edge of the second web are adjacent one another. The user then applies an adhesive, such as an adhesive tape, to join the leading edge of the second web to the trailing edge of the first web to form a seam between the two webs and create a continuous web of base material. Such process may be repeated for numerous webs of base material 104, as dictated by a user.

In one suitable embodiment, upon exiting the splicing station 110, the web of base material 104 is conveyed in the down-web direction WD to the nip roller 112. The nip roller 112 is controlled via user interface 116 to adjust/maintain the speed at which the web of base material 104 is conveyed through the production system 100. The web of base material 104 is pressed against each of the two adjacent rollers 114 of nip roller 112, with enough pressure to allow friction of the rollers to move the web of base material 104, but a low enough pressure to avoid any significant deformation or damage to the web of base material 104.

In one embodiment, during use, the speed of the web of base material 104 is controlled by controlling the rate of rotation of the high friction roller of nip roller 112 via user interface 116. In other embodiments, the production system 100 may include one or more additional nip rollers 122, 132 to facilitate control of the speed of the web of base material 104, and the web of base material is conveyed therethrough. In this embodiment, the speed of the additional nip rollers 122, 132 may be controlled via user interface 116. In use, when multiple nip rollers are used, each of the speed of each of the nip rollers 112, 122, 132 may be set via user interface 116 to the same speed, or different speeds as required, such that the web of base material 104 is conveyed smoothly through production system 100.

In use, in one embodiment, the web of base material is unwound through the dancer 118. In this embodiment, the pair of rollers of the dancer 118 rotates about the central axis thereof, to passively adjust the tension on the web of base material 104.

With further reference to Fig. 2, in use the web of base material is conveyed through one or more laser systems 120a, 120b, 120c. The embodiment shown in Fig. 2 includes three laser systems 120a-c, but it should be appreciated that any number of laser systems may be used to allow the production system 100 to function as described herein.

Use of the production system is further described with additional reference to Fig. 2-6. The web of base material 104 is conveyed through the laser systems 120a-c in the down-web direction WD. In one embodiment, the web of base material 104 is conveyed into laser system 120a in the first condition 400, having not yet been ablated or cut. The web of base material 104 is conveyed over chuck 306, and thus over the plurality of vacuum holes 406. The vacuum holes 406 are in fluid connection with vacuum 308, and vacuum 308 is controlled via user interface 116 to draw a vacuum pressure on the web of base material 104 passing over the vacuum holes 406. The vacuum pressure is controlled to maintain the web of base material 104 in a substantially flat/planar state as it is conveyed across chuck 306. In one embodiment of use, the vacuum pressure through vacuum holes 406 is monitored and adjusted in real time, via user interface 116, to ensure that the web of base material 104 remains substantially flat across chuck 306 and does not lift or buckle while being processed.

With reference to Fig. 4, the web of base material 104 is conveyed over the opening 410 of chuck 306, and further over the chamfer 416 on the downstream edge 414. In this embodiment, the chamfer 416 facilitates the web of base material 104 passing over downstream edge 414 without having the web of base material 104 catch or snag on the downstream edge 414.

With further reference to Figs. 3-5, in one embodiment of use, the web of base material 104 is ablated by laser beam 302 (Fig. 3) to create the ablations 404 (Fig. 4) in the web of base material 104. In one embodiment, the web of base material 104 is anode material 502, and the ablations 404 remove the anodically active material layer 508 to expose anode current collector layer 506 (Fig. 5). In another embodiment, the web of base material 104 is cathode material 504, and the ablations 404 remove the cathodically active material layer 512 to expose cathode current collector layer 510.

During use, when using the laser system 120a to make the ablations 404 in the web of base material 104, the power of the laser beam 302 is controlled via user interface 116 to a level that is capable of substantially completely, or completely, removing the coating layer, but will not damage or cut through the current collector layer. In use, the laser beam 302 is controlled, for example via user interface 116, to create the ablations 404 while the web of base material 104 is in motion and being conveyed in down-web direction WD. The laser beam 302 is controlled such that ablations 404 are created on each lateral side of the web of base material 104, as best shown in Fig. 5. In one embodiment of use, after making the ablations 404, the laser system 120a is controlled to cut fiducial features 602 in the web of base material 104, as described further herein. In some embodiments, multiple lasers are used to each ablate a portion of the web of base material 104 to each create one or more ablations 404 to increase the throughput of the production system 100.

With further reference to Figs. 2, 3 and 4, in another stage of use the production process, the web of base material 104 is conveyed in the down-web direction WD toward the cutting area 408 of the laser system 120a. In this embodiment the opening 410 is in fluid communication with the vacuum 308, and vacuum 308 is controlled to draw a vacuum pressure on the web of base material 104 as it passes over the opening 410. In another embodiment, a second vacuum is controlled to equalize the pressure on the web of base material 104 opposite the chuck 306. In this embodiment, the equalization in pressure is monitored and controlled to maintain the web of base material 104 in a substantially flat/planar state and at a consistent height as it passes over the opening 410, to facilitate focus of laser beam 302 on the web of base material 104.

In one embodiment of use, the laser system 120a is controlled to cut one or more patterns in the web of base material 104 while the web of base material is over the opening 410. With reference to Fig. 6, the laser system is controlled to cut one or more lengthwise edge cuts 600 to define lengthwise edges of an electrode in the cross-web direction XWD. The lengthwise edge cuts 600 are cut using laser beam 302 by cutting the web of base material 104 in the cross-web direction XWD while the web of base material is conveyed in the down-web direction WD. For example, in one embodiment, , the path motion of laser beam 302 is controlled and/or synchronized with the motion of the web of base material 104 in the down-web direction WD. Accordingly, the path of the laser beam 302 travels at an angle with respect to the down-web direction WD, to account for the movement of the web of base material in the 104 in the down-web direction WD. In this embodiment, a compensation factor is applied to the path of the laser beam 302 to allow cuts to be made in the cross-web direction XWD while the web of base material is continuously traveling in the down-web direction WD. In this embodiment, as the web of base material 104 moves in the web direction WD, the laser is projected onto the web of base material 104 at an initial cut location 604, and then is controlled to travel in both the cross-web direction XWD and the web direction WD until reaching end cut location 606 to create the lengthwise edge cuts 600. It should be appreciated that the angle at which the laser beam 302 is controlled to travel varies based upon the speed of the web of base material 104 in the down-web direction WD. In another embodiment, the web of base material 104 is temporarily stopped during the laser processing operation, and as such, the path of the laser beam 302 does not need to account for the motion of travel of the web of base material 104. Such embodiment may be referred to as a step process, or step and repeat process. During laser processing, one or more of the laser systems 120a-c use a repeating alignment feature, such as fiducial features 602 to adjust and/or align the laser beam 302 during the laser processing operations, for example to compensate for possible variations in positioning of the web of base material 104.

With further reference to Fig. 6, in one embodiment of use, the laser system 120a is controlled to cut one or more of the repeating alignment features such as a plurality of fiducial features 602 in the web of base material 104. The fiducial features 602 are cut at a predetermined/known location on the web of base material 104. In one embodiment of use, the fiducial features 602 are tracked by one or more of the visual inspection systems 310, 312 to measure the location and speed of travel of the web of base material 104. The measurement of the fiducial features 602 is then used to accurately maintain front to back alignment of the patterns on the web of base material 104 in both the down-web direction WD and cross-web direction XWD. In some embodiments of use, the laser system 120a cuts the plurality of tractor holes 612 and/or fiducial features 602. In other embodiments, the fiducial features 602 have been preformed into the web of base material 104 such that one or more of laser systems 120a-c uses them for positioning/alignment as described above.

With reference to Figs. 2 and 6, in one suitable embodiment of use, the laser system 120a is controlled to cut a first perforation 608 and a second perforation 610 in the web of base material 104 as part of the electrode pattern as the web of base material is in motion in the down-web direction WD. First perforation 608 is formed by laser cutting using laser beam 302, while the web of base material is positioned over the opening 410 in chuck 306. The first perforation 608 is formed as a linear slit (e.g., through-cut) in a direction aligned with the down-web direction WD. Importantly, the first perforation 608 is cut such that it does not extend across the entirety of the width of the electrode We. Instead, the laser system 120a is controlled to cut the patterns such that outer tear strips 700 remain on both the upstream and downstream edges of the perforation 608, to ensure the electrode pattern remains connected to the web of base material 104.

With further reference to Figs. 6 and 7, in use, the second perforations 610 are cut inboard (in the cross-web direction XWD) from the first perforations 608. In this embodiment of use, second perforations 610 are cut as a line of slits in the down-web direction WD separated by inner tear strips 702. In the embodiment shown, the second perforations 610 are cut to intersect through holes 704. In the illustrated embodiment, the inner tear strips 702 are cut to be at least two times the length of outer tear strips 700, but may be cut at different lengths as to allow the production system 100 to function as described herein.

In use, with reference to Figs. 3, 4 and 6, debris from the laser cuts for the lengthwise edge cuts 600, the fiducial features 602, and the first and second perforations 608, 610 over the opening 410 of the chuck 306, is allowed to fall through the opening 410 and the vacuum 308 is controlled to collect debris formed during the laser cutting process.

In one suitable embodiment of use, the laser system 120a is configured as a first ablation station. In this embodiment, the laser system 120a is controlled to form the ablations 404, as described above on a first surface of the web of base material 104. Upon exiting laser system 120a, the web of base material is conveyed over idler 108d to flip the web of base material 104 in a manner such that a second surface (opposing the first surface) of the web of base material 104 is positioned for processing by the laser system 120b. In this embodiment, laser system 120b is configured as a second ablation station and uses the fiducial features 602 to ensure alignment of the ablations 404 in the down-web direction WD and cross-web direction XWD. Accordingly, the laser system 120b is controlled to perform a second ablation process on the opposing surface of the web of base material 104, such that ablations 404 on each surface of the web of base material 104 are aligned in the web direction WD and the cross-web direction XWD.

In one embodiment of use, the laser system 120c shown in Fig. 2 is configured as a laser cutting station. In this embodiment, the laser system 120c is controlled to perform the laser cuts for lengthwise edge cuts 600, and the first and second perforations 608 and 610.

With further reference to Fig. 2, 10 and 11, in one embodiment of use, the web of base material is then conveyed through one or more cleaning stations, such as brushing station 124 and air knife 126 upon having exited one or more of laser systems 120a-c. In one suitable embodiment of use, the web of base material 104 is conveyed through brushing station 124 and bristles 1002 are controlled to delicately contact a surface of the web of base material 104 and remove or dislodge any debris therefrom. The contact pressure of the bristles 1002 on the surface of the web of base material 104 is controlled to be low enough that it does not break, rupture or otherwise cause defects in the electrode patterns, and maintains the electrode patterns as attached to the web of base material 104.

With further reference to Figs. 10 and 11, in one suitable embodiment of use, brush 1000 is controlled to move in the cross-web direction XWD by controlling the motor 1014 to effect rotation of the drive wheel 1010. A position sensor 1016 is controlled to sense the position of the brush position marker 1018 to measure the phase (e.g., angular position) and rotations per time of the drive wheel 1010.

In one suitable embodiment of use, a second brush (not shown) is controlled to contact the opposing surface of the web of base material 104. In this embodiment, the second brush, which may be substantially the same as the first brush 1000 is controlled to travel in a direction opposite to the first brush, and suitably 180 degrees out of phase with the first brush. The phase of the first brush and the second brush may be monitored via the position sensor 1016, and an equivalent position sensor of the second brush. In this embodiment, the contact pressure of the bristles of the first brush and the second brush, together, is controlled to be low enough that it does not break, rupture or otherwise cause defects in the electrode patterns, and maintains the electrode patterns as attached to the web of base material 104.

In use, the rate of oscillation of the brush 1000 and the pressure exerted by the bristles 1002 against the surface of the web of base material 104 may be controlled by the user using the user interface 116.

In one embodiment of use, the brushing station 124 is equipped with a vacuum system and controlled to create a vacuum through brush station orifices 1020 to evacuate debris that has been brushed from one or more surfaces of the web of base material 104. In this embodiment, the debris is brushed from the web of base material 104 and falls, or is suctioned through the brush station orifices 1020.

In another suitable embodiment of use, one or more of the first brush and the second brush include a load sensor that is measured or monitored to determine the pressure the brush is exerting upon the web of electrode material 802. In this embodiment, the first brush and the second brush are controlled, via the user interface 116, to maintain a substantially uniform brushing pressure on the web of electrode material 802 based upon variations in brush bristle wear or electrode thickness or surface roughness.

In another suitable embodiment of use, one or more of the first brush and the second brush are controlled to move at least partially in the down-web direction WD at a rate of speed equivalent to the rate of speed of the web of electrode material 802, to maintain a substantially zero speed differential between the brush and the web of electrode material 802 in the down-web direction WD.

In yet another suitable embodiment of use, the brushing station 124 is equipped with a phase measurement sensor 1016 that determines the phase of the first brush and the second brush. In this embodiment, the phase sensor measures the location of the home sensor flag 1018 of the first brush and the second brush. In this embodiment, the phase measurement sensor 1016 determines whether the first and second brushes are within a range of predetermined phase difference, such as 180 degrees out of phase, 90 degrees out of phase or zero degrees out of phase or any other suitable phase difference that allows the production system 100 to function as described herein, and allows for correction thereof or provides an alert to the user via user interface 116 or other alert device that the brushes are not properly phased.

In still another embodiment of use, an ultrasonic transducer (not shown) is activated to impart ultrasonic vibrations to one or more of the first and second brushes to facilitate debris removal from the web of electrode material 802.

With further reference to Fig. 2, in one suitable embodiment of use, the web of base material 104 is conveyed through an air knife 126. In this embodiment, high pressure air is controlled to contact the surface of the web of base material 104 to remove debris therefrom. The air knife 126 is controlled, for example via user interface 116, to supply air at a pressure/velocity such that it does not break, rupture or otherwise cause defects in the electrode patterns, and maintains the electrode patterns as attached to the web of base material 104. In another embodiment, a second air knife 126 is controlled to blow air at an opposing surface of the web of base material 104 to remove debris therefrom. In this embodiment, the second air knife is controlled to blow air in the same direction as the first air knife, or in a direction opposite the first air knife, or any other direction that allows the air knife 126 to function as described herein. In another embodiment, the air knife 126 station is equipped with a vacuum that is controlled to facilitate removal of the debris that has been removed by the air knife 126.

With reference to Fig. 8, after having been processed by the laser systems 120a-c and cleaned by the brush station 124 and the air knife 126, the web of base material 104 exits the cleaning stations as a web containing a plurality of electrode patterns 800 within web of base material 104, collectively the web of electrode material 802.

With further reference to Figs. 2, 8 and 12, in one embodiment of use, the web of electrode material 802 is conveyed through inspection device 128. The inspection device 128 is controlled to analyze the electrode material 802 and identify defects thereon. For example, in one embodiment, the inspection device 128 is a visual inspection device including the camera 1200. The lens 1202 is aimed to focus on the web of electrodes 802 as it passes over inspection plate 1206. In one embodiment of use, the inspection plate 1206 includes the transparent or semi-transparent top 1208 that allows light from a light source (not shown) housed within the inspection plate 1206 to shine therethrough. In one suitable embodiment, the intensity and/or color of the light is controlled via the user interface 116. In one embodiment of use, the web of electrode material 802 is conveyed over the inspection plate 1206 by gear wheels 1210 that engage the tractor holes 612 of the web of electrode material 802. In doing so, the web of electrode material 802 is held taught against inspection plate 1206, to substantially eliminate curling of the web of electrode material 802.

With additional reference to Fig. 12, in one embodiment of use, the inspection device 128 includes a trigger sensor 1212 that is controlled to detect a predetermined feature of the web of electrode material 802, such as a fiducial features 602, lengthwise edge cut 600 or any other feature that allows inspection device 128 to function as described herein. Upon detection of the predetermined feature, the trigger sensor 1212 sends a signal directly to camera 1200 or indirectly through the user interface 116, to trigger the camera 1200 to image an electrode of the web of electrode material 802. Upon imaging the electrode, camera 1200 is controlled to detect one or more metrics such as a height of the electrode, a size or shape of a feature that has been cut by one of the laser devices 120a-120c (Fig. 2), the pitch (distance) between electrodes or any other feature that allows the inspection device to function as described herein. For example, in one suitable embodiment, the inspection device 128 is controlled to detect whether the ablations 404 (Fig. 4), lengthwise edge cuts 600, fiducial features 602, and first and second perforations 608, 610 (Fig. 6), individual electrode structure cross-web direction XWD dimensions, individual electrode structure down-web direction WD dimensions, individual electrode active area offset, and any other ablation or cut of web of electrode material 802 are within a predefined tolerance of size, shape, placement, cross-machine direction pitch, machine direction pitch, and orientation, and presents this information to the user via user interface 116. In one suitable embodiment, a user may control which feature to inspect using the user interface 116. In yet another embodiment, inspection device 128 may detect a cluster identification code for one or more electrode structures of the web of electrode material 802.

In one embodiment of use, the inspection system 128 is used to provide in-line metrology of the web of base material 104 and/or web of electrode material 802. In this embodiment, the inspection device 128 is controlled to measure metrics such as web thickness, sizes and shapes of the electrode patterns, and the like while the web is being conveyed in the machine direction. These metrics are transmitted to the user interface 116 for viewing or memory storage, or otherwise used to adjust production parameters of the production system 100.

In one embodiment of use, if the inspection system determines a defect is present on the web of electrode material 802 (Fig. 8), the marking device 130 (Fig. 2) is controlled to mark the web of electrode material 802 to identify such defect using a laser etching device, printer, stamper or any other marking device capable of placing a mark indicating a defect is present on a web of electrode material 802. In another suitable embodiment of use, the marking device 130 is controlled to mark the web of electrode material 802 with one or more of an identification number (ID) and known good electrodes (KGEs), allowing for the possibility to further mark the web of electrode material 802 with a grade, such as grade A, grade B, grade C or the like, indicating a quality measurement (such as number or type of defects) of a particular electrode within the web of electrode material 802.

With further reference to Fig. 9, the web of electrode material 802 is then conveyed to the rewind roller 134, where it is wound together with web of interleaf material 138 to create a spool 900 having alternating layers of web of electrode material 802 and web of interleaf material 138.

In one suitable embodiment of use, the web of base material 104 is rewound via a rewind roller 134 together with a web of interleaf material 138, which is unwound via interleaf roller 136 to create a roll of electrodes 140 with layers of the electrodes separated by interleaf material 138. In some embodiments, the web of base material 104 is rewound via the rewind roller 134 without the web of interleaf material 138.

In one embodiment, web of base material 104 has an adhesive tape layer (not shown) adhered to one or both surfaces of the anodically active material layer 508, or cathodically active material layer 512, respectively. In this embodiment, in use, the adhesive layer is removed subsequent to the ablation and cutting (described above) to remove unwanted material or debris.

In one embodiment of use, one or more of the rollers of the conveyor system is not perfectly round, such that the roller has an eccentricity. In such embodiment, the eccentric roller(s) are mapped to determine the radius versus radial position. The laser system 120a-c is then controlled to adjust the laser beam 302 position to account for the eccentricity based upon the mapping of the roller(s).

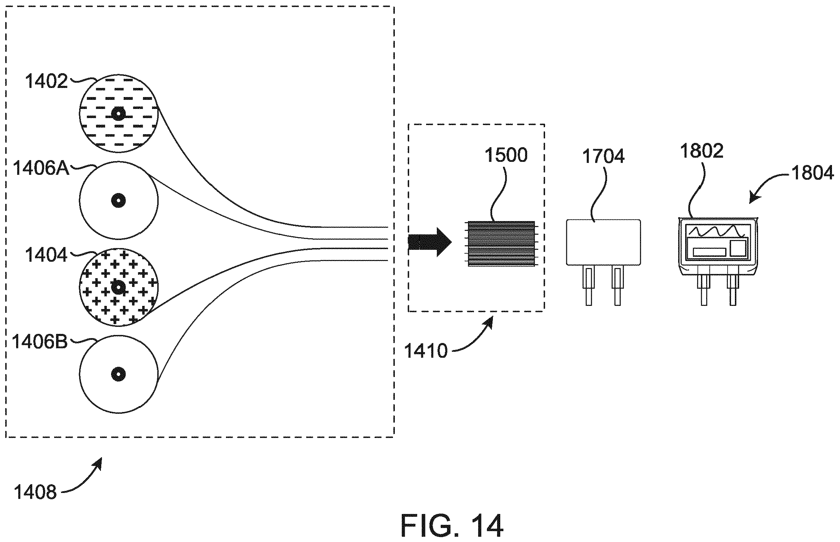

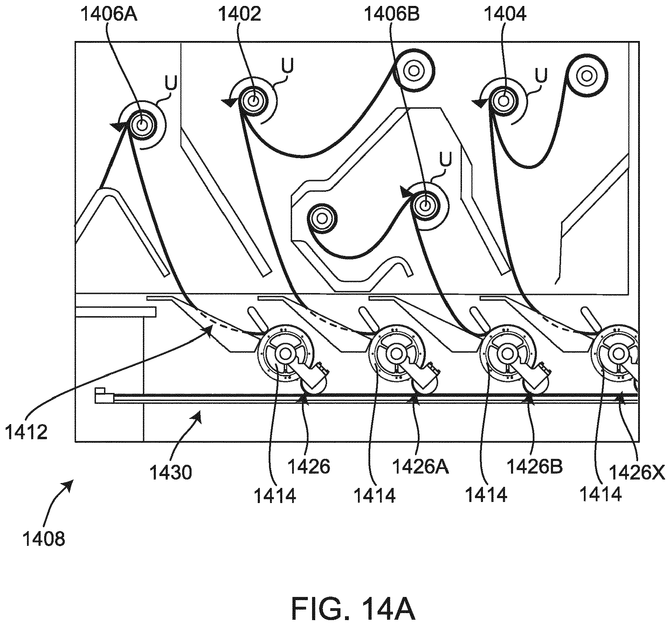

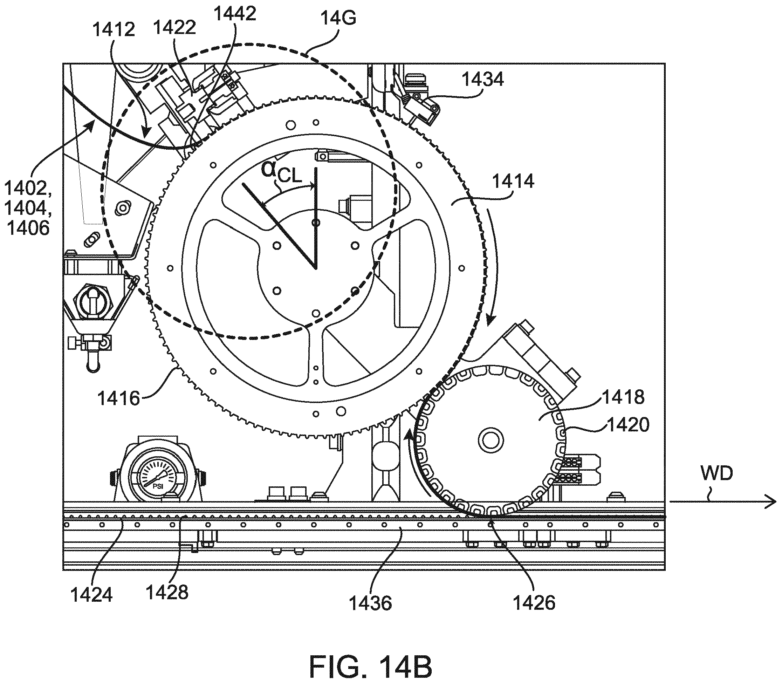

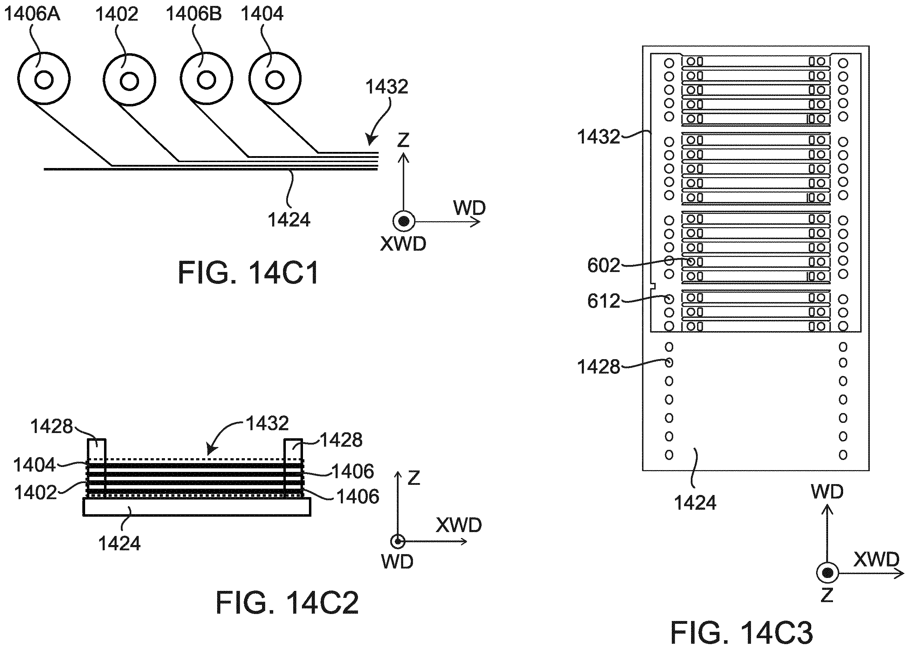

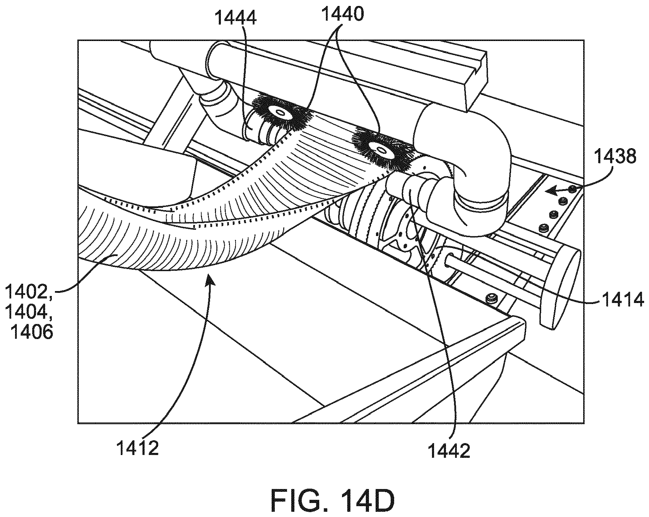

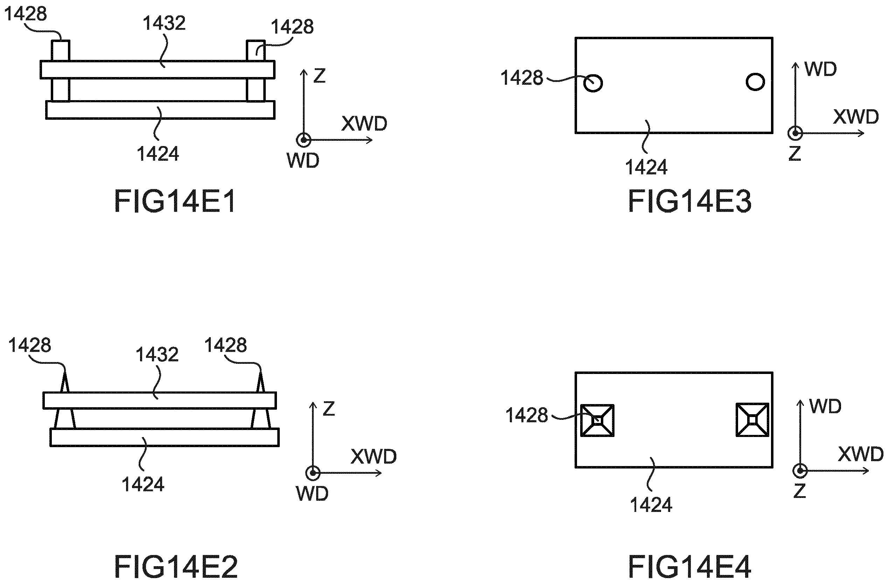

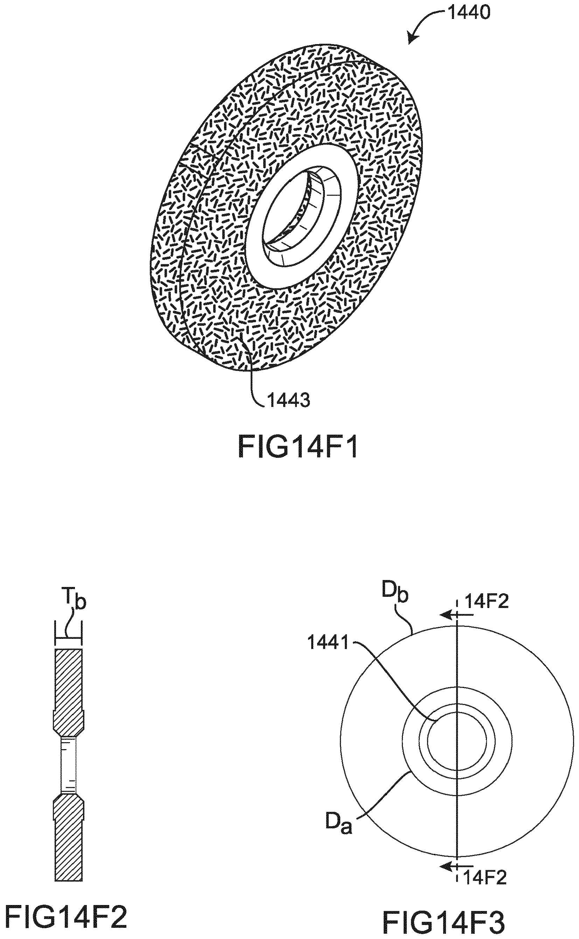

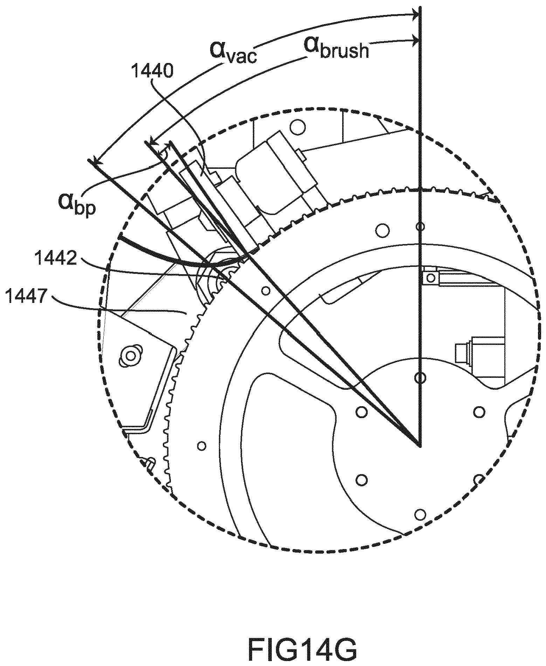

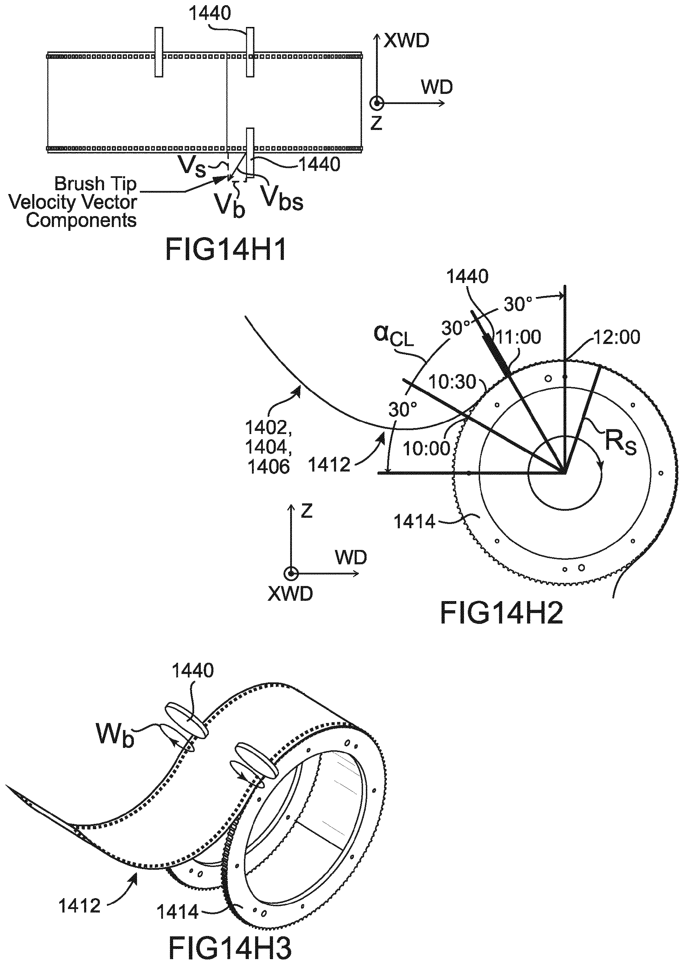

With reference to Figs. 14-16, the web of electrode material 802 is used to produce a battery. In this embodiment, individual spools of web of electrode material 1402, 1404, and 1406A and 1406B are each unwound and merged in merging zone 1408 and stacked in punching and stacking zone 1410 in an alternating configuration including at least one layer of cathode 1402, and anode 1404 separated by separator material 1406. It should be appreciated that the spools of electrode material 1402, 1404, and 1406A and 1406B have been produced as web of electrode material 802 as described herein.

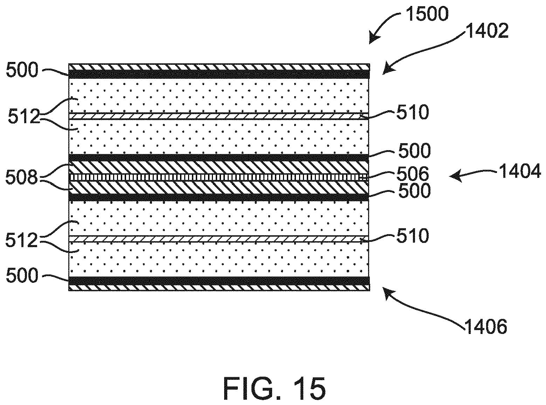

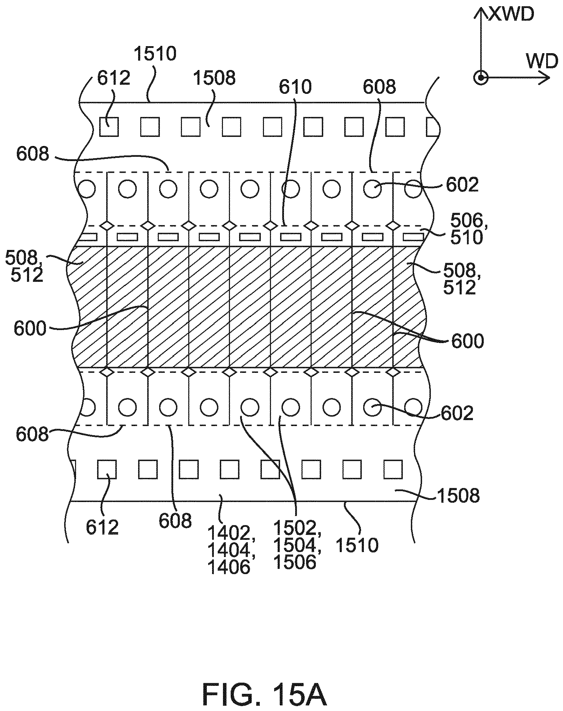

With reference to Figs. 14A and 15A, additional detail of the merging zone 1408 and merging process is described. In the merging zone 1408, the spools of webs of electrode material 1402, 1404, and 1406A and 1406B are individually unwound in the direction indicated by arrows U. In one embodiment, the spools of electrode material 1402, 1404, and 1406A and 1406B are rolls of electrodes 140, described above. In the embodiment shown in Fig. 14A, spool 1406 is a spool of wound web separator material having a population of individual electrode separators 1506 formed therein each bounded by outer perforations 608 and lengthwise edge cuts 600. Spool 1402 is a spool of wound web of cathode material having a population of individual cathode electrodes 1502 formed therein each bounded by outer perforations 608 and lengthwise edge cuts 600. Spool 1404 is a spool of wound web anode material having a population of individual anode electrodes 1504 formed therein each bounded by outer perforations 608 and lengthwise edge cuts 600.

As best seen in FIG. 15A, each of the spools of electrode material 1402, 1404, 1406 is formed of a web having continuous outer edges 1508 in which the tractor holes 612 have been formed, and web edge boundaries 1510 defining the outer perimeter of the webs. It should be appreciated that in other embodiments, the order and placement of the spools of electrode material 1402, 1404, and 1406 during the merging process may vary so long as separator material is placed between any adjacent layers of anode material and cathode material to prevent short circuiting.

As each of the spools of electrode material 1402, 1404 and 1406 are unwound, the unwound web of each of the spools 1402, 1404 and 1406 is controlled to form a catenary curve 1412 prior to engagement with an merge sprocket 1414, for example as shown in Fig. 14B. In embodiments, merge sprocket 1414 may have a radius Rₛ (Fig. 14H) of 19 mm or larger, such as 38 mm, 51 mm, 76 mm, 114 mm, 152 mm or any other radius that allows the system to function as described herein. It is noted that any or all of the other sprockets, spools and rollers as described herein may have the same or similar radiuses that allow the system to function as described herein. From a practical standpoint, in some embodiments it is desirable to reduce the size of the merge sprocket 1414 (and any other sprocket, spool or roller) such that it takes up less space, and thus the system may accordingly be made smaller. In addition, it is noted that using smaller sprockets, spools and rollers reduce the overall path length that the web travels while being processed in the system, which may facilitate reduced waste and improved alignment of webs, as described herein. Each of the merge sprockets 1414 includes a population of teeth 1416 (e.g., pins or projections) that are sized, shaped and placed to precisely engage or align with the tractor holes 612 of the web. For example, if the tractor holes 612 have a square cross sectional shape, the teeth 1416 would have a corresponding square cross sectional shape. However, the size and shape, including any taper, of the tractor holes 612 and teeth 1416 may be any size and shape that allows the system to function as described herein, such as the following cross-sectional shapes, square, rectangular, circular, oval, triangular, polygonal or combinations thereof.

With reference to Figs. 14A, 14B, and 14H, the webs from the spools of electrode material 1402, 1404, 1406 are moved in a circular path around the respective merge sprocket 1414 until it engages with an inverted tooth sprocket 1418. In embodiments, the radius of inverted tooth sprocket 1418 is 19 mm or larger, such as 38 mm, 51 mm, 76 mm, 114 mm, 152 mm or any other radius that allows the system to function as described herein. Each of the inverted tooth sprockets 1418 includes a population of inverted teeth 1420 that are configured to engage with teeth 1416 of merge sprocket 1414, while a respective one of the webs from spools 1402, 1404, and 1406 is located therebetween, to facilitate maintaining proper positioning and tension of the webs from spools of electrode material 1402, 1404, 1406 during the unwind procedure. In one suitable embodiment, the merge sprocket 1414 is driven by a motor and its speed is controlled to ensure proper tensioning of the webs from spools of electrode material 1402, 1404, 1406. In another embodiment, merge sprocket 1414 freely rotates and the speed of spools of electrode material 1402, 1404 and 1406 are controlled to ensure proper tensioning of the webs from spools of electrode material 1402, 1404, 1406. In one such embodiment, a loop sensor 1422, such as an optical sensor or physical sensor, determines an amount of sag (curvature) of the catenary curve 1412 which is then used to calculate the tension on the webs from spools of electrode material 1402, 1404, 1406. For example, if the sag is determined to be too large (i.e., too low of tension), the speed of merge sprocket 1414 is increased, or the speed of spools of electrode material 1402, 1404, 1406 is decreased in order to reduce the sag (i.e., increase the tension) to be within a predetermined range. Alternatively, if the sag is determined to be too little (i.e., too high of tension), the speed of merge sprocket 1414 is decreased or the speed of spools of electrode material 1402, 1404, 1406 is increased in order to increase the sag (i.e., decrease the tension) to be within a predetermined range. In one embodiment, the sag is targeted to control the angle α_{CL} at which the webs from spools of electrode material 1402, 1404, 1406 make contact the merge sprocket 1414. In one such embodiment, α_{CL} is from 0° to 90° measured in a counterclockwise direction from vertical, for example in embodiments α_{CL} is 0°, 5°, 10°, 15°, 20°, 25°, 30°, 35°, 40°, 45°, 50°, 55°, 60°, 65°, 70°, 75°, 80°, 85° or 90°. In another embodiment, α_{CL} is controlled to be within +/- 5 degrees from the vacuum tensioner 1442. In the embodiment shown in Fig. 14H, view (i), α_{CL} may be indicated using clock positions, where 12:00 refers to the top vertical position, and each hour in the clockwise direction refers to a movement of 30 degrees. Accordingly, in the embodiment shown in Fig. 14H, view (i), webs from spools 1402, 1404, 1406 make contact the merge sprocket 1414 at the 10:30 position on the merge sprocket 1414, and the brushes 1440 are positioned at the 11:00 position.

After the webs of electrode material from spools 1402, 1404, 1406 are unwound onto the inverted tooth sprocket 1418, each web is then guided and transferred onto pin plate 1424 at transfer location 1426. In one embodiment, tension on the webs of electrode material from spools 1402, 1404, 1406 are controlled such that each web is transferred onto pin plate 1424 at the 6 o'clock position (e.g., vertically downward). The pin plate 1424 includes a series of pins 1428 that are sized and shaped to precisely engage with tractor holes 612 of the webs of electrode material from spools 1402, 1404, 1406 and also the inverted teeth 1420 of inverted tooth sprocket 1418. Accordingly, each of the webs of electrode material from spools 1402, 1404, 1406 is sandwiched between the pin plate 1424 and the inverted tooth sprocket 1418 as it is transferred onto pin plate 1424, while the pins 1428 extend through the tractor holes 612 and into inverted teeth 1420 to facilitate alignment of the web of electrode material from spools 1402, 1404, 1406 onto pin plate 1424.

In one embodiment, the inverted tooth sprocket 1418 is positioned at a suitable height above the pin plate 1424 in the Z-direction, such as from 1 micrometer to 10 millimeters to allow the web to float above the pin plate 1424 before being transferred thereon. In this regard "float" refers to the web having a portion that is not in contact with either the inverted tooth sprocket 1418 or the pin plate 1424, such that the web has some slack which facilitates self-alignment of tractor holes 612 to pins 1428. In embodiments, the height of inverted tooth sprocket 1418 above the pin plate 1424 may be adjustable automatically or manually in order to ensure self-alignment of the tractor holes 612 to pins 1428. The height of inverted tooth sprocket 1418 over pin plate 1424 may also vary depending on which of the webs of electrode material from spools 1402, 1404, 1406 is being transferred to pin plate 1424.

In one embodiment, a nip (i.e., gap) is formed between the inverted tooth sprockets 1418 and the pin plate 1424 such that the web of electrode material from spools 1402, 1404, 1406 has sufficient room to freely float between the inverted tooth sprockets 1418 and the pin plate 1424. In one embodiment, the inverted tooth sprocket 1418 is positioned at a suitable height above the pin plate 1424 in the Z-direction to create a gap of from 1 micrometer to 10 millimeters to allow the web to float above the pin plate 1424 before being transferred thereon. In this regard "float" refers to the web having a portion that is not in contact with either the inverted tooth sprocket 1418 or the pin plate 1424, such that the web has some slack which facilitates self-alignment of tractor holes 612 to pins 1428. In embodiments, the height of inverted tooth sprocket 1418 above the pin plate 1424 may be adjustable automatically or manually in order to ensure self-alignment of the tractor holes 612 to pins 1428. The height of inverted tooth sprocket 1418 over pin plate 1424 may also vary depending on which of the webs of electrode material from spools 1402, 1404, 1406 is being transferred to pin plate 1424. In this embodiment, a small amount of possible misalignment of the respective web of electrode material from spools 1402, 1404, 1406 is reduced or eliminated by allowing the web of electrode material from spools 1402, 1404, 1406 to have a sufficient amount of float (i.e., web that is not in contact with either the inverted tooth sprocket 1418 or the pin plate 1424) to self-adjust and thus align the respective tractor holes 612 to the pin plate 1424. In one suitable embodiment, the slack is sufficient to form an S-shaped curve of the web of electrode material from spools 1402, 1404, 1406 between the inverted tooth sprocket 1418 and the pin plate 1424. It should be appreciated that as each layer of the web of electrode material from spools 1402, 1404, 1406 is placed on to the pin plate 1424, subsequent (i.e., downstream) nips formed between the inverted tooth sprockets 1418 and the pin plate 1424 will increase in size to account for the previous layers of web of electrode material from spools 1402, 1404, 1406 placed thereon. In one suitable embodiment, the nip distance increases by an amount equal to the thickness of the previous layer of web of electrode material from spools 1402, 1404, 1406 placed onto the pin plate 1424.

In one embodiment, as shown in Fig. 14A, there are four spools of the web of electrode material 1402, 1406, 1404, 1406. In this embodiment, the spools 1402, 1406, 1404, 1406 are located such that they may be sequentially unwound and merged onto the pin plate 1424. In this embodiment, the pin plate 1424 extends from pre-merge location 1430 located upstream of a first transfer location 1426. The pin plate 1424 extends to a downstream location past the last transfer location 1426X (Fig. 14A). In this embodiment, each of the four spools of the web of electrode material 1402, 1406A, 1404, 1406B has its own transfer location 1426, 1426A, 1426B and 1425X respectively. It should be appreciated that in other embodiments, additional spools of electrode material may be unwound and merged, and thus additional transfer locations for each additional spool may be included. A transfer location can be referred to as a "web merge location", in particular where the transfer location is at the point at which two webs are brought together or merged. A "web merge location" can also be distinct from the "transfer location", if the point at which two webs are brought together is not the point at which the web is transferred onto the pin plate.

With reference to Figs. 14A-C, individual layers of the webs of electrode material from spools 1402, 1406A, 1404, 1406B are merged (e.g., sequentially layered) to form merged material web 1432. Each layer of the webs of electrode material from spools 1402, 1406A, 1404, 1406B are merged such that each layer of merged material web is vertically aligned, for example such that one or more of a longitudinal axis A_{E} (Fig. 7) of each electrode pattern, tractor holes 612, fiducial features 602 and lengthwise edge cuts 600, and perforations 608, 610 (Fig. 6) of the electrode patterns of each layer are aligned in both the web direction and cross-web direction XWD. Variation in alignment of the webs may cause defects in later operations, such as punching and stacking, and thus maintaining alignment of the webs from spools 1402, 1406A, 1404, 1406B as they are merged is critical in some embodiments. It is noted that spools of separator material 1406A and 1406B may be the same or different separator material. As used herein, when describing spools of webs of separator material generally, 1406A and 1406B may be generally referred to as spools of web of separator material 1406.

Each layer of the merged material web 1432 has been transferred sequentially, layer by layer, as described in the process above to be vertically aligned. That is, the initial layer in this embodiment, comprised of web of separator material from spool 1406, is transferred to the pin plate 1424 at transfer location 1426. Subsequently, at transfer location 1426A which is located downstream of transfer location 1426, web of cathode material from spool 1402 is transferred atop of the web of separator material from spool 1406. "Downstream" can take its normal technical meaning in the context of this disclosure, and may refer to the direction of travel of the web of material. That is, location 1426A is downstream of location 1426 because the web of material is travelling in the direction from location 1426 towards location 1426A..

Next, a second layer of separator material from spool 1406 (via a separate spool) is transferred atop of the layer of separator material from spool 1406 at transfer location 1426B, which is downstream of transfer location 1426A. In this embodiment, a layer of anode material web from spool 1404 is transferred atop the second layer of separator material web from spool 1406 at transfer location 1426X. Once all four layers have been stacked, or merged, the four layer laminate web is referred to as merged material web 1432. During the transfer of each layer onto pin plate 1424, the target down-web tension on each layer of merged material web 1432 is zero. In one embodiment, the down-web tension on each layer of merged material web 1432 is determined by the mass of the web from each spool 1402, 1404, 1406, respectively, and the amount of sag of such web between merge sprocket 1414 and the pins 1428 of pin plate 1424.

During the transfer of each layer, it should be appreciated that the pins 1428 of pin plate 1424 are sized to extend through each layer of material and into inverted teeth 1420 of inverted tooth sprocket 1418 to maintain alignment of each layer with respect to one another. At each of the transfer locations, a nip (i.e., gap) is formed at transfer location 1426 between the respective inverted tooth sprocket 1418 and pin plate 1424, which is set to a fixed gap distance of from 100 to 1000 um over the web. In one embodiment, the nip is set to approximately 3 times the thickness of the web. For example, if the thickness of the web in the Z-direction is 100 microns, the nip gap will be approximately 300 microns in the Z-direction. It should be appreciated that the actual gap distance between the respective inverted tooth sprocket 1418 and pin plate 1424 is increased at each downstream transfer location 1426 to account for the added thickness of each previous layer that has been transferred onto the pin plate 1424. In one embodiment, the increase in gap distance at each subsequent downstream transfer location is approximately equivalent to the height of the added layer in the Z-direction. In one embodiment, the nip gap is about three times the height of the merged material web at the respective transfer location 1426. As shown in Fig. 14E, the pins 1428 of pin plate 1424 may have a constant cross-sectional area in the Z-direction as shown in the upper figure of Fig. 14E, or may taper to have a larger cross-sectional area proximal to the pin plate 1424 in the Z-direction. In embodiments where pins 1428 have such a taper, the merged material web desirably rests above the pin plate 1424, approximately midway up the pins 1428 in the Z-direction. It should also be appreciated that in other embodiments, the ordering of layers may be different depending on the desired outcome, and accordingly, the positioning of each of the spools 1402, 1404, 1406 may be placed at the corresponding transfer location to facilitate proper layering of the webs from spools of electrode material 1402, 1404 and 1406. It should also be appreciated that additional spools of electrode material may be included, and a corresponding number of transfer locations may be used to facilitate layering of the additional webs from the additional spools.

A cross sectional view 1500 of one embodiment of merged material web 1432 is shown in Fig. 15. In this embodiment, the merged material web 1432 comprises anode current collector layer 506 in the center, anodically active material layer 508, separator 500, cathodically active material layer 512 and cathode current collector layer 510 in a stacked formation. Additional layers may be merged, by alternating layers of webs from spools of anode 1404, separator 1406, and cathode 1402 to form the desired number of layers for merged material web 1432. In one embodiment, the spools of anode 1404, separator 1406, and cathode 1402 may be rolls of electrodes140, as described above.

In some embodiments, the pin plate 1424 includes a population of individual separate pin plates (each similar to pin plate 1424) that each are abutted and indexed to one another to form a continuous stream of pin plates. In this embodiment, it is important that the individual pin plates be precisely positioned with respect to one another, such that proper registration of the layers of merged material web 1432 is maintained as each of the layers are transferred onto the pin plates. Accordingly, in some embodiments, each pin plate 1424 may be held by a jig or other alignment device, such as a pin, magnet, protrusion or the like to maintain proper registration of the pin plates 1424. The pin plates 1424 are conveyed in the web direction via a conveyor mechanism 1436, which is controlled to travel at the same speed as inverted tooth sprocket 1418, such that the layers of merged material web 1432 are properly aligned to the pins 1428 of pin plates 1424. In one embodiment, the engagement of pins 1428 with inverted teeth 1420 are what propel pin plates 1424 in the down-web direction WD. Accordingly, in such embodiment, proper speed is maintained between pin plates 1424 and inverted tooth sprocket 1418.

In one embodiment, at one or more of transfer locations 1426, 1426A-X, an electrode defect sensor 1434 is positioned such that the web of electrode material from spools 1402, 1404 and 1406 pass adjacent to the defect sensor 1434. It is noted that as used herein, 1426X is used to refer to any number of additional transfer locations as described herein. The defect sensor 1434 is configured to detect defects in the web of electrode material from spools1402, 1404 and 1406. For example, defect sensor 1434 may be configured to detect missing electrodes from the web, misaligned or missing tractor holes 612, fiducial features 602, ablations, cuts, perforations or other weakened areas in the web of electrode material from spools 1402, 1404 and 1406. In the event the defect sensor 1434 detects a defect in the web of electrode material from spools 1402, 1404 and 1406, the web may be marked using a marking device collocated with the defect sensor 1434 to indicate the defect. The marking of the defect may be used in subsequent process steps to ensure that the defective portion of the web of electrode material from spools 1402, 1404 and 1406 is not used in the stacking phase, further described below, or is otherwise disposed of prior to becoming part of a stacked cell 1704.

With reference to Fig. 14D, one embodiment of the manufacturing system includes an electrode material tensioning section 1438 configured to flatten the web of electrode material from spools 1402, 1404 and 1406 prior to entering the transfer location 1426. In some instances, the web of electrode material from spools 1402, 1404 and 1406 may tend to curl, or cup, such that the web has a U-shape. It is speculated that the curl may be caused by a weakening of the web structure due to lengthwise edge cuts 600, which cause the center portion of the web to sag. In addition, electrical, or static electrical charge buildup along the longitudinal edges of the web of electrode material from spools 1402, 1404 and 1406 may cause such edges to curl inwardly. If the web of electrode material from spools 1402, 1404 and 1406 has such a curl, the position of the tractor holes 612, and the spacing between opposing tractor holes 612 will not be aligned to the merge sprocket 1414.

Accordingly, in order to remediate the curl, the tensioning section 1438 may include at least one of counter rotating brushes 1440 (Figs. 14D, 14F, 14G, 14H) and a vacuum tensioner 1442. In one embodiment, the counter rotating brushes 1440 are driven by an electric motor (not shown) in opposing directions Wb in the cross-web direction XWD. In one embodiment the counter-rotating brushes have an outer diameter D_{b} of from 25 mm to 150 mm and an inner diameter Da of from 10 mm to 50 mm. The counter rotating brushes, in one embodiment, have a central through-bore 1441 having a diameter of from 5 mm to 25 mm, the center of which defines the axis upon which the counter rotating brushes 1440 rotate about. Each of the counter rotating brushes 1440 have a thickness T_{B} of from 2 mm to 20 mm. The counter rotating brushes include a plurality of bristles 1443 which may be made of natural or synthetic materials, such as animal hair, nylon, carbon fiber, high density polyethylene, high temperature nylon, PEEK, polyester, polyethylene, polypropylene, polystyrene, polyvinylchloride, metals, metal alloys, plastic, and the like. In a preferred embodiment, the bristles 1443 are made from nylon. The bristle material should be suitably selected to allow the brushes to function as described herein without causing abrasive or other damage to the web. The counter rotating brushes 1440 are adjustably positioned adjacent flatten the web of electrode material 1402, 1404 and 1406, such that the counter rotating brushes 1440 contact the web at a brush pitch angle α_{bp} (Fig. 14G) with sufficient pressure to uncurl and flatten the longitudinal edges of the web of electrode material from spools 1402, 1404 and 1406 prior to engaging with merge sprocket 1414. In some embodiments, the rotational speed and contact pressure of the counter rotating brushes 1440 can be monitored and adjusted to ensure a sufficient flatness of the web of electrode material from spools 1402, 1404 and 1406 is obtained. In one embodiment, for example as shown in Fig. 14H, view (ii), the brush speed is referenced as a velocity vector Vbs having a velocity component V_{b} in the cross-web direction XWD and a velocity component Vs in the down web direction WD. In embodiments, the velocity component V_{b} may be set (such as by adjusting the rotational speed (e.g., rpm) of the brush), to between from 50 mm/sec to 250 mm/sec, such as 50 mm/sec, 60 mm/sec, 70 mm/sec, 80 mm/sec, 90 mm/sec, 100 mm/sec, 110 mm/sec, 120 mm/sec, 130 mm/sec, 140 mm/sec, 150 mm/sec, 160 mm/sec, 170 mm/sec, 180 mm/sec, 190 mm/sec, 200 mm/sec, 210 mm/sec, 220 mm/sec, 230 mm/sec, 240 mm/sec or 250 mm/sec or any velocity therein. In embodiments, the velocity component Vₛ may be set (such as by adjusting the speed of the web in the Web direction WD) from 10 mm/sec to 100 mm/sec, such as 10mm/sec, 20 mm/sec, 30 mm/sec, 40 mm/sec, 50 mm/sec, 60 mm/sec, 70 mm/sec, 80 mm/sec, 90 mm/sec, 100 mm/sec or any velocity therein. Accordingly, the brush tip speed across the web may be calculated as V_{bs} = sqrt(V_{b}²+Vₛ²). In some embodiments, Vbs may be within the range of from 51 mm/sec to 270 mm/sec.

In one embodiment, the tensioning section includes a deionizer device 1447 configured to reduce or eliminate the static electrical charge on the web of electrode material from spools 1402, 1404 and 1406. In such embodiment, the deionizer device 1447 is placed upstream, just prior to, the vacuum tensioner 1442 and counter rotating brushes 1440. The deionizer device 1447 is configured to neutralize an electrical charge of components, such as the vacuum tensioner 1442, which may be formed from plastic pipe, such as PVC, in some embodiments. For example, if a deionizer is not used, when the separator material from spool 1406 passes over the vacuum tensioner, or when small particles are carried by airflow through the vacuum tensioner, it may build up a static electrical charge on the vacuum tensioner 1442. Accordingly, the deionizer device 1447 may be used to neutralize the electrical charge on the vacuum tensioner 1442, thus allowing the web of electrode material from spools 1402, 1404 and 1406 to pass thereby without being electrically attracted to the vacuum tensioner 1442. It should be noted that although the deionizer device has been described with respect to vacuum tensioner 1442, one or more deionizer devices 1447 may be used on any component within the system that is affected by electrical charge and benefits from charge neutralization, such as any component that is in contact with or close proximity to webs of electrode material from spools 1402, 1404 and 1406. In some embodiments, the deionizer device 1447 is a DC ionizing bar. In some embodiments, the deionizer device 1447 is capable of pulsed DC ionization for short range applications, such as from 20 mm to 200 mm. In some embodiments, the frequency of the pulses may be controlled, automatically, or by a user, to be set from 1 Hz to 20 Hz in order to adjust the effect of the deionizer device 1447 on the affected component. In some embodiments, the deionizer device 1447 is configured with metal pins, such as titanium pins or the like, that are used as ionizer emitters. Such pins may have an output of from -3kV to +7.5kV in pulsed DC mode, which facilitates allowing positive to negative charged ion ratios of from 80:20 to 20:80. Accordingly, the deionizer device 1447 In other embodiments the order of the deionizer device 1447, vacuum tensioner 1442 and counter rotating brushes 1440 may vary. In another embodiment, electrical charge buildup may be prevented by grounding the affected component. In this embodiment, a grounding strap or grounding wire (not shown) is electrically connected to the affected device, such as vacuum tensioner 1442, to prevent electrical charge buildup by providing the electrical charge to have a path to ground. In yet another embodiment, electrical charge buildup of components may be prevented by coating the affected device with a conductive coating to prevent charge buildup.

In one suitable embodiment, the rotational speed of the counter rotating brushes 1440 is kept sufficiently low to reduce or eliminate excessive wear or heat build-up caused by the friction of counter rotating brushes 1440 in contact with the web of electrode material 1402, 1404 and 1406. In one embodiment, the counter rotating brushes 1440 are configured to smooth or otherwise reduce wrinkles present in the web of electrode material from spools 1402, 1404 and 1406. In one embodiment, the counter rotating brushes 1440 are configured to reduce or eliminate micro-wrinkles in the web of electrode material 1402, 1404 and 1406. In such embodiment, the micro-wrinkles are wrinkles in the web that are too small to be removed by the deionizer 1447 or the vacuum tensioner 1442. In one such embodiment, the micro-wrinkles are defined as wrinkles that are approximately twenty percent the magnitude of macro-wrinkles that are removed by the deionizer 1447 or the vacuum tensioner 1442. In one suitable example, if a macro-level wrinkle is approximately 100mm in magnitude in the Z-direction, micro-wrinkles will have a magnitude of 20mm or less in the Z-direction. In other embodiments, macro-wrinkles may have a magnitude of between 1 mm to 250 mm and micro-wrinkles may have a magnitude of from 0.2 mm to about 50 mm.

In another embodiment, in addition to or alternative to the counter rotating brushes 1440, the material tensioning section 1438 includes a vacuum tensioner 1442, which includes a plurality of vacuum orifices 1444 located on a surface of the vacuum tensioner 1442 adjacent to the web of electrode material from spools 1402, 1404 and 1406. In this embodiment, a vacuum is pulled through the vacuum tensioner 1442, which creates a suction through vacuum orifices 1444. The vacuum tensioner 1442 is positioned at an angle α_{vac} (Fig. 14G) with respect to the vertical direction. The suction from vacuum orifices 1444 creates a fluid flow (typically air flow) across the surface of the web of electrode material from spool 1402 facing the vacuum orifices 1444. Because the fluid flow is faster across the surface of the web of electrode material from spools 1402, 1404, 1406 facing the vacuum orifices1444 than on the opposing side of the web of electrode material from spools 1402, 1404, 1406 the effect (i.e., Bernoulli effect) pulls the web of electrode material from spools 1402, 1404 and 1406 taught against the vacuum tensioner 1442, and facilitates alignment of the tractor holes 612 with the teeth 1416 of merge sprocket 1414.

With further reference to Figure 14B, in one suitable embodiment, the teeth 1416 of merge sprocket 1414 are tapered in a manner that facilitates the outer edges of the tractor holes 612, in the cross web direction XWD, being pulled apart as the tractor holes 612 are seated onto the teeth 1416. For example, the teeth 1416 may be tapered to have a larger cross section at a proximal end (proximal to a center of merge sprocket 1414) and continuously vary in cross-section, to a smaller cross section in a distal direction (i.e., distal to the center of merge sprocket 1414). Accordingly, the taper of the teeth 1416 applies a sufficient cross-web tension on the web of electrode material from spools 1402, 1404 and 1406 to eliminate the sag and curl of the web in the cross web direction XWD. In this embodiment, the vacuum orifices 1444 of the vacuum tensioner 1442 are only located at or near a merge point of the web of electrode material 1402, 1404 and 1406 to the teeth 1416 of merge sprocket 1414, because after that point the web of electrode material 1402, 1404 and 1406 is seated against the merge sprocket 1414 via the tension applied to the web of electrode material from spools 1402, 1404 and 1406 by the taper of teeth 1416.

In one embodiment, the counter rotating brushes 1440 are located, in a downstream location in the web direction WD of vacuum tensioner 1442. However, in other embodiments, counter rotating brushes are co-located with, or upstream of, vacuum tensioner 1442. In one embodiment, each of the transfer locations 1426, 1426A-X, include counter rotating brushes 1440 and a vacuum tensioner. In another embodiment, only transfer stations that transfer web of separator material include the counter rotating brushes 1440, but all transfer stations include a vacuum tensioner 1442.

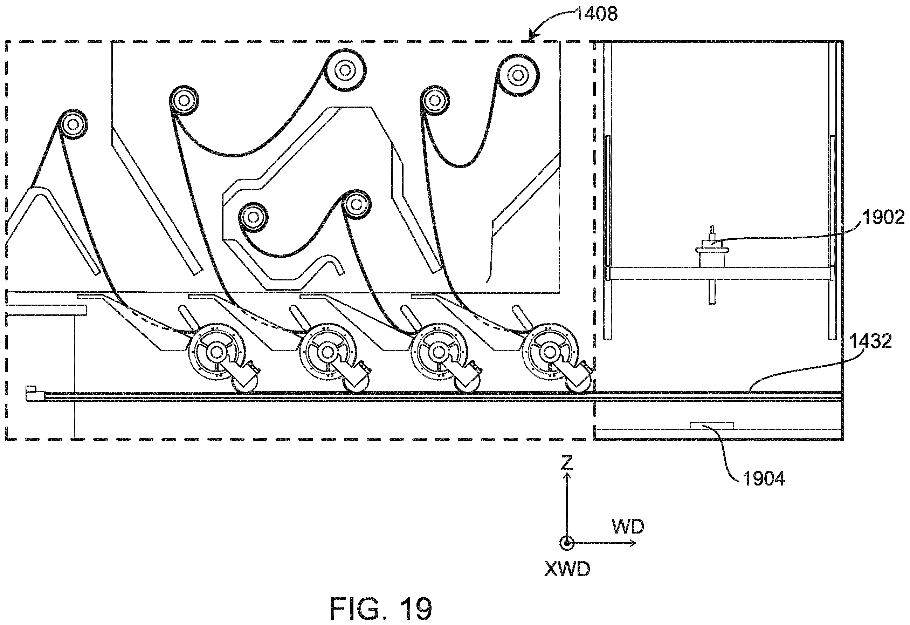

With reference to Fig. 19, in one embodiment, an alignment feature detection system 1900 is positioned downstream of the merging zone 1408. In embodiments, alignment of the layers of the merged material web are within 1 mm, when measured from a centerpoint of the layers in each of the web direction WD and cross web direction XWD. The alignment feature detection system 1900 includes an optical sensor 1902 and a back-light 1904. The optical sensor may be a digital camera or other light sensitive device capable of allowing the device to function as described herein. In this embodiment, the optical sensor 1902 is positioned such that it captures light from back-light 1904 after such light has passed through merged material web 1432, such that a silhouette of the merged material web 1432 is captured by the optical sensor 1902. The silhouette of the merged material web 1432 is analyzed by the optical sensor 1902 to accurately locate fiducial features 602. The location of fiducial features 602, as located by optical sensor 1902 may be stored by user interface 116 (Fig. 1), and used to ensure that the merged material web 1432 is precisely positioned for subsequent processing. Accordingly, the precise positioning means that each layer of merged material web is vertically aligned, for example such that a longitudinal axis A_{E} (Fig. 7) of each electrode pattern, tractor holes 612, fiducial features 602 and edges (lengthwise edge cuts 600, perforations 608, 610) (Fig. 6) of the electrode patterns of each layer are aligned in both the web direction and cross-web direction XWD. In one embodiment, as further described below, the location, fiducial features 602, as located by optical sensor 1902 are used to control the position of the receiving unit(s) 2010 and alignment pins 2012 to align with the fiducial features 602. Accordingly, it is important that the fiducial features of each layer are in alignment. In one embodiment, the receiving unit 2010 is controlled to align a center of the alignment pins to within +/- 10 um to 50 um of a center of the fiducial features 602 in the web-direction WD. In another embodiment, the receiving unit 2010 is controller such that the center of the alignment pins 2012 are controlled to align with the fiducial features 602 in the cross-web direction XWD to within +/- 10 um to 50 um.

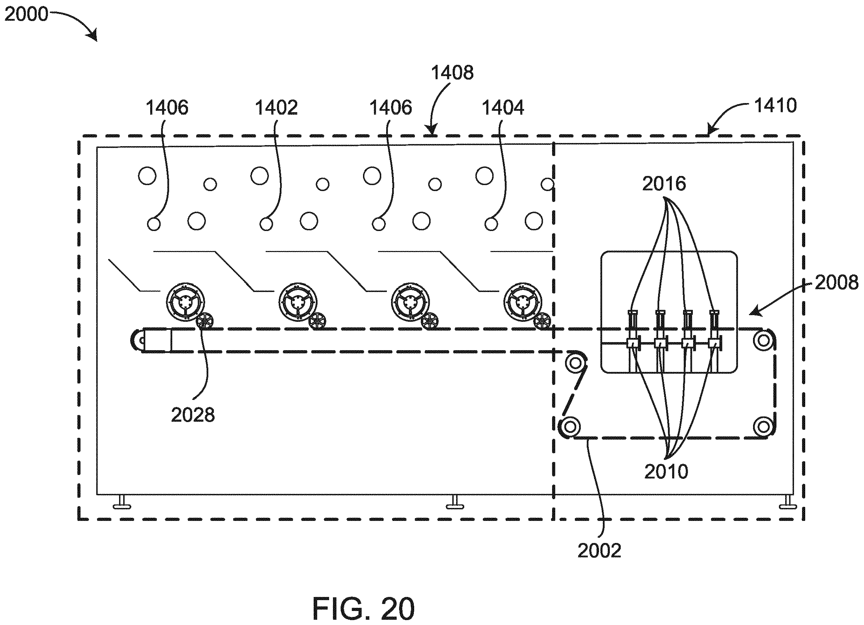

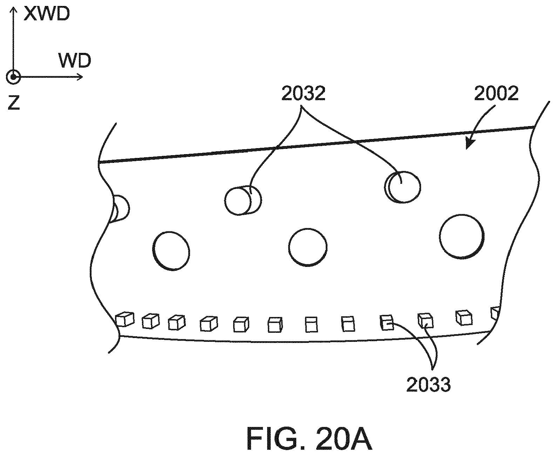

With reference to Figures 20 and 20A, in one embodiment, a high volume stacking system 2000 is used. In this embodiment, the merging zone 1408 is similar to that as described above. However, in this embodiment, a toothed belt 2002 (denoted by the dashed line) is utilized. In one embodiment, the toothed belt 2002 comprises stainless steel and includes a population of conveying teeth 2033 (Fig. 20A) that are sized, shaped and positioned to engage one or more of the tractor holes 612 or fiducial features 602 of the web of electrode material from spools 1402, 1404 and 1406, and subsequently merged material web 1432. The tractor holes 612 and the fiducial features 602 of the web may be referred to as "conveying features", as they are the features which the conveying teeth engage with. Conveying features can take their normal technical meaning in the context of this disclosure, and may also be referred to as projections. In this way, the toothed belt may be considered to comprise a plurality of projections, which engage with the conveying features of the respective webs of electrode material. The toothed belt 2002 is configured to be operated in an endless configuration through the merging zone 1408 and a stacking and punching zone 2004. The toothed belt 2002 is conveyed using one or more synchronization sprockets 2006 that engage a drive portion of the toothed belt 2002 to control its speed, which is synchronized to the processes within merging zone 1408, described above.

With further reference to Fig. 20, the high volume stacking system includes an automated jig loading assembly 2008 within the punching and stacking zone 1410. The automated jig loading assembly includes one or more receiving unit 2010. In the embodiment shown in Fig. 20, there are four receiving unit 2010 aligned sequentially along the path of the toothed belt 2002. In one embodiment, each of the receiving units 2010 are driven by the same actuating device to create simultaneous motion of all receiving units 2010, which may be a cam, the drives the motion of the receiving unit 2010. In other embodiments, each of the receiving unit 2010 may be independently controlled or driven.

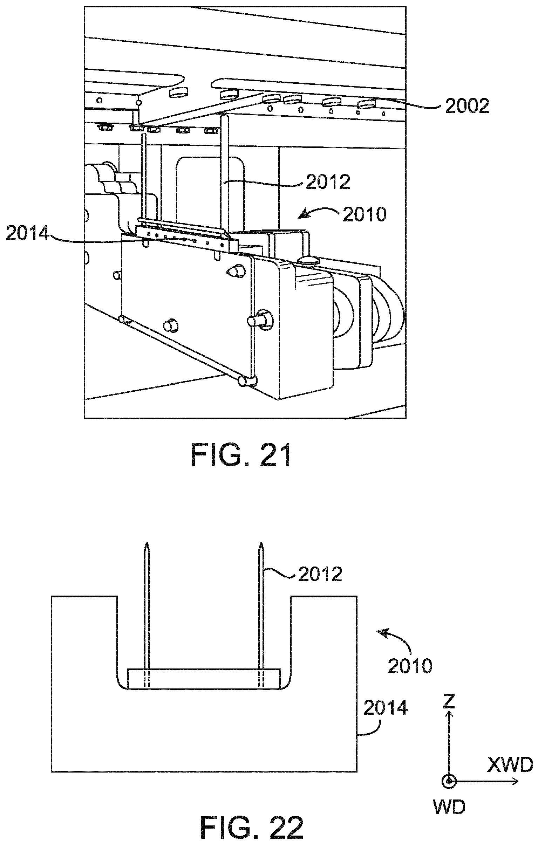

With reference to Figs. 21 and 22, each receiving unit 2010 comprises one or more alignment pins 2012 extending from a receiver base 2014. The alignment pins 2012 are configured to engage with one or more of the fiducial features 602 or tractor holes 612. Each receiving unit 2010 may be coupled to a 2-axis motion control device, such as a servo, motor or the like that allows the receiving unit 2010 to move in the cross-web direction XWD as well as the down web direction WD. In one embodiment, the motion control device is controlled based upon the location of fiducial features 602, as located by optical sensor 1902. In this embodiment, the location of fiducial features 602 is used to control the motion control device to position the receiving unit 2010 such that its alignment pins 2012 are properly positioned to pass through the corresponding fiducial features 602 of the merged material web 1432. The motion control device will be controlled to properly position the receiving unit 2010 for each punching operation performed in the punching and stacking zone 1410, as further described below.

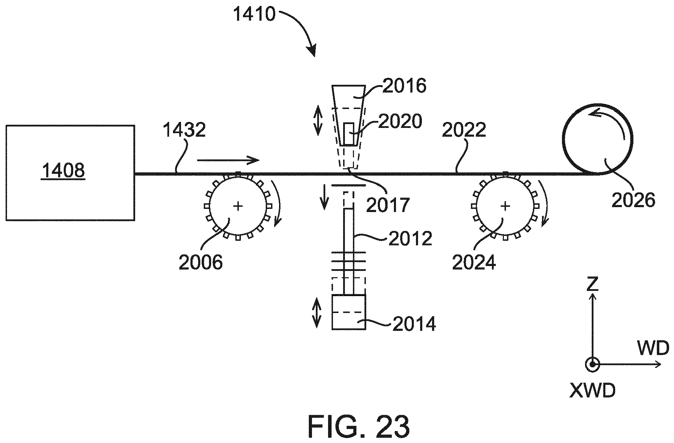

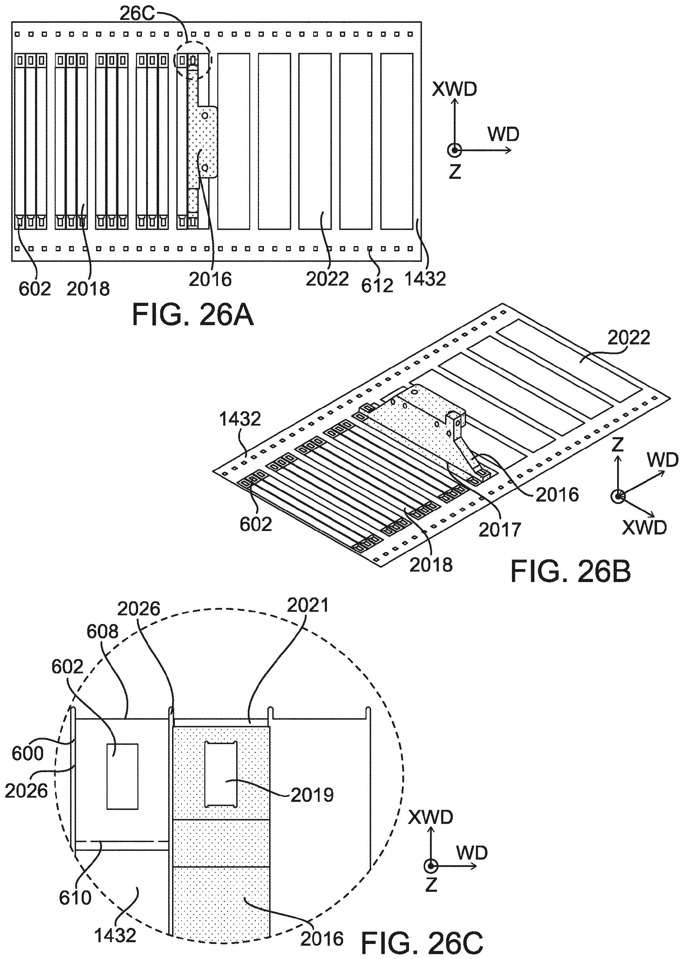

With additional reference to Figs. 23 and 26A-C, the punching and stacking operations are described. In this embodiment, the merged material web 1432 is conveyed from the merging zone 1408 to the punching and stacking zone 1410. The merged material web 1432 passes under a punch head 2016 and over the receiving unit 2010 as it is conveyed by toothed belt 2002, which is conveyed by one or more of the synchronization sprockets 2006. In one embodiment, the punch head 2016 is controlled to move in the Z direction (e.g., vertically) in an up-and-down motion, as indicated by the double-headed arrow. In one embodiment, the receiving unit 2010 is controlled to move in the Z direction (e.g., vertically) in an up-and-down motion, as indicated by the double-headed arrow.

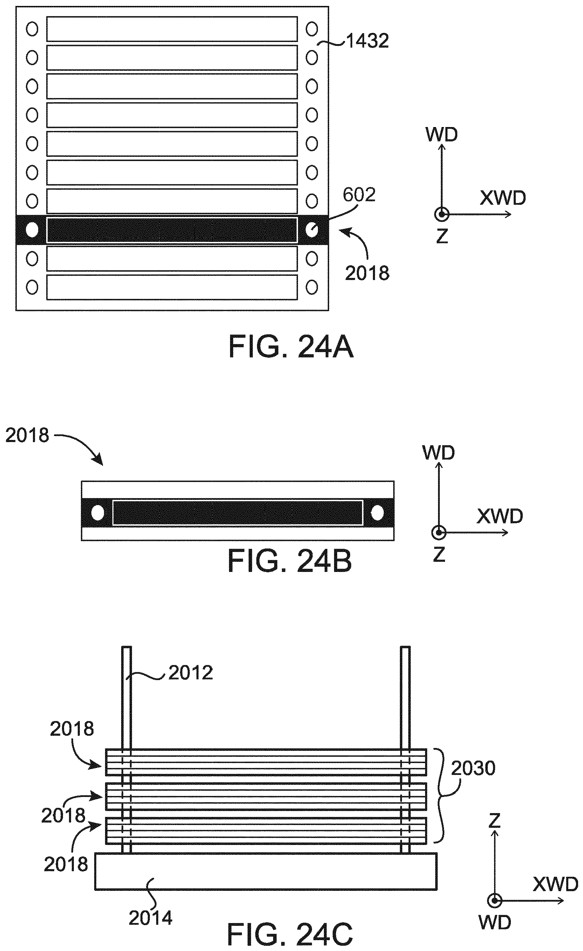

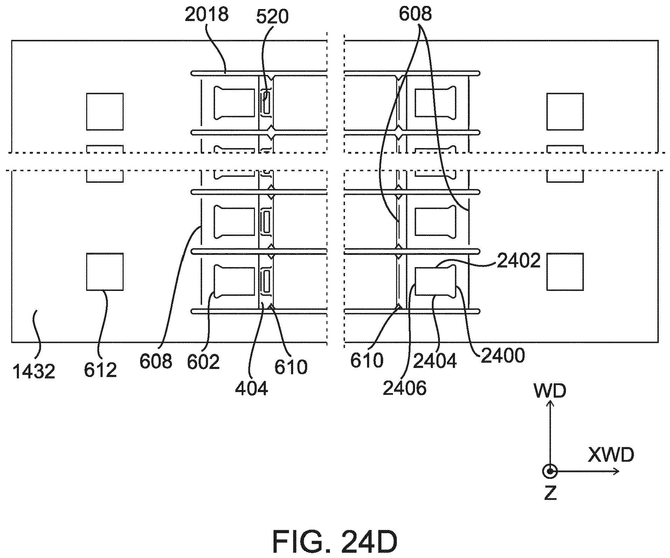

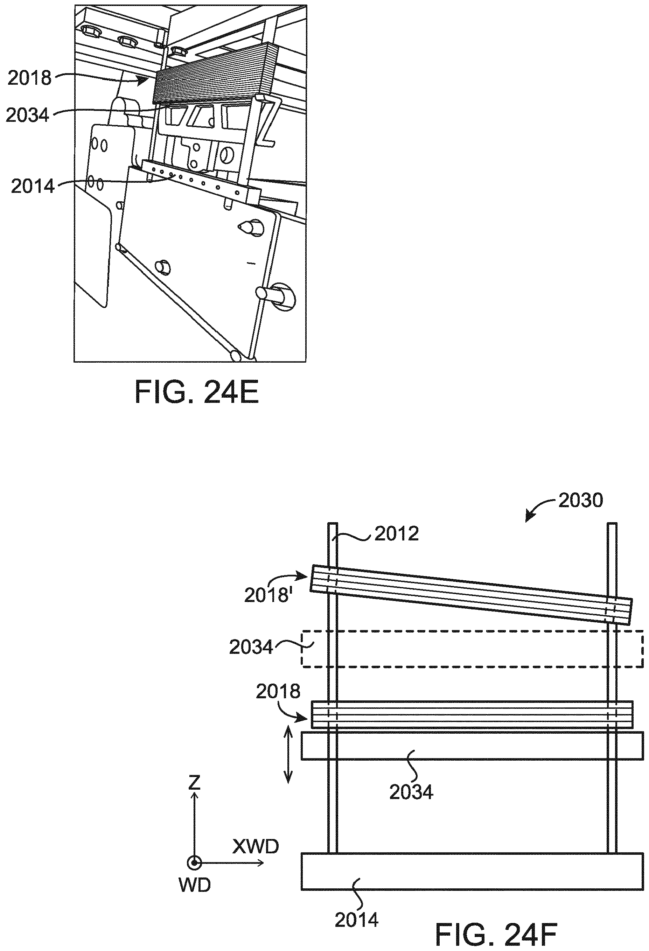

With reference to Figs. 24A-C, in one embodiment, each receiving unit 2010 has a single pair of alignment pins 2012, as described above that are sized and spaced to correspond with the fiducial features 602 of each electrode sub-unit 2018. In one embodiment, the alignment pins 2012 are configured to engage only a portion of the inner perimeter of the fiducial features 602. For example, in one embodiment the fiducial features 602 have a substantially rectangular inner perimeter, and the alignment pins 2012 are configured to contact only the outer edge 2400, down-web edge 2402 and up-web edge 2404, but not the inside edge 2406 (Fig. 24D) of fiducial features 602. During a single punching operation, a single electrode sub-unit 2018 is punched and loaded onto the receiving unit 2010. In another embodiment, the alignment pins 2012 and fiducial features 602 are correspondingly sized and positioned such that there is a clearance between the alignment pins 2012 and all edges (outer edge 2400, down-web edge 2402, up-web edge 2404, and inside edge 2406) of the fiducial features 602. In this embodiment, there may be a clearance of about 50 micrometers between the alignment pin 2012 and each of outer edge 2400, down-web edge 2402, up-web edge 2404, and inside edge 2406. In other embodiments, the clearance between the alignment pin 2012 and each of outer edge 2400, down-web edge 2402, up-web edge 2404, and inside edge 2406 may be within a range of from 0 to 2000 micrometers, such as 0 micrometers, 50 micrometers, 100 micrometers, 150 micrometers, 200 micrometers, 250 micrometers, 300 micrometers, 350 micrometers, 400 micrometers, 450 micrometers, 500 micrometers, 550 micrometers, 600 micrometers, 650 micrometers, 700 micrometers, 750 micrometers, 800 micrometers, 850 micrometers, 900 micrometers, 950 micrometers, 1000 micrometers, 1050 micrometers, 1100 micrometers, 1150 micrometers, 1200 micrometers, 1250 micrometers, 1300 micrometers, 1350 micrometers, 1400 micrometers, 1450 micrometers, 1500 micrometers, 1550 micrometers, 1600 micrometers, 1650 micrometers, 1700 micrometers, 1750 micrometers, 1800 micrometers, 1850 micrometers, 1900 micrometers, 1950 micrometers and 200 micrometers. In one embodiment, the clearance between the alignment pin 2012 and down-web edge 2402 and up-web edge 2404 are each within the range of from 50 micrometers to 2000 micrometers. In yet other embodiments, the clearance between the alignment pin 2012 and each of outer edge 2400, down-web edge 2402, up-web edge 2404, and inside edge 2406 may be the same or different clearances to allow the system to function as described herein.

As shown in Fig. 24E, the receiving unit 2010 may include a movable platform 2034 that moves in the Z-direction and maintains a Z-direction force in the direction toward the punch head 2016. The movable platform 2034 is controlled to move in close proximity to merged material web 1432 during the punching process to prevent uneven shifting of the electrode sub-unit, as shown at 2018' as the electrode sub-unit 2018 is separated from the merged material web 1432. It should also be appreciated that any misalignment of the layers of an electrode sub-unit 2018, for example if the fiducial features 602 of each layer are not precisely aligned in the web direction WD and cross web direction XWD (e.g., causing a reduced cross sectional area), it may create additional friction on alignment pins 2012 causing uneven shifting of the electrode sub-unit, as shown at 2018'. In one embodiment, the movable platform 2034 is controlled to contact the electrode sub-unit 2018 of merged material web 1432 (e.g., zero clearance). In other embodiments, the movable platform 2034 is controlled to come within a range of from 0 to 1000 micrometers of merged material web 1432, for example, 0 micrometers, 50 micrometers, 100 micrometers, 150 micrometers, 200 micrometers, 250 micrometers, 300 micrometers, 350 micrometers, 400 micrometers, 450 micrometers, 500 micrometers, 550 micrometers, 600 micrometers, 650 micrometers, 700 micrometers, 750 micrometers, 800 micrometers, 850 micrometers, 900 micrometers, 950 micrometers or 1000 micrometers. In one embodiment, the movable platform 2034 is attached to a ball-bearing slide mechanism allowing movement in the Z-direction. In one embodiment, the movable platform 2034 may be coupled to a gear drive mechanism that is driven by a stepper motor that is activated to move just prior to each punching operation and/or just subsequent to each punching operation.

In embodiments, the punch head 2016 is made of a metal or metal alloy, such as stainless steel, aluminum, titanium, steel, other metals and alloys thereof. In other embodiments, the punch head 2016 may be made from any material that allows the system to function as described herein, such as plastics, carbon fiber, wood, and the like. The punch head should be of sufficient strength and stiffness that it does not deform as it applies the force to the electrode sub-unit 2018. With reference to Figs. 26A-C, in one embodiment, the punch head 2016 has a punch face 2017 that is sized and shaped to substantially cover the entirety of a surface of the electrode sub-unit 2018 facing the punch face 2017. In one embodiment, punch face 2017 includes fiducial bores 2019 that are sized and shaped to be the same as, or substantially the same as fiducial features 602. Accordingly, the alignment pins 2012 may pass through the fiducial bores 2019 during the punching operations. In one embodiment, the punch head 2016 has a punch face 2017 that is sized in the cross-web direction to be slightly smaller than the electrode sub-unit 2018. For example, in one embodiment, the electrode sub-unit 2018 may have a portion 2023 that extends from 0 to 100 micrometers past distal end 2021 of punch face 2017 in the cross-web direction XWD, as shown for example in Fig. 26C. In one embodiment, the punch face 2017 may be slightly larger than the electrode sub-unit 2018 in the web direction WD, such that the punch face 2017 extends past the lengthwise edges 2026 into the lengthwise edge cuts 600 by from 0 to 100 micrometers in the web direction WD. In one embodiment, the punch face 2017 does not include any sharp cutting edges for cutting the electrode sub-unit 2018, which in some instances may cause contamination of the layers of the electrode sub-unit 2018. Rather, the punch face 2017 has blunt edges and separates the electrode sub-units 2018 from the web using a downward force to rupture perforations, as described herein.

In one embodiment, the punch head 2016 applies a Z-direction force to the electrode sub-unit 2018 which transmits such force to the movable platform 2034, which exerts an opposing force thereto (e.g., by controlling the stepper motor to create a holding torque). In one embodiment, these opposing forces cause a slight compression in the electrode sub-unit that facilitates overcoming the static friction between the alignment pins and the fiducial features 602 of the electrode sub-unit 2018, which facilitates maintaining parallelism of the electrode sub-unit 2018 with an ideal plane that is perpendicular to the alignment pins 2012. In one embodiment, the force exerted by the punch head 2016 to the movable platform 2034 causes the movable platform 2034 to move in the Z-direction a distance equal to the height of the electrode sub-unit 2018, thus rupturing the weakened region along the path formed by lengthwise edge cuts 600 and perforations 608, and thus ready to accept the next electrode sub-unit 2018. In another embodiment, the movable platform 2034 may be controlled to move away from the punch head 2016 in the Z-direction, for example by use of the stepper motor, a predetermined distance equal to the z-direction dimension of an electrode sub-unit 2018 after each electrode sub-unit 2018 has been punched by punch head 2016. The moveable platform 2034 thus facilitates maintaining the electrode sub-units perpendicular to the alignment pins 2012 during the punching operation.

As shown in Fig. 24C, for example, the merged material web 1432 may then advance to place an additional electrode sub-unit 2018 in position to be punched and stacked, and this process may continue until a predetermined number of electrode sub-units 2018 are loaded onto the receiving unit 2010. In the embodiment shown in Fig. 24 C there are three stacked electrode sub-units 2018, but it should be appreciated that any number of electrode sub-units may be stacked on receiving unit 2010. In embodiments, the number of electrode sub-units 2018 that are stacked may be in the range of from 1 to 300. In the present embodiment, each electrode sub-unit comprises four layers, but may comprise any number of layers in accordance with the present disclosure.

In one embodiment, prior to initiating a punching operation, the high volume stacking system 2000 verifies that there are no defects (as determined by the electrode defect sensor 1434) in an electrode sub-unit 2018, in the event a defect is detected, the system is controlled to avoid punching and stacking of the defective electrode sub-unit 2018. In one embodiment, where multiple receiving units 2010 and corresponding punch heads 2016 are used, if a defect is found on one of the electrode sub-units 2018, all of the receiving units 2010 and corresponding punch heads 2016 are controlled to skip the punching and stacking operation, and the merged material web 1432 is conveyed forward to a position such that all receiving units 2010 and corresponding punch heads 2016 are aligned under defect-free electrode sub-units 2018.

In one embodiment, in order to separate each of the electrode-sub units 2018 from the merged material web 1432, the punch head 2016 is moved in the Z-direction toward the merged material web 1432, for example to within about 0.15 mm to about 0.50 mm from the surface of the merged material web. The alignment pins 2012 of the receiving jig are controlled to move in the Z-direction toward the opposing surface of the merged material web 1432. Alignment of the alignment pins 2012 and punch head 2016 may be verified using optical sensor 1902. If it is determined that the alignment pins 2012 are not properly aligned with the punch head 2016, one or more of the punch head 2016, receiving unit 2010 or merged material web 1432 may be moved in the web direction WD until satisfactory alignment is achieved. In such embodiment, one or more of receiving unit 2010 and punch head 2016 may be configured for translation in the web direction via a motorized carriage assembly (not shown). Once satisfactory alignment of alignment pins 2012 and punch head 2016 are achieved, the receiving unit is moved in the Z-direction such that the alignment pins 2012 move through the fiducial features 602 and into corresponding punch head holes 2020 in the punch head 2016. In one embodiment, the alignment pins 2012 enter at least 2 mm into the punch head holes 2020. In one embodiment, the punch head holes 2020 are sized and shaped to closely match the outer diameter of the alignment pins 2012 to minimize any shifting or misalignment during the punching and stacking operation.

Next, the punch head 2016 is controlled to move in the Z-direction toward receiving unit 2010, for example at least 5 mm past the opposing surface of the merged material web 1432. As the punch head 2016 moves, the electrode sub-unit 2018 is separated from the merged material web 1432 along a weakened region forming an outer perimeter of the electrode sub-unit 2018. For example, the weakened region may comprise the path along lengthwise edge cuts 600 and perforations 608 (Fig. 6) of the electrode patterns of each layer. In such embodiments, the perforations 608 are ruptured, freeing the electrode sub-unit 2018 from the merged material web 1432. The web downstream of such punched-out electrode sub-units 2018 is referred to as spent web 2022. In one embodiment, layers of merged material web 1432 have been placed such that anode material 1404 is on top (i.e., to be contacted by punch head 2016). In another embodiment, layers of merged material web 1432 have been placed such that cathode material 1402 is on top (i.e., to be contacted by punch head 2016). In another embodiment, layers of merged material web 1432 have been placed such that separator material 1406 is on top (i.e., to be contacted by punch head 2016). In some embodiments, it is preferred that either the anode material 1404 or the cathode material 1402 is contacted by the punch head 2016 because they have higher mass than separator material 1406. Accordingly, in such embodiments, the anode material 1404 and cathode material 1402 are less likely to be pulled back up in the Z-direction away from merged material web 1432 when the punch head 2016 retracts after the punching operation. For example, in embodiments where the separator material 1406 is low-mass, it may under certain conditions be drawn up with the punch head 2016 as it retracts due to a vacuum effect. In such embodiments, it is thus desirable to have the merged material web 1432 have its top layer be either anode material 1404 or cathode material 1402 to avoid such effect.

After the electrode sub-unit has been separated from the merged material web 1432, the punch head 2016 moves in the Z direction away from the receiving unit 2010 and the receiving unit moves in the Z direction away from the punch head 2016. In one embodiment, both the punch head 2016 and the receiving unit 2010 both move simultaneously. In other embodiments, each of the punch head 2016 and the receiving unit 2010 are controlled to move sequentially. In one embodiment, each of the punch head 2016 and the receiving unit 2010 are moved to a distance of about 0.5 mm away from the respective surfaces of the merged material web 1432 in the Z-direction.

It should be appreciated that although Fig. 23 illustrates only a single punch head 2016 and receiving unit 2010, that in other embodiments a population of corresponding punch heads 2016 and receiving units 2010 may be used simultaneously to increase the number of electrode sub-units separated from the merged material web 1432 during a unit of time. For example, in one embodiment, such as that shown in Fig. 20, a series of four punch heads 2016 and receiving units 2010 are used. In yet other embodiments, there may be from 1 to 100 each of punch heads 2016 and receiving units 2010 running simultaneously. It is further noted that in some embodiments, the above punching and stacking operations are performed intermittently (i.e., while the merged material web is stopped). However, in other embodiments, the system may be configured such that the punching and stacking operations are continuous, such that the merged material web remains in motion in the web direction WD during the punching and stacking operations.

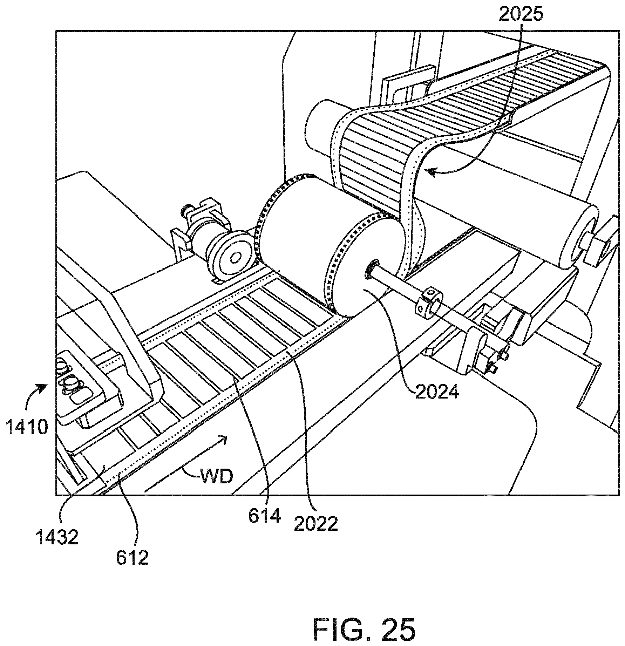

After the electrode sub-unit has been separated from the merged material web 1432, the downstream remaining web is referred to as spent web 2022, which is conveyed in the web direction WD using a de-merge sprocket 2024 (Fig. 25) that engages with the tractor holes 612 of the spent web 2022. For example, as shown in Fig. 25, the spent web 2022 includes the portion of the web having tractor holes 612 and tie bars 614. The spent web may also include any unpunched electrode sub units 2025 that were not punched due to a misalignment or other defect in one or more of the unpunched electrode sub-units 2025. In one embodiment, the spent web 2022 is rewound onto a spent web take-up roller 2026. The spent web 2022 is thus cleanly removed from the toothed belt 2002, which thus facilitates toothed belt 2002 to progress forward in the web-direction WD, in a continuous loop manner, to receive merged material web 1432 to be processed.

In one embodiment, the high volume stacking system 2000 includes one or more cross-web belt tensioners 2028. The cross-web belt tensioners 2028 are configured to engage with a secondary set of teeth 2032 (Fig. 20A) of the toothed belt 2002. The secondary set of teeth 2032 are located on an opposing side of the toothed belt 2002 from where the sprocket 2006 engages the toothed belt 2002. The cross-web belt tensioners 2028 function to provide a cross-web tension on the merged material web 1432 in the cross-web direction to facilitate alignment and positioning of the fiducial features 602. In one embodiment, the cross-web belt tensioners 2028 include a set of inverted teeth that engage the secondary set of teeth 2032. The cross-web belt tensioners may be affixed to a servo, motor or other motion control device to move the cross-web belt tensioners 2028 in the cross-web direction XWD. As the cross-web belt tensioners 2028 are moved outwardly (away from a center of the web) in the cross-web direction XWD, the cross-web tension on the merged material web 1432 is increased. Likewise, as the cross-web belt tensioners 2028 are moved inwardly (in a direction toward a center of the web) in the cross-web direction, a reduction in cross-web tension is effected on the merged material web 1432. Each of the cross-web belt tensioners 2028 may be individually controlled to apply a different amount of cross-web tension on the merged material web 1432 at different points along the path of travel of the merged material web 1432. Accordingly, the cross-web belt tensioners 2028 function to facilitate flattening (e.g., de-wrinkling, de-curling, de-sagging, etc.) of the merged material web 1432. In some embodiments a cross-web belt tension within the range of 0 to 50 percent of the rupture strength of outer perforations 608 is provided by the cross-web belt tensioners 2028. In embodiments, the cross-web belt tensioners 2028 are beneficial to prevent misalignment of the fiducial features 602 due to deformation caused by sagging, wrinkling or curving by flattening the merged material web 1432.

In some embodiments, if sufficient down-web tension is applied to the merged material web 1432 by synchronization sprockets 2006, the merged material web 1432 may stretch in the down-web direction, causing the fiducial features 602 to be spaced further apart in the down-web direction than intended. In such embodiments, the toothed belt 2002 is controlled to reduce its speed, which causes a corresponding reduction in the down-web tension on the merged material web 1432 in the web direction WD, or alternatively the toothed belt 2002 may be controlled to increase speed which causes a corresponding increase in the tension on the merged material web 1432 in the web direction WD.

During the punching operation, the electrode sub-unit 2018 is configured to separate from the merged material web 1432 in a predetermined manner defined by the strength of the outer perforations 608 and the inner perforations 610 (Fig. 15A). In one embodiment, the outer perforations have a lower rupture strength (i.e., break easier) than the inner perforations 610. In this embodiment, the electrode sub-unit 2018 will separate from the merged material web along a path defined by the outer perforations 608 and the lengthwise edge cuts 600.

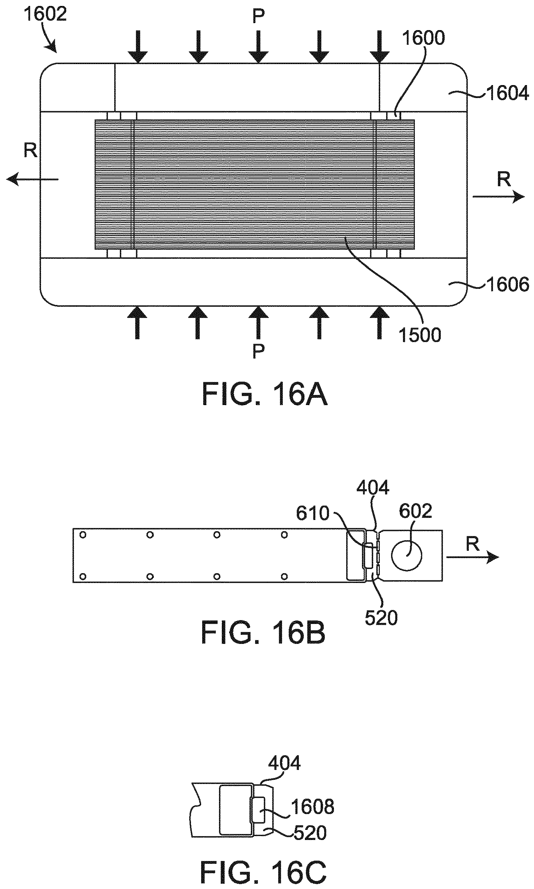

In one embodiment, a predetermined number of electrode sub-units 2018 are stacked on receiving unit 2010 to form a multi-unit electrode stack 2030 (Fig. 24C). It should be appreciated that each of the stacked electrode sub-units 2018 are aligned such that respective fiducial features 602, lengthwise edge cuts 600 and perforations 608, 610 are aligned in the web direction WD and cross-web direction XWD. The multi-unit electrode stack 2030 is then placed in a pressurized constraint 1602 having pressure plates 1604, 1606 which apply pressure to the multi-unit electrode stack 2030in the directions shown by pressure arrows P. The pressure applied to the multi-unit electrode stack 2030 may be adjustable using the user interface 116 to control the pressure P applied by the pressure plates 1604, 1606 to the multi-unit electrode stack 2030. Once a sufficient pressure P has been applied to the multi-unit electrode stack 2030, alignment pins 1600 may be moved in a removal direction R, which causes second perforation 610 to rupture along its length, such that the ablations 404 (e.g., electrode tabs 520) become the outer edges of multi-unit electrode stack 2030, as shown in Fig. 16C.

After the perforations 610 have ruptured, the multi-unit electrode stack 2030 proceeds to a tab welding station to weld bus bars 1700 and 1702 to the ablations 404 to form stacked cell 1704. Prior to welding, the bus bars 1700, 1702 are placed through the bus bar openings 1608 of the respective electrode. In one embodiment, once the bus bars 1700, 1702 have been placed through the bus bar openings 1608, the ablations 404 are folded down toward bus bars 1700, 1702 respectively, prior to welding. In this embodiment, bus bar 1700 is a copper bus bar and is welded to the ablations 404 (anode tabs) of the anode current collector layer 506, and bus bar 1702 is an aluminum bus bar and is welded to the ablations 404 (cathode tabs) of the cathode current collector layer 510. However, in other embodiments, the bus bars 1700 and 1702 may be any suitable conductive material to allow battery 1804 to function as described herein. The welds may be made using a laser welder, friction welding, ultrasonic welding or any suitable welding method for welding bus bars 1700, 1702 to the electrode tabs 520. In one embodiment, each of the bus bars 1700 and 1702 are in electrical contact with all of the electrode tabs 520 for the anode and cathode, respectively.

Upon formation of the stacked cell 1704, the stacked cell proceeds to a packaging station 1800. At the packaging station 1800, the stacked cell 1704 is coated with an insulating packaging material, such as a multi-layer aluminum polymer material, plastic, or the like, to form a battery package 1802. In one embodiment, the battery package 1802 is evacuated using a vacuum and filled through an opening (not shown) with an electrolyte material. The insulating packaging material may be sealed around stacked cell 1704 using a heat seal, laser weld, adhesive or any suitable sealing method. The bus bars 1700 and 1702 remain exposed, and are not covered by battery package 1802 to allow a user to connect the bus bars to a device to be powered, or to a battery charger. Once the battery package 1802 is placed on stacked cell 1704, it defines a completed battery 1804. In this embodiment, the completed battery is a 3-D lithium ion type battery. In other embodiments, the completed battery may be any battery type suitable for production using the devices and methods described herein. In some embodiments, the battery 1804 comprises one or more electrode sub-units 2900a-f, or unit cells 3300, as described further herein.

In one embodiment, each member of the anode population has a bottom, a top, and a longitudinal axis A_{E}(Fig. 7). In one embodiment, the longitudinal axis A_{E} extends in the cross-web direction XWD from the bottom to the top thereof. In an alternative embodiment, the longitudinal axis A_{E} extends in the down-web direction WD from the bottom to the top thereof. In one embodiment, a member of the anode population is formed from the web of base material 104 being anode material 502. Additionally, each member of the anode population has a length (L_{E}) (Fig. 6A) measured along the longitudinal axis (A_{E}) of the electrode, a width (W_{E}) measured in the direction in which the alternating sequence of negative electrode structures and positive electrode structures progresses (i.e., the web direction WD), and a height (H_{E}) (Fig. 6A) measured in a direction ("Z-direction") that is orthogonal to each of the directions of measurement of the length (L_{E}) and the width (W_{E}). Each member of the anode population also has a perimeter (P_{E}) that corresponds to the sum of the length(s) of the side(s) of a projection of the electrode in a plane that is normal to its longitudinal axis.

The length (L_{E}) of the members of the anode population members will vary depending upon the energy storage device and its intended use. In general, however, the members of the anode populations will typically have a length (L_{E}) in the range of about 5 mm to about 500 mm. For example, in one such embodiment, the members of the anode population have a length (L_{E}) of about 10 mm to about 250 mm. By way of further example, in one such embodiment the members of the anode population have a length (L_{E}) of about 25 mm to about 100 mm.

The width (W_{E}) of the members of the anode population will also vary depending upon the energy storage device and its intended use. In general, however, each member of the anode population will typically have a width (W_{E}) within the range of about 0.01 mm to 2.5 mm. For example, in one embodiment, the width (W_{E}) of each member of the anode population will be in the range of about 0.025 mm to about 2 mm. By way of further example, in one embodiment, the width (W_{E}) of each member of the anode population will be in the range of about 0.05 mm to about 1 mm.

The height (H_{E}) of the members of the anode population will also vary depending upon the energy storage device and its intended use. In general, however, members of the anode population will typically have a height (H_{E}) within the range of about 0.05 mm to about 10 mm. For example, in one embodiment, the height (H_{E}) of each member of the anode population will be in the range of about 0.05 mm to about 5 mm. By way of further example, in one embodiment, the height (H_{E}) of each member of the anode population will be in the range of about 0.1 mm to about 1 mm. According to one embodiment, the members of the anode population include one or more first electrode members having a first height, and one or more second electrode members having a second height that is other than the first. In yet another embodiment, the different heights for the one or more first electrode members and one or more second electrode members may be selected to accommodate a predetermined shape for an electrode assembly (e.g., multi-layer sub-stack 1501 (Fig. 15)), such as an electrode assembly shape having a different heights along one or more of the longitudinal and/or transverse axis, and/or to provide predetermined performance characteristics for the secondary battery.

In general, members of the anode population have a length (L_{E}) that is substantially greater than each of its width (W_{E}) and its height (H_{E}). For example, in one embodiment, the ratio of L_{E} to each of W_{E} and H_{E} is at least 5:1, respectively (that is, the ratio of L_{E} to W_{E} is at least 5:1, respectively and the ratio of L_{E} to H_{E} is at least 5:1, respectively), for each member of the anode population. By way of further example, in one embodiment the ratio of L_{E} to each of W_{E} and H_{E} is at least 10:1. By way of further example, in one embodiment, the ratio of L_{E} to each of W_{E} and H_{E} is at least 15:1. By way of further example, in one embodiment, the ratio of L_{E} to each of W_{E} and H_{E} is at least 20:1, for each member of the anode population.

In one embodiment, the ratio of the height (H_{E}) to the width (W_{E}) of the members of the anode population is at least 0.4:1, respectively. For example, in one embodiment, the ratio of H_{E} to W_{E} will be at least 2:1, respectively, for each member of the anode population. By way of further example, in one embodiment the ratio of H_{E} to W_{E} will be at least 10:1, respectively. By way of further example, in one embodiment the ratio of H_{E} to W_{E} will be at least 20:1, respectively. Typically, however, the ratio of H_{E} to W_{E} will generally be less than 1,000:1, respectively. For example, in one embodiment the ratio of H_{E} to W_{E} will be less than 500:1, respectively. By way of further example, in one embodiment the ratio of H_{E} to W_{E} will be less than 100:1, respectively. By way of further example, in one embodiment the ratio of H_{E} to W_{E} will be less than 10:1, respectively. By way of further example, in one embodiment the ratio of H_{E} to W_{E} will be in the range of about 2:1 to about 100:1, respectively, for each member of the anode population.

In one embodiment, a member of the cathode population is formed from the web of base material 104 being cathode material 504. Referring now to Fig. 6B, each member of the cathode population has a bottom, a top, and a longitudinal axis (A_{CE}) extending from the bottom to the top thereof in the cross-web direction XWD and in a direction generally perpendicular to the direction in which the alternating sequence of negative electrode structures and positive electrode structures progresses. Additionally, each member of the cathode population has a length (L_{CE}) measured along the longitudinal axis (A_{CE}) which is parallel to the cross-web direction XWD, a width (W_{CE}) measured in the down-web direction WD in which the alternating sequence of negative electrode structures and positive electrode structures progresses, and a height (H_{CE}) measured in a direction that is perpendicular to each of the directions of measurement of the length (L_{CE}) and the width (W_{CE}).

The length (L_{CE}) of the members of the cathode population will vary depending upon the energy storage device and its intended use. In general, however, each member of the cathode population will typically have a length (L_{CE}) in the range of about 5 mm to about 500 mm. For example, in one such embodiment, each member of the cathode population has a length (L_{CE}) of about 10 mm to about 250 mm. By way of further example, in one such embodiment each member of the cathode population has a length (L_{CE}) of about 25 mm to about 100 mm.

The width (W_{CE}) of the members of the cathode population will also vary depending upon the energy storage device and its intended use. In general, however, members of the cathode population will typically have a width (W_{CE}) within the range of about 0.01 mm to 2.5 mm. For example, in one embodiment, the width (W_{CE}) of each member of the cathode population will be in the range of about 0.025 mm to about 2 mm. By way of further example, in one embodiment, the width (W_{CE}) of each member of the cathode population will be in the range of about 0.05 mm to about 1 mm.

The height (H_{CE}) of the members of the cathode population will also vary depending upon the energy storage device and its intended use. In general, however, members of the cathode population will typically have a height (H_{CE}) within the range of about 0.05 mm to about 10 mm. For example, in one embodiment, the height (H_{CE}) of each member of the cathode population will be in the range of about 0.05 mm to about 5 mm. By way of further example, in one embodiment, the height (H_{CE}) of each member of the cathode population will be in the range of about 0.1 mm to about 1 mm. According to one embodiment, the members of the cathode population include one or more first cathode members having a first height, and one or more second cathode members having a second height that is other than the first. In yet another embodiment, the different heights for the one or more first cathode members and one or more second cathode members may be selected to accommodate a predetermined shape for an electrode assembly, such as an electrode assembly shape having a different heights along one or more of the longitudinal and/or transverse axis, and/or to provide predetermined performance characteristics for the secondary battery.

In general, each member of the cathode population has a length (L_{CE}) that is substantially greater than width (W_{CE}) and substantially greater than its height (H_{CE}). For example, in one embodiment, the ratio of L_{CE} to each of W_{CE} and H_{CE} is at least 5:1, respectively (that is, the ratio of L_{CE} to W_{CE} is at least 5:1, respectively and the ratio of L_{CE} to H_{CE} is at least 5:1, respectively), for each member of the cathode population. By way of further example, in one embodiment the ratio of L_{CE} to each of W_{CE} and H_{CE} is at least 10:1 for each member of the cathode population. By way of further example, in one embodiment, the ratio of L_{CE} to each of W_{CE} and H_{CE} is at least 15:1 for each member of the cathode population. By way of further example, in one embodiment, the ratio of L_{CE} to each of W_{CE} and H_{CE} is at least 20:1 for each member of the cathode population.

In one embodiment, the ratio of the height (H_{CE}) to the width (W_{CE}) of the members of the cathode population is at least 0.4:1, respectively. For example, in one embodiment, the ratio of H_{CE} to W_{CE} will be at least 2:1, respectively, for each member of the cathode population. By way of further example, in one embodiment the ratio of H_{CE} to W_{CE} will be at least 10:1, respectively, for each member of the cathode population. By way of further example, in one embodiment the ratio of H_{CE} to W_{CE} will be at least 20:1, respectively, for each member of the cathode population. Typically, however, the ratio of H_{CE} to W_{CE} will generally be less than 1,000:1, respectively, for each member of the anode population. For example, in one embodiment the ratio of H_{CE} to W_{CE} will be less than 500:1, respectively, for each member of the cathode population. By way of further example, in one embodiment the ratio of H_{CE} to W_{CE} will be less than 100:1, respectively. By way of further example, in one embodiment the ratio of H_{CE} to W_{CE} will be less than 10:1, respectively. By way of further example, in one embodiment the ratio of H_{CE} to W_{CE} will be in the range of about 2:1 to about 100:1, respectively, for each member of the cathode population.

In one embodiment, anode current collector 506 also has an electrical conductance that is substantially greater than the electrical conductance of the negative electrode active material layer. For example, in one embodiment the ratio of the electrical conductance of anode current collector 506 to the electrical conductance of the negative electrode active material layer is at least 100:1 when there is an applied current to store energy in the device or an applied load to discharge the device. By way of further example, in some embodiments the ratio of the electrical conductance of anode current collector 506 to the electrical conductance of the negative electrode active material layer is at least 500:1 when there is an applied current to store energy in the device or an applied load to discharge the device. By way of further example, in some embodiments the ratio of the electrical conductance of anode current collector 506 to the electrical conductance of the negative electrode active material layer is at least 1000:1 when there is an applied current to store energy in the device or an applied load to discharge the device. By way of further example, in some embodiments the ratio of the electrical conductance of anode current collector 506 to the electrical conductance of the negative electrode active material layer is at least 5000:1 when there is an applied current to store energy in the device or an applied load to discharge the device. By way of further example, in some embodiments the ratio of the electrical conductance of anode current collector 506 to the electrical conductance of the negative electrode active material layer is at least 10,000:1 when there is an applied current to store energy in the device or an applied load to discharge the device.

In general, the cathode current collector layer 510 may comprise a metal such as aluminum, carbon, chromium, gold, nickel, NiP, palladium, platinum, rhodium, ruthenium, an alloy of silicon and nickel, titanium, or a combination thereof (see "Current collectors for positive electrodes of lithium-based batteries" by A. H. Whitehead and M. Schreiber, Journal of the Electrochemical Society, 152(11) A2105-A2113 (2005)). By way of further example, in one embodiment, cathode current collector layer 510 comprises gold or an alloy thereof such as gold silicide. By way of further example, in one embodiment, cathode current collector layer 510 comprises nickel or an alloy thereof such as nickel silicide.

### Spacers

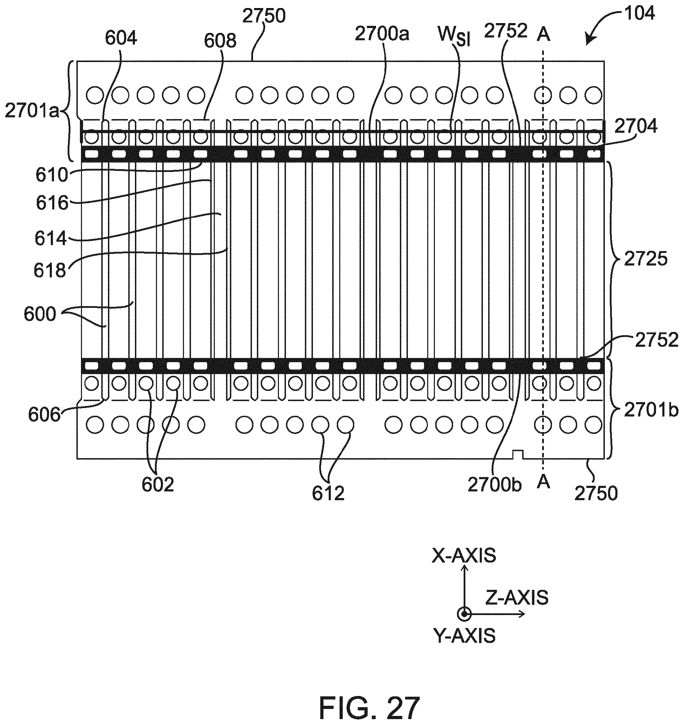

With reference to Figures 27-32D, embodiments of the disclosure having spacer members are described. In one embodiment, the spacer members 2700a-d are added to web of base material 104. In other embodiments, the spacer members 2700a-d are added to one or more of webs of electrode material 1402, 1404, and 1406. In one embodiment, the spacer members 2700a-d are continuous or discontinuous strips of organic or inorganic material. The spacer members 2700a-d may be continuous or discontinuous in one or more of the Z-Axis and X-Axis. In some embodiments, the spacer members 2700a-d are made from an electrically insulating material and/or ionically permeable polymeric woven material. In one embodiment, the spacer members 2700a-d are made from the same material as separator layer 500 or separator material 1406. In some embodiments, spacer members 2700a-d comprise polyethylene terephthalate (PET) or Polyimide (PI). In other embodiments, the spacer members 2700a-d comprise an electrically conductive material. It is noted that although spacer members are referenced as spacer members 2700a-d, there may be any number of spacer members from 1 or more, and in some embodiments, no spacer members are used.

In general, the spacer members comprise a spacer material comprising a polymeric material, a composite such as adhesive tape, electrode current collector, electrode active material, counter-electrode active material, counter-electrode current collector, separator material, or a material that is chemically inert (in the battery environment). For example, in one embodiment the spacer members comprise an anodically active material having the capacity to accept carrier ions; in this embodiment, it is generally preferred that the anodically active material comprise graphite, graphene, or other anodically active material having a capacity for carrier ions that is less than one mole of carrier ion per mole of spacer material. By way of further example, in one embodiment the spacer members comprise a cathodically active material having the capacity to accept carrier ions. By way of further example, in one embodiment the spacer members may comprise a polymeric material (e.g., a homopolymer, copolymer or polymer blend); in such embodiments, the spacer member may comprise a fluoropolymer derived from monomers containing vinylidene fluoride, hexafluoropropylene, tetrafluoropropene, a polyolefin such as polyethylene, polypropylene, or polybutene, ethylene-diene-propene terpolymer, polystyrene, polymethyl methacrylate, polyethylene glycol, polyvinyl acetate, polyvinyl butyral, polyacetal, and polyethyleneglycol diacrylate, methyl cellulose, carboxymethyl cellulose, styrene rubber, butadiene rubber, styrene-butadiene rubber, isoprene rubber, polyacrylamide, polyvinyl ether, polyacrylic acid, polymethacrylic acid, polyacrylonitrile, polyvinylidene fluoride polyacrylonitrile, polyethylene oxide, acrylates, styrenes, epoxies, silicones, polyvinylidene fluoride-co-hexafluoropropylene, polyvinylidene fluoride-co-trichloroethylene, polymethylmethacrylate, polyacrylonitrile, polyvinylpyrrolidone, polyvinyl acetate, polyethylene-co-vinyl acetate, polyethylene oxide, cellulose acetate, cellulose acetate butyrate, cellulose acetate propionate, cyanoethylpullulan, cyanoethyl polyvinylalcohol, cyanoethylcellulose, cyanoethylsucrose, pullulan, carboxymetyl cellulose, acrylonitrile-styrene-butadiene copolymer, polyimide, polyvinylidene fluoride-hexafluoro propylene, polyvinylidene fluoride-trichloroethylene, polymethyl methacrylate, polyacrylonitrile, polyvinyl pyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile styrene butadiene copolymer, polyimide, polyethylene terephthalate, polybutylene terephthalate, polyester, polyacetal, polyamide, polyetheretherketone, polyether sulfone, polyphenylene oxide, polyphenylene sulfide, polyethylene naphthalene, and/or combinations or a copolymer thereof.

In one embodiment, the spacer members are in the form of an adhesive tape having a base and an adhesive layer provided on one surface of the base. The composition of the adhesive tape base is not particularly limited, and various bases known to be usable for the adhesive tape can be used. In general, plastic films are preferred and specific examples include polyolefin films such as a polyethylene, polypropylene, polyethylene terephthalate, a polybutylene terephthalate, polyphenylene sulfide, polyimide, or polyamide film. In some embodiments, polyolefin, polyethylene terephthalate and polyimide films may be preferred in terms of heat resistance and chemical resistance suitable for the battery application. The adhesive tape base may have a thickness in the range of about 4 to 200 µm, e.g., in the range of 6 to 150 µm, or even about 25 to 100 µm. The adhesive constituting the adhesive layer of the adhesive tape may comprise, for example, a rubber-based adhesive, an acrylic adhesive, a silicone-based adhesive or a combination thereof.

In some embodiments, the spacer members 2700a-d may be continuous (e.g., a continuous tape or ribbon) in the Z-Axis direction, can be discontinuous (e.g., a series of discontinuous strips, protrusions or the like) in the Z-Axis or X-Axis directions (or both), or can be porous (e.g., having void space within the volume of the spacer members 2700a-d.

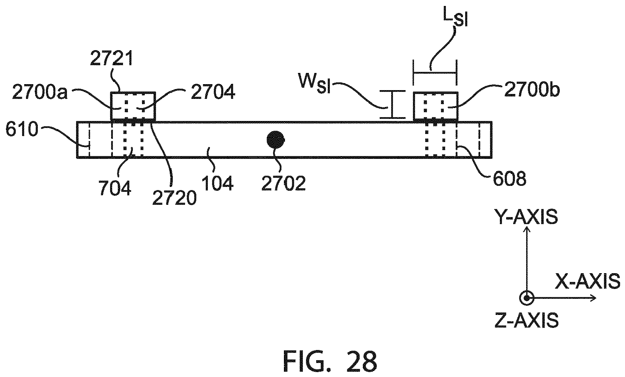

In one embodiment, the spacer members 2700a-d may be applied to the web of base material 104 prior to any or all of the splicing, cutting or perforating operations described herein. In other embodiments, the spacer members 2700a,b are applied after one or more of the splicing, cutting or perforating operations described herein. In embodiments where the spacer members 2700a-d are applied prior to splicing, cutting or perforating operations described herein, the spacer member will also have one or more of the splicing, cutting or perforating operations described herein, such as to cut through holes 2704 therein (Figure 27). The through holes 2704 are sized, shaped and positioned to align with the through holes 704 of web of base material 104. In one embodiment, the process described herein as used to cut through holes 704 in web of base material 104 may be similarly used to cut through holes 2704 in the spacer members 2700a-d. The spacer members 2700a-d have a width Wsi in the Y-Axis direction, a length Lsi in the X-Axis direction and a height Hsi in the Z-Axis direction (Figs. 27 and 28). The X-Axis, Y-Axis and Z-Axis directions are each mutually perpendicular and relate to a x,y,z Cartesian coordinate system. The width Wsi may be predetermined such that when an electrode sub-unit is assembled, the spacer member increases the distance in the Y-Axis direction between adjacent layers of the sub-unit by a specified amount. It is noted that web of base material, in embodiments, may be any of separator layer 500, an anode material 502 or a cathode material 504.

In one embodiment, the width Wsi is greater than or equal to 50 percent of the cathodically active material layer 512 width in the Y-Axis direction. In yet another embodiment, the width Wsi is greater than or equal to 50 percent of the cathodically active material layer 512 plus the width of the cathode current collector layer 510 width in the Y-Axis direction. In another embodiment, the width Wsi is greater than or equal to 50 percent of the cathodically active material layer 512 plus a width of the expansion gap 3002 WG in the Y-Axis direction.

In one embodiment, the spacer members 2700a-d are a tape material having an adhesive applied to first surface 2720 of the spacer member that secures the spacer members 2700a-d to the web of base material 104. In some embodiments, the adhesive is a strong adhesive that permanently secures the spacer members 2700a-d to the web of base material 104. In other embodiments, the adhesive is a weak adhesive that removably secures the spacer members 2700a-d to the web of base material 104. As used herein, the strong adhesive is defined as an adhesive having sufficient strength wherein the spacer member 2700a-d cannot be removed from the web of base material 104 without damage to one or both of the spacer members 2700a,b or 2700c,d and/or the web of base material 104. As used herein, a weak adhesive is defined as having sufficient strength to adhere the spacer members 2700a-d to the web of base material 104 but allow the spacer members to be removed without causing material damage to at least the web of base material 104. In embodiments using the weak adhesive, when removed it is preferred that the adhesive layer does not leave any residue on the web of base material 104. In another embodiment, the spacer member has an adhesive applied to both a first surface 2720 and a second opposing surface 2721. In this embodiment, a release layer may be applied to second surface 2021 that is removed before adhering to an adjacent layer. In yet other embodiments, the spacer members 2700a-d are applied without being adhered to any layer. In another embodiment, the spacer members 2700a-d are applied using a printing process, such as a 3-D printing process. In still another embodiment, the spacer members 2700a-d are applied by melting or welding the spacer members 2700a-d to the respective layer.

In yet another embodiment, the spacer members may be added during one or more of the merging and stacking operations as described herein. For example, in one embodiment, an additional spool of spacer member material is unwound and merged into the merged material web at the desired location between adjacent layers of the merged material web . In this embodiment, the spacer members may form part of a web of material that is merged in a manner similar to the webs from spools of electrode materials 1402, 1404 and 1406. In yet another embodiment, the spacer members may form two separate ribbons, one for each of 2700a and 2700b, wherein each of the ribbons is conveyed using its own tractor hole and merged using a process similar to that described with merging the webs from spools of electrode materials 1402, 1404 and 1406.

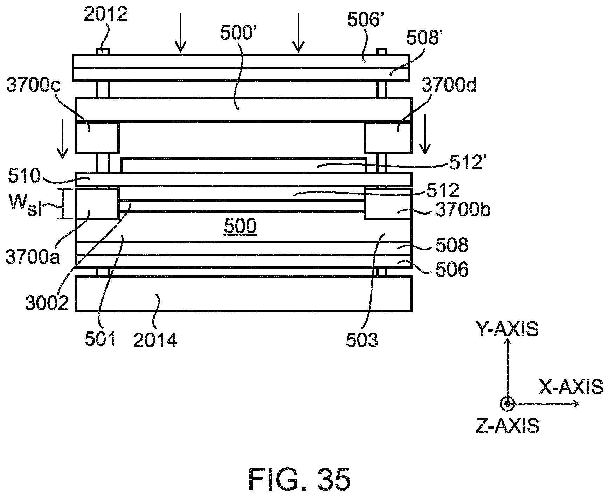

In yet another embodiment, with reference to Fig. 35, the spacer members are added during the stacking operation. In this embodiment, a first electrode, such as anode current collector layer 506 and anodically active material layer 508, is stacked onto the receiver 2014. Subsequently a separator 500 is stacked thereupon. Next, a pair of individual spacer members 3700a,b are stacked onto the separator 500. The individual spacer members 3700a,b may be made of similar material to spacer members 2700a,b and may be similarly sized and shaped. However, in this embodiment, each of the individual spacer members 3700a,b are each pressed down the alignment pins 2012 during the stacking process, rather than having been merged into a merged material web. The individual spacer members 3700a,b may be ring shaped, having a center bore that is sized and shaped to correspond to the alignment pins 2012, such that each of the individual spacer members may be slid down the alignment pins into position without binding or material damage. After the individual spacer members 3700a,b are stacked onto the separator 500, a cathode layer is stacked thereupon. In this embodiment, the cathode layer comprises a shared cathode current collector 510 and has a cathodically active material layer 512, 512' on each opposing side thereof. In this embodiment, the cathodically active material layer 512 has been ablated or otherwise removed in an area that abuts the individual spacer members 3700a,b. Because the individual spacer members 3700a,b have a width Wsi in the Y-Axis direction that is greater than the width of the cathodically active material layer 512 in the Y-Axis direction, the expansion gap 3002 is defined between the spacer 500 and the cathodically active material layer 512. As illustrated, once the individual spacer members 3700a,b and/or the cathode layer (510,512, 512') is stacked, the separator 500 folds/bends (e.g., conforms) at its distal ends 501, 503 into the "L" shape portions. In this embodiment, a second pair of individual spacer members 3700c,d are placed onto the opposing cathodically active material layer 512'. In this embodiment, opposing cathodically active material layer 512'has been similarly ablated, or otherwise had the cathodically active material removed from the area abutting the individual spacer layers 3700c,d. Accordingly, the length of the cathodically active material layers in the X-axis direction, plus the length of the pair of individual spacer layers 3700a,b in the X-axis direction is equivalent to the length in the X-axis direction of the cathode current collector 510. In this embodiment, a second pair of individual spacer members 3700c,d are placed onto the opposing cathodically active material layer 512'. A second separator 500' is similarly stacked onto the individual spacer members 3700c,d. In one embodiment, the width Wₛ₁ of each of the second pair of spacer members 3700c,d is greater than the width of the cathodically active material layer 512', thus creating a second expansion gap (not shown) between spacer 500' and cathodically active material layer 512'. In one embodiment, a mirror image anode layer, comprising anodically active material layer 508' and anode current collector 506' is stacked onto separator layer 500', completing an electrode sub-unit assembly. It is noted that, in some embodiments the separator 500' folds/bends (e.g., conforms) at its distal ends into "L" shape portions, in a manner similar to separator 500. In some embodiments, the above process may be repeated any number of times until a desired number of sub-units have been stacked.

In one embodiment, the spacer members 2700a-d are positioned such that the entirety of the spacer members 2700a-d are inside, in a cross-web direction toward an electrode center point 2702, of an outer boundary defined by the inner perforations 608. In other embodiments, the spacer members 2700a,b may be positioned partially overlapping the inner perforations 608 or outer perforations 610. With respect to the use and placement of the spacer members 2700a-d, such may similarly be applied to one or more of webs of electrode material 1402, 1404, and 1406 or anode current collector layer 506, anodically active material layer 508, separator 500, cathodically active material layer 512 and cathode current collector 510 in a manner substantially similar to that described above with respect to web of base material 104.

Use of the spacer members 2700a-d will now be described with respect to stacked electrode sub-units 2900a-d and stacked cells 2904. Electrode sub-units 2900a-d are similar to electrode sub-units 2018, except electrode sub-units 2900a-e include one or more spacer members 2700a-d. Stacked cell 2904 is similar to stacked cell 1704, except stacked cell 2904 is assembled using one or more of electrode sub units 2900a-d. The stacked cell 2904 may include one or more electrode sub-units 2900a-e, such as from 1 to 100 electrode sub-units 2900a-d. In other embodiments, stacked cell 2904 may include any number of electrode sub-units 2900a-d as may be desired for a particular application.

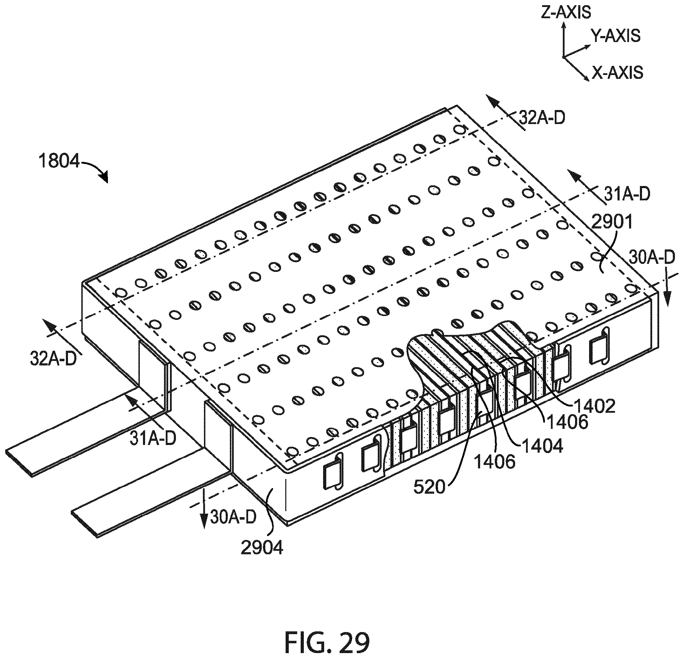

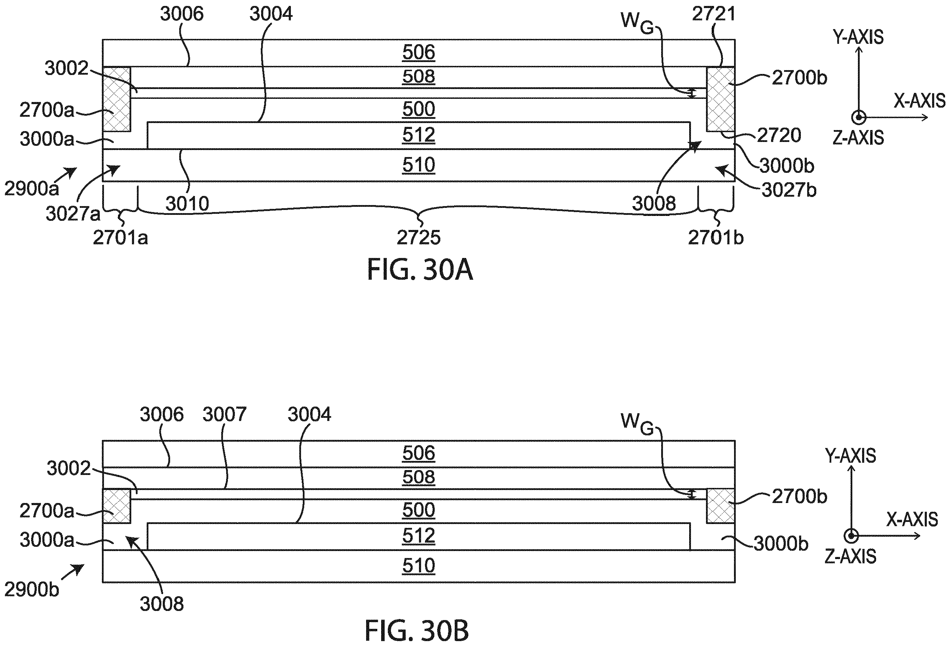

Electrode sub-units 2900a-f are now described with reference to Figs. 29 and 30A-F. As shown in Fig. 30A, a cross section taken along section line 30A-D of stacked cell 2904 illustrates a cross-section of an electrode sub-unit 2900a of a population of electrode sub-units 2900a of stacked cell 2904. In this embodiment, each electrode sub-unit 2900a includes a cathode (counter-electrode) current collector layer 510, a cathodically active layer (counter-electrode) 512, separator layer 500, anodically active material layer (electrode) 508, anode current collector layer 506 and spacer members 2700a,b. In this embodiment, the spacer members 2700a,b are positioned directly adjacent separator layer 500 in a manner such that separator layer is folded at each distal end 3000a,b (in the cross-web direction) to have an "L-shape" 3008 to be in contact with cathode current collector layer 510. In this embodiment, the spacer members 2700a,b extend from a lower boundary 3006 of anode current collector 506 to a region vertically within (in the Z-direction) between upper 3004 and lower 3010 boundaries of the cathodically active material layer 512. In this embodiment, the spacer member 2700a,b are each of a sufficient width Wsi that an expansion gap 3002 is defined between separator layer 500 and anodically active material layer 508. The width Wsi is controlled such that the expansion gap 3002 has a width WG as specified. In embodiments, the height HG is set to be from 0 micrometer (e.g., no gap) to 1000 micrometers, such as 1µm, 2 µm, 5 µm, 10 µm, 20 µm, 50 µm, 100 µm, 200 µm, 300 µm, 400 µm, 500 µm, 600 µm,700 µm,800 µm,900 µm or 1000 µm, or greater.

In some embodiments, the location at which the spacer members 2700a-d are positioned in the cross-web direction is referred to as the margins 2701a,b. The margin 2701a,b is defined as extending from the outside edge 2750 of the web (or electrode sub-unit, or unit cell) to the inside edge 2752 of the spacer member 2700a-d. This region of the electrode layers corresponding to the margins 2701a,b of the counter-electrode (e.g., comprising the cathode current collector layer 510 and the cathodically active material layer 512) and/or the electrode (e.g., comprising the anode current collector 506 and the anodically active material layer 508) may be referred to as the flank portions of the counter-electrode or electrode. In other words, the flank portions (3027a,b) (See Fig. 30A) are, in some embodiments, the portion of the anode layer or cathode layer that are aligned with or abut to the spacer members. The region of the anode layer or cathode layer in between the flank portions 3027a,b may be referred to as the central portion, or main body portion thereof. This region may also be considered a central portion of the corresponding web, to which the anode or cathode layer belongs. Similarly, the flank portions/margins of a unit cell can also be referred to as flank portions/margins of the corresponding web, to which they belong.

In some embodiments, the margins 2701a,b (e.g., first edge margin 2701a and second edge margin 2701b) includes for a unit cell, in the cross-web direction, the anode (e.g., electrode) current collector layer 506, the separator layer 500, and the cathode (e.g., counter-electrode) current collector layer 510, and spacer member 2700a-d (e.g., a tape spacer), each of the tape spacers being adhered to at least one of (i) the electrode current collector, (ii) the electrode layer, (iii) the separator, and (iv) the counter-electrode current collector. The main body 2725 is the portion of the web, electrode sub-unit, or unit cell proximal of the spacer member 2700a-d, in a cross-web direction, to a center of the electrode sub-unit 2900a-d (i.e., the area between margins 2701a and 2701b. The main body 2725 includes, in the Z-direction, one or more of each of the anode (e.g., electrode) current collector layer 506, anodically active material layer 508, the separator layer 500, the cathode (e.g., counter-electrode) current collector layer 510, cathodically active material layer 512 and an expansion gap 3002, but no spacer member 2700a-d. In another embodiment, each electrode sub-unit 2900b includes a cathode (counter-electrode) current collector layer 510, a cathodically active layer (counter-electrode) 512, separator layer 500, anodically active material layer (electrode) 508, anode current collector layer 506 and spacer members 2700a,b. In this embodiment, the spacer members 2700a,b are positioned directly adjacent separator layer 500 in a manner such that separator layer is folded/bent (e.g., conformed) at each distal end 3000a,b (in the cross-web direction) to have an "L-shape" 3008 to be in contact with cathode current collector layer 510. In this embodiment, the spacer members 2700a,b extend from a lower boundary 3006 of anode current collector 506 to an region vertically aligned with the upper boundary 3004 of the cathodically active material layer 512. In this embodiment, the spacer member 2700a,b are each of a sufficient width Wsi that an expansion gap 3002 is defined between separator layer 500 and anodically active material layer 508. The width Wsi is controlled such that the expansion gap 3002 has a height WG as specified. In embodiments, the width WG is set to be from 0 micrometer (e.g., no gap) to 1000 micrometers, such as 1µm, 2 µm, 5 µm, 10 µm, 20 µm, 50 µm, 100 µm, 200 µm, 300 µm, 400 µm, 500 µm, 600 µm,700 µm,800 µm,900 µm or 1000 µm or greater.

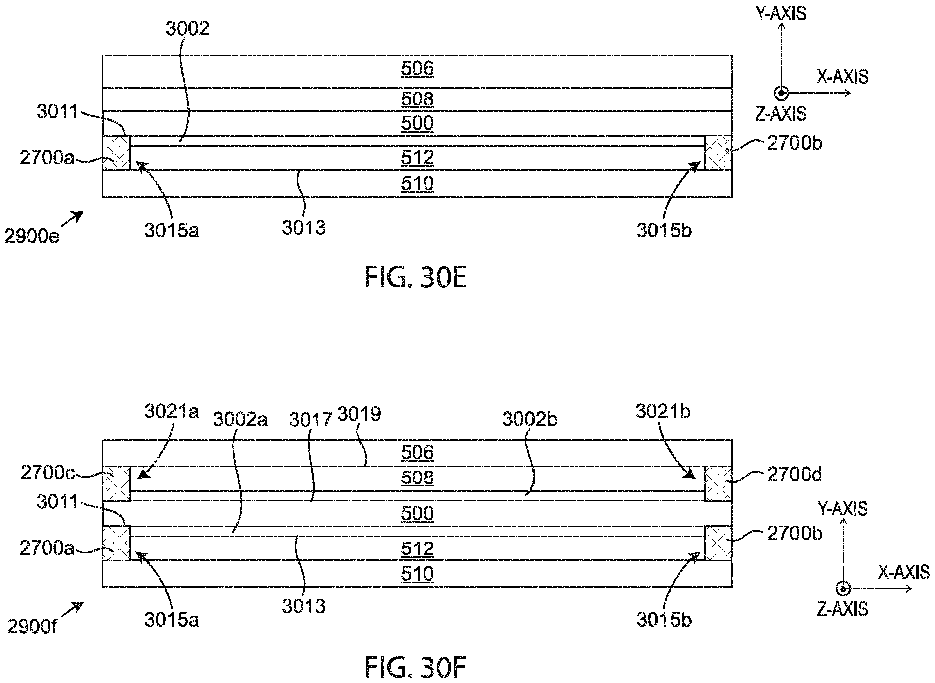

In some embodiments, the spacer members 2700a-d have a length Lsi in the X-Axis direction. The length Lₛ₁ is equivalent to an offset in the X-Axis direction of the anodically active material layer and/or the cathodically active material layer that has been ablated or otherwise removed (e.g., from distal ends 3015a, 3015b and 3021a, 3021b as shown in Figs. 30E and 30F). In embodiments, the length Lsi of the spacer members 2700a-d is set to be from 0 micrometers to 500 micrometers, such as 100 micrometers, 200 micrometers, 300 micrometers, 400 micrometers or 500 micrometers or more, as measured in the X-axis direction, thus creating an equivalent offset of from 0 micrometers to 500 micrometers, such as 100 micrometers, 200 micrometers, 300 micrometers, 400 micrometers or 500 micrometers or more.

In some embodiments, the flank portions 3027a,b of the counter electrode layer (cathode current collector 510 and cathodically active material layer 512 together) have a width in the Y-axis direction that is less than or equal to 50 percent of the width of the central portion of the counter electrode, such as less than 40 percent the width of the central portion, or such as less than 20 percent the width of the central portion, or such as less than 10 percent the width of the central portion.

The volume occupied by the expansion gap 3002 may also be referred to as a void fraction, and expressed as a ratio of open space (i.e., the void) to active material within the stacked cell 2904. A higher void fraction, or larger expansion gap 3002, is provided by having an increased width WG facilitated by spacer members 2700a,b with increased width Wsi. As a general rule, a larger expansion gap 3002 provides the stacked cell for more room for the active materials, which in some embodiments, may swell during discharge or charging operations. However, in some embodiments, increased expansion gap 3002 size comes at the expense of battery capacity, since the expansion gap 3002 and the tape spacers 2700a,b do not constitute active material and thus do not add to the theoretical battery capacity for the stacked cell 2904.

As shown in Fig. 30B, another embodiment is shown where a cross section taken along section line 30A-D of stacked cell 2904 illustrates a cross-section of an electrode sub-unit 2900b of a population of electrode sub-units 2900b of stacked cell 2904. In this embodiment, each electrode sub-unit 2900b includes a cathode (counter-electrode) current collector layer 510, a cathodically active layer (counter-electrode) 512, separator layer 500, anodically active material layer (electrode) 508, anode current collector layer 506 and spacer members 2700a,b. In this embodiment, the spacer members 2700a,b are positioned directly adjacent separator layer 500 in a manner such that separator layer is folded/bent (e.g., conformed) at each distal end 3000a,b (in the cross-web direction) to have an "L-shape" 3008 to be in contact with anodically active material layer 508. In this embodiment, the spacer members 2700a,b extend from a lower boundary 3007 of anodically active material layer 508 to an region vertically aligned with the upper boundary 3004 of the cathodically active material layer 512. In this embodiment, the spacer member 2700a,b are each of a sufficient width Wsi that an expansion gap 3002 is defined between separator layer 500 and anodically active material layer 508. The width Wsi is controlled such that the expansion gap 3002 has a width WG as specified. In embodiments, the width WG is set to be from 0 micrometer (e.g., no gap) to 1000 micrometers, such as 1µm, 2 µm, 5 µm, 10 µm, 20 µm, 50 µm, 100 µm, 200 µm, 300 µm, 400 µm, 500 µm, 600 µm,700 µm,800 µm,900 µm or 1000 µm or greater.

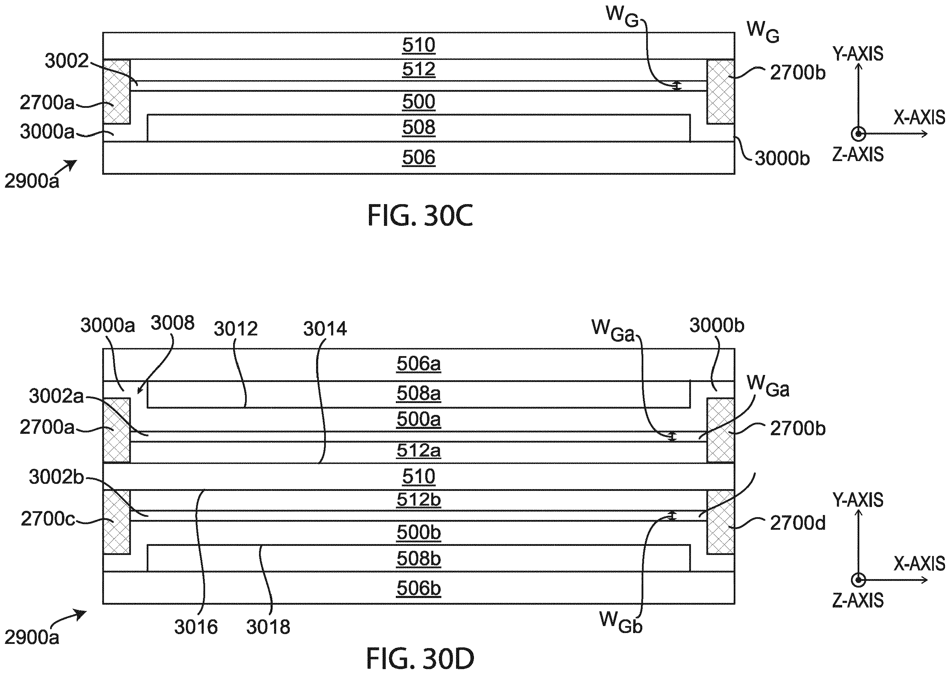

As shown in Fig. 30C, another embodiment is shown where a cross section taken along section line 30A-D of stacked cell 2904 illustrates a cross-section of an electrode sub-unit 2900c of a population of electrode sub-units 2900c of stacked cell 2904. This embodiment is similar to that shown in Fig. 30B, except that the anode and cathode layers are swapped, such that the cathode layer is shown on top and the anode layer is shown on bottom. In this embodiment, each electrode sub-unit 2900b includes a cathode (counter-electrode) current collector layer 510, a cathodically active layer (counter-electrode) 512, separator layer 500, anodically active material layer (electrode) 508, anode current collector layer 506 and spacer members 2700a,b. In this embodiment, the spacer members 2700a,b are positioned directly adjacent separator layer 500 in a manner such that separator layer is folded/bent (e.g., conformed) at each distal end 3000a,b (in the cross-web direction) to have an "L-shape" to be in contact with anode current collector layer 506. In this embodiment, the spacer members 2700a,b extend from a lower boundary of cathode current collector layer 510 to a region vertically aligned with the upper boundary of the anodically active material layer 508. In this embodiment, the spacer member 2700a,b are each of a sufficient width Wsi that an expansion gap 3002 is defined between separator layer 500 and cathodically active material layer 512. The width Wsi is controlled such that the expansion gap 3002 has a width WG as specified. In embodiments, the width WG is set to be from 0 micrometer (e.g., no gap) to 1000 micrometers, such as 1µm, 2 µm, 5 µm, 10 µm, 20 µm, 50 µm, 100 µm, 200 µm, 300 µm, 400 µm, 500 µm, 600 µm,700 µm,800 µm,900 µm or 1000 µm or greater.

As shown in Fig. 30D, another embodiment is shown where a cross section taken along section line 30A-D of stacked cell 2904 illustrates a cross-section of an electrode sub-unit 2900d of a population of electrode sub-units 2900d of stacked cell 2904. In this embodiment, the electrode sub-unit 2900d includes a first anode current collector layer 506a, a first anodically active material layers 508a, a first separator layer 500a, first expansion gap 3002a, a first cathodically active material layer 512a, a cathode current collector layer 510, a second cathodically active material layer 512b, a second expansion gap 3002b, a second separator layer 500b, a second anodically active material layer 508b, a second anode current collector layer 506b. This embodiment also includes spacer members 2700a,b and second spacer members 2700c,d. In this embodiment, the spacer members 2700a,b are positioned directly adjacent first separator layer 500a in a manner such that first separator layer 500a is folded at each distal end 3000a,b (in the cross-web direction) to have an "L-shape" 3008 to be in contact with anode current collector layer 506a. In this embodiment, the spacer members 2700a,b extend from the first separator layer 500a at a position vertically aligned with lower boundary 3012 of anodically active material layer 508a to an upper boundary 3014 of cathode current collector layer 510. Accordingly, spacer members 2700a,b facilitate the expansion gap 3002a being defined between first separator layer 500a and first cathodically active material layer 512a. In addition, second spacer members 2700c,d are positioned between a lower boundary 3016 of cathode current collector layer 510 and second separator layer 500b at a position adjacent second separator layers 2700c,d that is vertically aligned with upper boundary 3018 of second anodically active material layer 508b. that is vertically 508. Accordingly, the second expansion gap 3002b is defined between second cathodically active material layer 512b and second separator layer 500b. The width Wsi is controlled such that the expansion gap 3002a,b has a width W_{Ga} and W_{Gb}, respectively, as specified. In embodiments, the width W_{Ga} and W_{Gb} are set to be from 0 micrometer (e.g., no gap) to 1000 micrometers, such as 1µm, 2 µm, 5 µm, 10 µm, 20 µm, 50 µm, 100 µm, 200 µm, 300 µm, 400 µm, 500 µm, 600 µm,700 µm,800 µm,900 µm or 1000 µm or greater.

As shown in Fig. 30E, another embodiment is shown where a cross section taken along section line 30A-D of stacked cell 2904 illustrates a cross-section of an electrode sub-unit 2900e of a population of electrode sub-units 2900e of stacked cell 2904. In this embodiment, each electrode sub-unit 2900e includes a cathode (counter-electrode) current collector layer 510, a cathodically active layer (counter-electrode) 512, separator layer 500, anodically active material layer (electrode) 508, anode current collector layer 506 and spacer members 2700a,b. In this embodiment, the spacer members 2700a,b are positioned directly adjacent separator layer 500, cathodically active material layer 512 and cathode current collector layer 510.. In this embodiment, the spacer members 2700a,b extend in the Y-axis direction from a lower boundary 3011 of separator 500 to an upper boundary 3013 of the cathode current collector 510. The cathodically active material layer has been ablated or otherwise removed at its distal ends 3015a,b an amount equivalent to the length Lsi of the spacer members 2700a,b, such that the total length in the X-Axis direction of the cathodically active material layer 512 plus the length Lsi of both spacer members 2700a,b is equal to the length in the X-axis direction of the cathode current collector layer 510. In this embodiment, the spacer member 2700a,b are each a width Wsi that is equivalent to the width of the cathodically active material layer 512 in the Y-axis direction or greater. In embodiments where the width Wsi is greater than the width of the cathodically active material layer 512 in the Y-axis direction, an expansion gap 3002 is defined between cathodically active material layer 512 and separator 500. In embodiments, the width Wsi is controlled such that the expansion gap 3002 has a width WG as specified. In embodiments, the width WG is set to be from 0 micrometer (e.g., no gap) to 1000 micrometers, such as 1µm, 2 µm, 5 µm, 10 µm, 20 µm, 50 µm, 100 µm, 200 µm, 300 µm, 400 µm, 500 µm, 600 µm,700 µm,800 µm,900 µm or 1000 µm or greater.

As shown in Fig. 30F, another embodiment is shown where a cross section taken along section line 30A-D of stacked cell 2904 illustrates a cross-section of an electrode sub-unit 2900f of a population of electrode sub-units 2900f of stacked cell 2904. In this embodiment, each electrode sub-unit 2900f includes a cathode (counter-electrode) current collector layer 510, a cathodically active layer (counter-electrode) 512, separator layer 500, anodically active material layer (electrode) 508, anode current collector layer 506 and spacer members 2700a-d. In this embodiment, the spacer members 2700a,b are positioned directly adjacent separator layer 500, cathodically active material layer 512 and cathode current collector layer 510. In this embodiment, the spacer members 2700a,b extend in the Y-axis direction from a lower boundary 3011 of separator 500 to an upper boundary 3013 of the cathode current collector 510. The cathodically active material layer has been ablated or otherwise removed at its distal ends 3015a,b an amount equivalent to the length Lsi of the spacer members 2700a,b, such that the total length in the X-Axis direction of the cathodically active material layer 512 plus the length Lsi of both spacer members 2700a,b is equal to the length in the X-axis direction of the cathode current collector layer 510. In this embodiment, the spacer member 2700a,b are each a width Wsi that is equivalent to the width of the cathodically active material layer 512 in the Y-axis direction or greater. In embodiments where the width Wsi is greater than the width of the cathodically active material layer 512 in the Y-axis direction, an expansion gap 3002 is defined between cathodically active material layer 512 and separator 500. In embodiments, the width Wsi is controlled such that the expansion gap 3002a has a width WG as specified. In embodiments, the width WG is set to be from 0 micrometer to 1000 micrometers. In this embodiment, the spacer members 2700c,d extend in the Y-axis direction from a upper boundary 3017 of separator 500 to a lower boundary 3019 of the anode current collector 506. The anodically active material layer 508 has been ablated or otherwise removed at its distal ends 3021a,b an amount equivalent to the length Lsi of the spacer members 2700c,d, such that the total length in the X-Axis direction of the anodically active material layer 508 plus the length Lsi of both spacer members 2700c,d is equal to the length in the X-axis direction of the anode current collector layer 506. In this embodiment, the spacer member 2700c,d are each a width Wsi that is equivalent to the width of the anodically active material layer 512 in the Y-axis direction or greater. In embodiments where the width Wₛ₁ is greater than the width of the cathodically active material layer 508 in the Y-axis direction, an expansion gap 3002b is defined between anodically active material layer 508 and separator 500. In embodiments, the width Wsi is controlled such that the expansion gap 3002b has a width WG as specified. In embodiments, the width WG is set to be from 0 micrometer (e.g., no gap) to 1000 micrometers, such as 1µm, 2 µm, 5 µm, 10 µm, 20 µm, 50 µm, 100 µm, 200 µm, 300 µm, 400 µm, 500 µm, 600 µm,700 µm,800 µm,900 µm or 1000 µm or greater.

In some embodiments, for example as shown in Figs. 30A, 30C, 30D, 30E and 30F, at least a portion of the cathodically active material 512 (e.g., counter-electrode active material) of the counter-electrode layer (e.g., comprising cathode current collector 510 and cathodically active material layer 512) is located between the spacer members 2700a,b such that the portion of the counter-electrode active material and the spacer members lie in a common plane defined by the x and z axes. It may be understood that the common plane refers to a plane which extends in both the x-direction and the z-direction, and along which the portion of the counter-electrode active material and the spacer members are positioned.

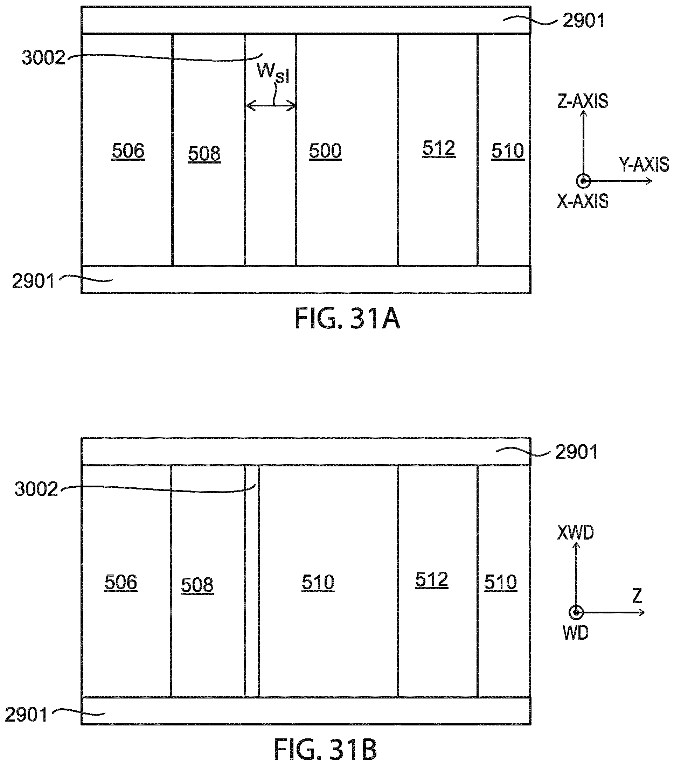

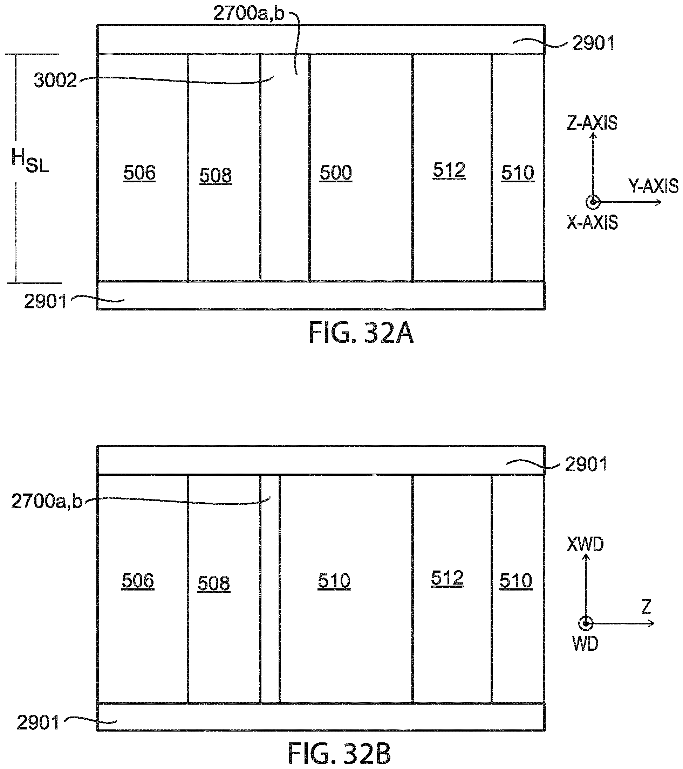

Additional description of electrode sub-units 2900a-d are now described with reference to Figs. 31A-D. Figs. 31A-D illustrate cross-sectional views of electrode sub-units 2900a-d taken along section 31A-D of Fig. 29, and Figs. 32A-D illustrate cross-sectional views of electrode sub-units 2900a-d taken along section 32A-D of Fig. 29.

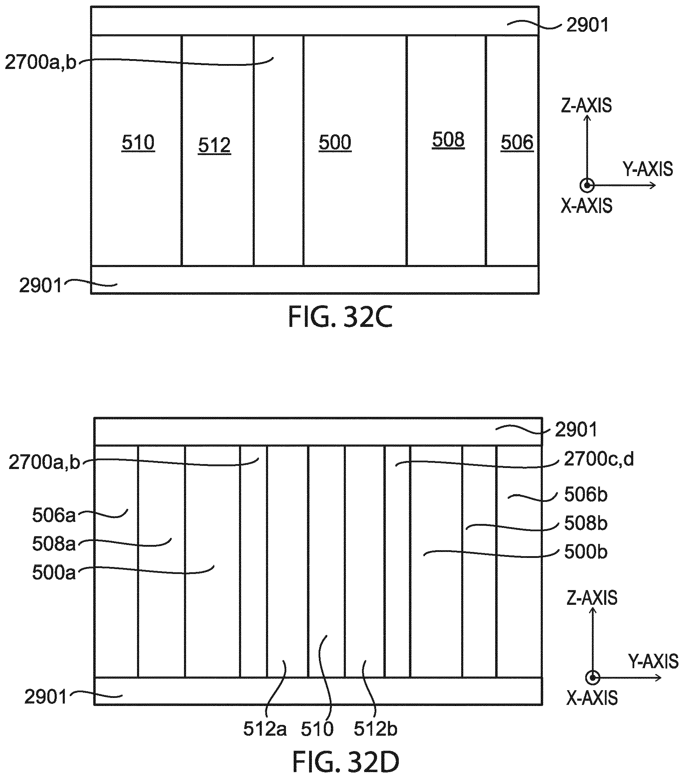

As shown in Fig. 31A, at the section taken along section 31A-D of Fig. 29, electrode sub-unit 2900a includes, from left to right, an anode current collector layer 506, an anodically active material layer 508, expansion gap 3002, separator layer 500, cathodically active material layer 512 and cathode current collector layer 510. In the embodiment shown, the layers of the electrode sub-unit 2900a are bounded by a casing 2901 that surrounds the electrode sub-unit 2900a. Notably, at this section of the electrode sub-unit 2900a, the spacer members 2700a,b are not present. However, the expansion gap 3002 facilitated by the spacer members 2700a,b is present. With reference to Fig. 32, in this section of electrode sub-unit 2900a, the spacer members 2700a,b are visible, but the expansion gap 3002 is not.

As shown in Fig. 31B, at the section taken along section 31A-D of Fig. 29, electrode sub-unit 2900b includes, from left to right, an anode current collector layer 506, an anodically active material layer 508, expansion gap 3002, separator layer 500, cathodically active material layer 512 and cathode current collector layer 510. In the embodiment shown, the layers of the electrode sub-unit 2900a are bounded by a casing 2901 that surrounds the electrode sub-unit 2900b. Notably, at this section of the electrode sub-unit 2900b, the spacer members 2700a,b are not present. However, the expansion gap 3002 facilitated by the spacer members 2700a,b is present. With reference to Fig. 32B, in this section of electrode sub-unit 2900b, the spacer members 2700a,b are visible, but the expansion gap 3002 is not.

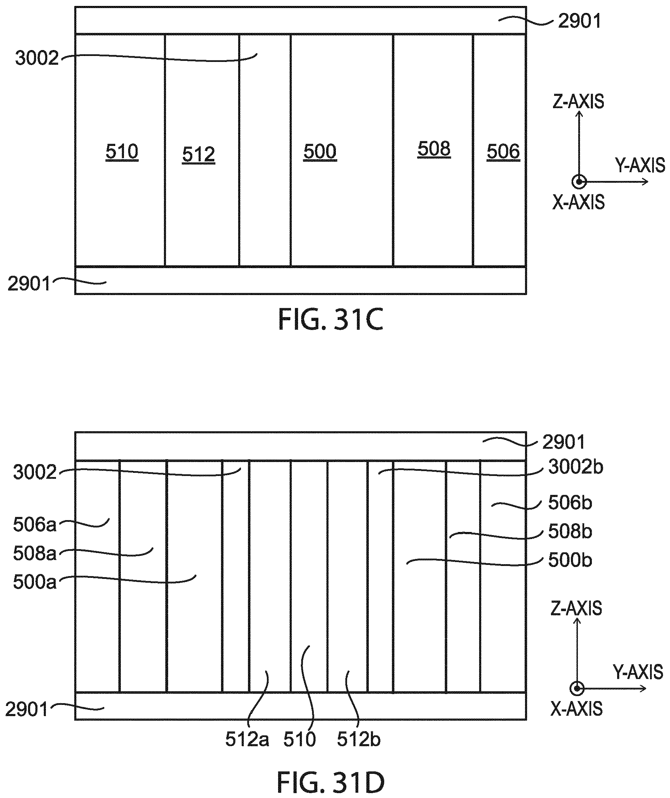

As shown in Fig. 31C, at the section taken along section 31A-D of Fig. 29, electrode sub-unit 2900c includes, from left to right, a cathode current collector layer 510, a cathodically active material layer 512, expansion gap 3002, separator layer 500, anodically active material layer 508 and anode current collector layer 506. In the embodiment shown, the layers of the electrode sub-unit 2900c are bounded by a casing 2901 that surrounds the electrode sub-unit 2900c. Notably, at this section of the electrode sub-unit 2900c, the spacer members 2700a,b are not present. However, the expansion gap 3002 facilitated by the spacer members 2700a,b is present. With reference to Fig. 32C, in this section of electrode sub-unit 2900c, the spacer members 2700a,b are visible, but the expansion gap 3002 is not.

As shown in Fig. 31D, at the section taken along section 31A-D of Fig. 29, electrode sub-unit 2900c includes, from left to right, a first anode current collector layer 506a, a first anodically active material layers 508a, a first separator layer 500a, first expansion gap 3002a, a first cathodically active material layer 512a, a cathode current collector layer 510, a second cathodically active material layer 512b, a second expansion gap 3002b, a second separator layer 500b, a second anodically active material layer 508b, a second anode current collector layer 506b. In the embodiment shown, the layers of the electrode sub-unit 2900c are bounded by a casing 2901 that surrounds the electrode sub-unit 2900c. Notably, at this section of the electrode sub-unit 2900c, the spacer members 2700a-d are not present. However, the expansion gaps 3002a,b facilitated by the spacer members 2700a-d are present. With reference to Fig. 32D, in this section of electrode sub-unit 2900d, the spacer members 2700a-d are visible, but the expansion gaps 3002a,b are not.

It should be appreciated that a stacked cell may include any number of electrode sub-units 2900a-d in a repeated, stacked arrangement. When stacked, the electrode sub-units 2900a-d are stacked such that a separator layer 500 is always between adjacent anodically active material layers 508 and cathodically active material layers 512 in order to prevent short circuiting of the stacked cell 2904. As discussed herein, the separator layer 500 is adapted to electrically isolate the anodically active material layer 508 from the cathodically active material layer 512 while permitting an exchange of carrier ions therebetween.

In embodiments, the expansion gaps 3002 (and 3002a,b) as described above are used to provide room for the active materials within the stacked cell 2904 to expand. Upon charge and discharge cycling of a battery 1804 having the stacked cell 2904 carrier ions travel between the electrode (508, 512) and counter-electrode structures (508,512) and can intercalate into the anodically or cathodically active electrode material that is located within the direction of travel. The effect of intercalation and/or alloying of carrier ions into the electrode material can cause the material to swell or expand. Accordingly, the void space provided by the expansion gap 3002 allows the material to expand therein, without causing structural damage to the battery 1804. In some instances, if insufficient void space is provided by expansion gap 3002, or if spacer members 2700a-d are not used, and thus no expansion gap is provided, the battery 1804 may swell to a point where an outer casing thereof ruptures, or internal short-circuits occur. Accordingly, a suitable expansion gap 3002 should be provided using spacer members 2700a-d, as required depending on the desired performance of the battery 1804 and materials used. In some embodiments, the void fraction in expansion gap volume to active material volume may be less than 55%, such as less than 50%, less than 45%, less than 40%, and/or even less than 35%. In another embodiment, the void fraction may be greater than 90%, such as greater than 95%, greater than 98%, and/or even greater than 99%.

In one embodiment, the spacer members 2700a-d can comprise an electrically conductive material so as to maintain electrical connection between the electrode current collector layer and counter-electrode active material layer. The spacer members 2700a-d disposed between the electrode current collector layer and counter-electrode active material layer may also comprise protrusions, a surface roughness, or other features that impart the intended expansion gap and/or void fraction. In other embodiments, the spacer members 270a-d may comprise a material that is one or more of ionically, electrically, and electrochemically compatible (e.g., does not corrode) with adjacent structures (electrode structures, counter electrode structures, separators, battery casing materials, etc.), or with electrolyte and/or carrier ions in the battery 1804 or stacked cell 2904. Furthermore, in a case where the structures (e.g., electrode active materials, counter-electrode current collectors, electrode active materials, counter-electrode current collectors, separators) are themselves provided with protrusions and/or other features (e.g. surface roughness) that serve a spacer function to effect an expansion gap and/or increased void fraction in a certain region, the protrusions and/or other features may be similarly compatible with adjacent structures, electrolyte and/or carrier ions in the battery.

In some embodiments, the expansion gap 3002 or calculated void fraction may be provided over a plurality of electrode sub-units 2900a-d. For example, in one embodiment, the expansion gap 3002 or void fraction in a single electrode sub-unit 2900a-d may be less than the overall intended expansion gap or void fraction for the entire battery 1804 or stacked cell 2904, but other ones of the electrode sub-units 2900a-d may comprise larger expansion gaps 3002 or void fractions to accommodate the smaller expansion gaps 3002 or void fractions in other ones of the electrode sub-units 2900a-d. For example, in one embodiment, every other electrode sub-unit 2900a-d in a population may comprise an expansion gap 3002 and/or void fraction that is 2x to accommodate other ones of the electrode sub-units 2900a-d having substantially no gap and/or void fraction, or a smaller expansion gap or void fraction, where a cumulative gap over the population of electrode sub-units is intended to be N times x (where N is the number of individual electrode sub-units in the population). In another embodiment, every 5th electrode sub-unit in a population may comprise an expansion gap and/or void fraction that is 5x to accommodate other unit cells having substantially no expansion gap and/or void fraction, where a cumulative gap over the population of unit cells is intended to be N times x (where N is the number of electrode sub-units in the population). In yet another embodiment, every 10th electrode sub unit in a population may comprise an expansion gap and/or void fraction that is 10x to accommodate other electrode sub-units having substantially no expansion gap and/or void fraction, where a cumulative gap over the population of electrode sub units is intended to be N times x (where N is the number of unit cells in the population). In yet a further embodiment, for a cumulative gap over the population of electrode sub units that is intended to be N times x (where N is the number of electrode sub units in the population), the expansion gap and/or void fraction in an electrode sub unit in the population may be at least 1%, at least 5%, at least 10%, and/or at least 15% of the average gap and/or void space intended for the population (e.g., (N times x)/(number of unit cells in the population)), and may be less than 90%, less than 80%, less than 75%, less than 50%, less than 35%, less than 20%, less than 10%, and/or less than 5% of the average expansion gap and/or void space intended for the population (e.g., (N times x)/(number of electrode sub-units in the population)). The number of unit cells N in the population may be, for example, at least 2, 5, 8, 10, 15, 20, 25, 30,40, 50, 75, 80, 80, 100, 150, 200, 300, 500, 800, 1000, or even greater, and/or the number N of electrode sub-units may correspond to the entire number of electrode sub-units in the battery 1804.

In some embodiments, the spacer members 2700a-d of one or more electrode sub-units may be removed prior to stacking a population of electrode sub-units into a stacked cell 2904. For example, in some embodiments, the spacer members 2700a-d may be provided in a margin that is defined distally (in the X-Axis Direction) of a base material layer such that the spacer members are outside (distal to) in the cross-web directions XWD one or more of the perforations 608, 610 such that when the perforations are ruptured during the punching and stacking operations described herein, that the spacer members 2700a-d are removed and do not become part of the stacked cell 2904. In such embodiments, the expansion gaps 3002 formed by the spacer members 2700a-d still remain even after the spacer members 2700a-d are removed from the electrode sub-units.

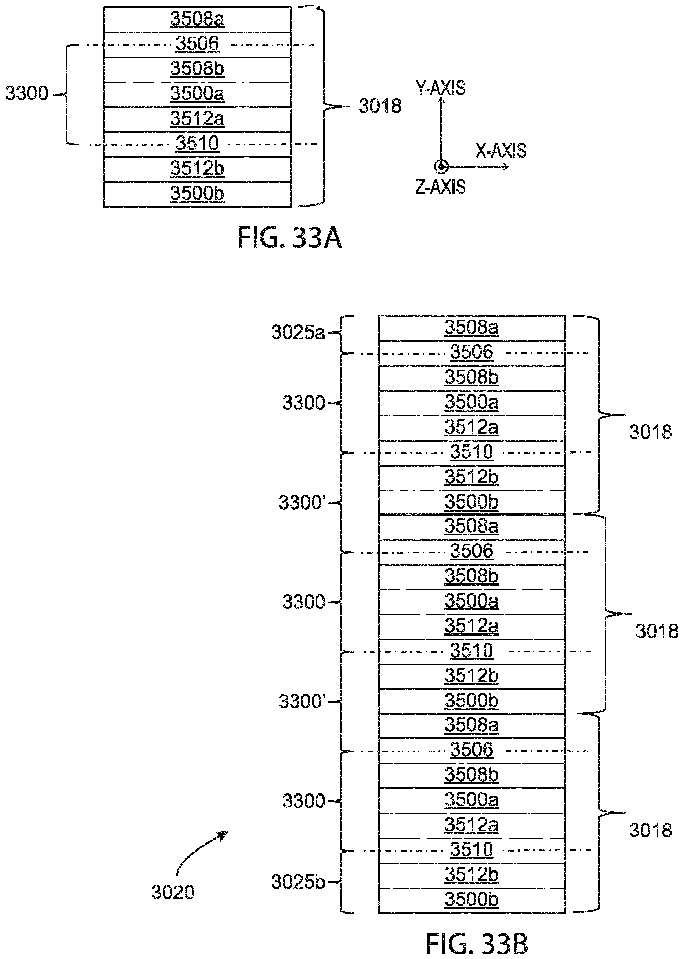

With reference to Fig. 33, exemplary unit cells 3300 are described with respect to embodiments of electrode sub-units 3018. Electrode sub-units are the same as or similar to electrode sub-units 2018 or 2900a-d as described herein. In the embodiment shown in Fig. 33, the electrode sub-unit 3018 comprises in a stacked configuration from top to bottom an anodically active material layer 3508a, anode current collector layer 3506, anodically active material layer 3508b, separator 3500a, cathodically active material layer 3512a, cathode current collector layer 3510, cathodically active material layer 3512b and separator 500b. It is noted that anodically active material layer 3508a,b may be the same as or similar to anodically active material layer 508, anode current collector layer 3506 may be the same as or similar to anode current collector 506, cathodically active material layer 3512a,b, may be the same as or similar to cathodically active material layer 512, cathode current collector 3510 may be the same as or similar to cathode current collector 510 and separator 3500a,b may be the same as or similar to separator 500 as described herein. In one embodiment, a unit cell 3300 comprises only a portion of the electrode sub-unit 3018. In this embodiment, the unit cell 3300 comprises from top to bottom, a portion of anode current collector 3506, anodically active material layer 3508b, separator 3500a, cathodically active material layer 512a and a portion of cathode current collector 3510. It should be noted that an electrode sub-unit 3018 may comprise at least one unit cell 3300 and any number of additional full or partial unit cells, as desired. However, in one embodiment, a single unit cell 3300 comprises only anode current collector 3506, anodically active material layer 3508b, separator 3500a, cathodically active material layer 512a and a cathode current collector 3510.

As shown in Fig. 33B, three electrode sub-units 3018 are stacked adjacently one atop each other, to form a stacked cell 3020. Electrode sub-units 3018 are stacked (in a manner similar to that described with respect to electrode sub-units 2018) to define a stacked population of electrode sub-units 3020. In the embodiment shown in Fig. 33B, there is a series of three electrode sub-units 3018 vertically adjacent one another in the Y-Axis direction. This stacked population of electrode sub-units 3020 thus comprises three unit cells 3300, two unit cells 3300' and two partial unit cells 3025a and 3025b. Unit cells 3300' are equivalent to unit cells 3300 but are a mirror image of unit cells 3300 in the Y-Axis direction. In this embodiment, partial unit cell 3025a comprises only anodically active material layer 3508a and a portion of anode current collector 3506, and partial unit cell 3025b comprises a portion of cathode current collector 3510 , cathodically active material layer 3512b and separator 3500b. In other embodiments, the layered arrangement of the electrode sub-units 3018 may vary in order and number of layers.

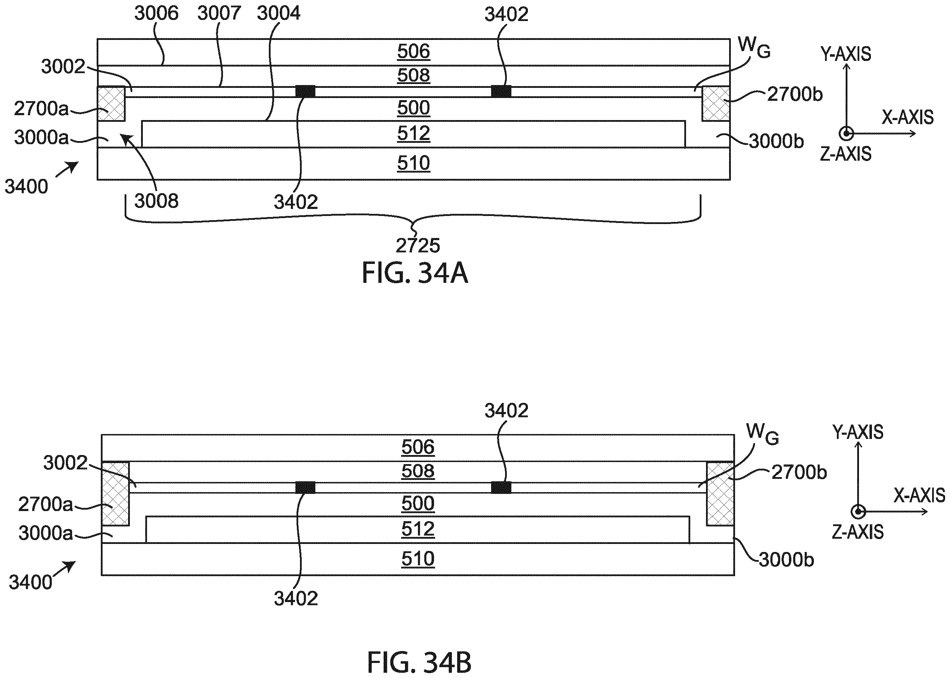

In some embodiments, with reference to Figs. 34A,B, one or more main body spacers 3400 may be provided within the main body 2725 (e.g., central portion) of an electrode sub-unit 3400. Electrode sub unit 3400 may be the same as or similar to electro sub units 2018, 3018, and 2900a-d, but with the addition of one or more main body spacers 3400. In this embodiment, the main body spacers perform a function similar to spacer members 2700a-d by providing an expansion gap 3002. Main body spacers may also be referred to herein as supplemental spacers. However, in this embodiment, the main body spacers 3402 may comprise the same material as anodically active material layer 508, when adjacent anodically active material layer 508, for example as shown in Fig. 34A. In another embodiment, such as that shown in Fig. 34B, the main body spacers 3402 may comprise the same material as cathodically active material layer 512 when adjacent cathodically active material layer 512. In other embodiments, the main body spacers 3402 may comprise a sacrificial material that is dissolved or otherwise removed any time after formation of the expansion gap 3002. The main body spacers 3400 may comprise a continuous spacer or a plurality of discrete spacers dispersed over a desired layer of the main body area 2725. In yet other embodiments, the main body spacers 3400 may also comprise a series of bumps, protrusions or surface roughness sufficient to provide the desired expansion gap 3002.

The following embodiments are provided to illustrate aspects of the disclosure, although the embodiments are not intended to be limiting and other aspects and/or embodiments may also be provided.
Embodiment 1. A secondary battery for cycling between a charged state and a discharged state, the battery comprises an enclosure and an electrode assembly disposed within the enclosure, wherein the electrode assembly has mutually perpendicular transverse, longitudinal, and vertical axes corresponding to the x, y and z axes, respectively, of a three-dimensional Cartesian coordinate system, the electrode assembly comprises a population of unit cells, each unit cell comprising an electrode current collector layer, an electrode layer, a separator layer, a counter-electrode layer, and a counter-electrode current collector layer in stacked succession in the longitudinal direction, the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, a subset of the unit cell population further comprising a pair of spacer members located in the stacked succession between the electrode current collector layer and the counter-electrode current collector layer, one of the spacer members being spaced in the transverse direction from the other spacer member, at least a portion of the counter-electrode active material of the counter-electrode layer being located between the spacer members such that the portion of the counter-electrode active material and the spacer members lie in a common plane defined by the x and z axes.
Embodiment 1A. An electrode assembly having mutually perpendicular transverse, longitudinal, and vertical axes corresponding to the x, y and z axes, respectively, of a three-dimensional Cartesian coordinate system. The electrode assembly comprises a population of unit cells, each unit cell comprises an electrode current collector layer, an electrode layer, a separator layer, a counter-electrode layer, and a counter-electrode current collector layer in stacked succession in the longitudinal direction. The electrode layer comprises an electrode active material, and the counter-electrode layer comprises a counter-electrode active material. One of the electrode active material and the counter-electrode material is a cathodically active material and the other of the electrode active material and the counter-electrode material is an anodically active material. A subset of the unit cell population further comprises a pair of spacer members located in the stacked succession between the electrode current collector layer and the counter-electrode current collector layer. One of the spacer members is spaced in the transverse direction from the other spacer member. At least a portion of the counter-electrode active material of the counter-electrode layer is located between the spacer members such that the portion of the counter-electrode active material and the spacer members lie in a common plane defined by the x and z axes.
Embodiment 1B. An electrode assembly for cycling between a charged state and a discharged state in a battery, the battery comprising an enclosure and an electrode assembly disposed within the enclosure, wherein the electrode assembly has mutually perpendicular transverse, longitudinal, and vertical axes corresponding to the x, y and z axes, respectively, of a three-dimensional Cartesian coordinate system. The electrode assembly comprises a population of unit cells, each unit cell having a main body, a first edge margin, a second edge margin separated in the transverse direction from the first edge margin, a front, a back separated in the longitudinal direction from the front, a top, and a bottom separated in the vertical direction from the top, each main body comprising an electrode current collector layer, an electrode layer, a separator layer, a counter-electrode layer, and a counter-electrode current collector layer in stacked succession in the longitudinal direction. The electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material. Each of the first edge margin and the second edge margin comprises (i) the electrode current collector layer, the separator layer, and the counter-electrode current collector layer, and (ii) a tape spacer, each of the tape spacers being adhered to at least one of (i) the electrode current collector, (ii) the electrode layer, (iii) the separator, and (iv) the counter-electrode current collector, the counter-electrode layer having a first end and a second end spaced in the transverse direction from the first end to define a transverse extent of the counter-electrode layer, the transverse extent of the counter-electrode layer terminating prior to the first edge margin and second edge margin.
Embodiment 1C. An electrode assembly for a battery configured to cycle between a charged state and a discharged state, the electrode assembly having mutually perpendicular transverse, longitudinal, and vertical axes corresponding to the x, y and z axes, respectively, of a three-dimensional Cartesian coordinate system, the electrode assembly having a main body, a first edge margin, a second edge margin separated in the transverse direction from the first edge margin, a front, a back separated in the longitudinal direction from the front, a top, and a bottom in the vertical direction from the top, the main body comprising an electrode current collector layer, an electrode layer, a separator layer, a counter-electrode layer, counter-electrode layer, and a counter-electrode current collector layer in stacked succession in the longitudinal direction. The electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material. Each of the first edge margin and the second edge margins of the main body comprises (i) the electrode current collector layer, the separator layer, and the counter-electrode current collector layer, and (ii) a first tape spacer disposed in the first edge margin and a second tape spacer disposed in the second edge margin; each of the first tape spacer and the second tape spacer being adhered to at least one of (i) the electrode current collector, (ii) the electrode layer, (iii) the separator, and (iv) the counter-electrode current collector, the counter-electrode layer having a first end and a second end spaced in the transverse direction from the first end to define a transverse extent of the counter-electrode layer, the transverse extent of the counter-electrode layer terminating prior to the first edge margin and second edge margin.
Embodiment ID. A secondary battery for cycling between a charged state and a discharged state, the battery comprising an enclosure and an electrode assembly disposed within the enclosure, wherein: the electrode assembly has mutually perpendicular transverse, longitudinal, and vertical axes corresponding to the x, y and z axes, respectively, of a three-dimensional Cartesian coordinate system, the electrode assembly comprises a population of unit cells, each unit cell comprising an electrode current collector layer, an electrode layer, a separator layer, a counter-electrode layer, and a counter-electrode current collector layer in stacked succession in the longitudinal direction, the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, a subset of the unit cell population further comprising a pair of spacer members located in the stacked succession between the electrode current collector layer and the counter-electrode current collector layer, one of the spacer members being spaced in the transverse direction from the other spacer member of the pair of spacer members, at least a portion of the counter-electrode active material of the counter-electrode layer being located between the pair of spacer members such that the portion of the counter-electrode active material and the spacer members lie in a common plane defined by the x and z axes.
Embodiment 2. The secondary battery or electrode assembly set forth in any of Embodiments 1-1C wherein the counter-electrode layer has a central portion and a pair of flank portions on opposite sides of the central portion, the flank portions having a width equal to or less than 50 percent of a width of the central portion.
Embodiment 3. The secondary battery or electrode assembly set forth in any prior Embodiment wherein the width of the flank portions is less than 40 percent the width of the central portion.
Embodiment 4. The secondary battery or electrode assembly set forth in any prior Embodiment wherein the width of the flank portions is less than 30 percent the width of the central portion.
Embodiment 5. The secondary battery or electrode assembly set forth in any prior Embodiment wherein the width of the flank portions is less than 20 percent the width of the central portion.
Embodiment 6. The secondary battery or electrode assembly set forth in any prior Embodiment wherein the width of the flank portions is less than 10 percent the width of the central portion.
Embodiment 7. The secondary battery or electrode assembly set forth in any prior Embodiment wherein the counter-electrode layer has a maximum width measured between an interface with the counter-electrode current collector layer and an interface with the separator layer, the common plane occurring over at least 50 percent of the maximum width.
Embodiment 8. The secondary battery or electrode assembly set forth in any prior Embodiment wherein the common plane occurs over at least 60 percent of the maximum width.
Embodiment 9. The secondary battery or electrode assembly set forth in any prior Embodiment wherein the common plane occurs over at least 70 percent of the maximum width.
Embodiment 10. The secondary battery or electrode assembly set forth in any prior Embodiment wherein the common plane occurs over at least 80 percent of the maximum width.
Embodiment 11. The secondary battery or electrode assembly set forth in claim 10 wherein the common plane occurs over at least 90 percent of the maximum width.
Embodiment 12. The secondary battery or electrode assembly set forth in any prior Embodiment wherein the spacer members have a length extending in the transverse direction, the length of the spacer members being equal to or less than 500 µm.
Embodiment 13. The secondary battery or electrode assembly set forth in any prior Embodiment wherein the length of the spacer members is less than 400 µm.
Embodiment 14. The secondary battery or electrode assembly set forth in any prior Embodiment wherein the length of the spacer members is less than 300 µm.
Embodiment 15. The secondary battery or electrode assembly set forth in any prior Embodiment wherein the length of the spacer members is less than 200 µm.
Embodiment 16. The secondary battery or electrode assembly set forth in any prior Embodiment wherein the length of the spacer members is less than 100 µm.
Embodiment 17. The secondary battery or electrode assembly set forth in any prior Embodiment wherein the counter-electrode layer has a first end and a second end spaced in the transverse direction from the first end, the first end of the counter-electrode layer being adjacent to one of the spacer members and the second end of the counter-electrode layer being adjacent to the other one of the spacer members.
Embodiment 18. The secondary battery or electrode assembly set forth in any prior Embodiment wherein the first end and the second end correspond to the pair of flank portions.
Embodiment 19. The secondary battery or electrode assembly set forth in any prior Embodiment wherein the counter-electrode material is a cathodically active material, and the electrode active material is an anodically active material.
Embodiment 20. The secondary battery or electrode assembly set forth in any prior Embodiment wherein the electrode material is a cathodically active material, and the counter-electrode active material is an anodically active material.
Embodiment 21. The secondary battery or electrode assembly set forth in any prior Embodiment wherein the spacer members are disposed between the separator layer and the electrode layer.
Embodiment 22. The secondary battery or electrode assembly set forth in any prior Embodiment wherein the spacer members are disposed between the separator layer and the electrode current collector layer.
Embodiment 23. The secondary battery or electrode assembly set forth in any prior Embodiment wherein the spacer members are disposed between the separator and the counter-electrode layer.
Embodiment 24. The secondary battery or electrode assembly set forth in any prior Embodiment wherein the spacer members are disposed between the separator layer and the counter-electrode current collector layer.
Embodiment 25. The secondary battery or electrode assembly set forth in any prior Embodiment wherein the spacer members are adhered to at least one of the electrode current collector layer, the electrode layer, the separator layer, the counter-electrode layer, and the counter-electrode current collector layer.
Embodiment 26. The secondary battery or electrode assembly set forth in any prior Embodiment wherein the spacer members are adhered to the electrode current collector layer.
Embodiment 27. The secondary battery or electrode assembly set forth in any prior Embodiment wherein the spacer members are adhered to the electrode layer.
Embodiment 28. The secondary battery or electrode assembly set forth in any prior Embodiment wherein the spacer members are adhered to the separator layer.
Embodiment 29. The secondary battery or electrode assembly set forth in any prior Embodiment wherein the spacer members are adhered to the counter-electrode current collector layer.
Embodiment 30. The secondary battery or electrode assembly set forth in any prior Embodiment wherein the electrode layer has a first end and a second end spaced in the transverse direction from the first end to define a transverse extent of the electrode layer, the transverse extent of the electrode layer terminating prior to a terminus of the unit cell.
Embodiment 31. The secondary battery or electrode assembly set forth in any prior Embodiment wherein (i) the members of the unit cell population are in stacked succession in the longitudinal direction, (ii) the unit cell population comprises two sets of adjacent pairs of unit cells (iii) one of the two sets of the adjacent pairs share a common electrode current collector layer and the other of the two sets of the adjacent pairs share a common counter-electrode current collector layer.
Embodiment 32. The secondary battery or electrode assembly set forth in any prior Embodiment wherein the unit cell population comprises at least 5 members.
Embodiment 33. The secondary battery or electrode assembly set forth in any prior Embodiment wherein the unit cell population comprises at least 10 members.
Embodiment 34. The secondary battery or electrode assembly set forth in any prior Embodiment the unit cell population comprises at least 25 members.
Embodiment 35. The secondary battery or electrode assembly set forth in any prior Embodiment wherein the unit cell population comprises at least 50 members.
Embodiment 36. The secondary battery or electrode assembly set forth in any prior Embodiment wherein the unit cell population comprises at least 100 members.
Embodiment 37. The secondary battery or electrode assembly set forth in any prior Embodiment wherein the unit cell population comprises at least 250 members.
Embodiment 38. The secondary battery or electrode assembly set forth in any prior Embodiment wherein the unit cell population comprises at least 500 members.
Embodiment 39. The secondary battery or electrode assembly set forth in any prior Embodiment wherein the spacer members comprise an electrically insulating material.
Embodiment 40. The secondary battery or electrode assembly set forth in any prior Embodiment wherein the unit cell comprises a supplemental spacer.
Embodiment 41. The secondary battery or electrode assembly set forth in any prior Embodiment wherein the supplemental spacer comprises the same material as the separator layer.
Embodiment 42. The secondary battery or electrode assembly set forth in any prior Embodiment wherein the unit cell comprises a supplemental spacer comprising stabilized lithium metal particles.
Embodiment 43. The secondary battery or electrode assembly set forth in any prior Embodiment wherein the unit cell comprises a supplemental spacer comprising stabilized lithium metal particles selected from the group consisting of lithium carbonate-stabilized lithium metal powder, lithium silicate -stabilized lithium metal powder.
Embodiment 44. The secondary battery or electrode assembly set forth in any prior Embodiment wherein the unit cell comprises a supplemental spacer comprising the stabilized lithium metal particles applied by spraying, loading or otherwise disposing the stabilized lithium metal particles at a loading amount of about 0.05 to 5 mg/cm².
Embodiment 45. The secondary battery or electrode assembly set forth in any prior Embodiment wherein the unit cell comprises a supplemental spacer comprising the stabilized lithium metal particles applied by spraying, loading or otherwise disposing the stabilized lithium metal particles at a loading amount of about 0.1 to 4 mg/cm².
Embodiment 46. The secondary battery or electrode assembly set forth in any prior Embodiment wherein the unit cell comprises a supplemental spacer comprising the stabilized lithium metal particles applied by spraying, loading or otherwise disposing the stabilized lithium metal particles at a loading amount of about 0.5 to 3 mg/cm².
Embodiment 47. The secondary battery or electrode assembly set forth in any prior Embodiment wherein the unit cell comprises a supplemental spacer comprising stabilized lithium metal particles having an average particle size (Dso) of about 5 to 200 µm.
Embodiment 48. The secondary battery or electrode assembly set forth in any prior Embodiment wherein the unit cell comprises a supplemental spacer comprising stabilized lithium metal particles having an average particle size (Dso) of about 10 to 100 µm.
Embodiment 49. The secondary battery or electrode assembly set forth in any prior Embodiment wherein the unit cell comprises a supplemental spacer comprising stabilized lithium metal particles having an average particle size (Dso) of about 20 to 80 µm.
Embodiment 50. The secondary battery or electrode assembly set forth in any prior Embodiment wherein the unit cell comprises a supplemental spacer comprising stabilized lithium metal particles having an average particle size (Dso) of about 30 to 50 µm.
Embodiment 51. The secondary battery or electrode assembly set forth in any prior Embodiment wherein the spacer members comprise a spacer material selected from the group consisting of polymeric materials, composites, a material comprised by the electrode current collector, an electrode active material, the counter-electrode active material, a material comprised by the counter-electrode current collector, a material comprised by the separator, or a material that is chemically inert in the battery environment.
Embodiment 52. The secondary battery or electrode assembly set forth in any prior Embodiment wherein the spacer members comprise an anodically active material.
Embodiment 53. The secondary battery or electrode assembly set forth in any prior Embodiment wherein the spacer members comprise an anodically active material having a capacity for carrier ions that is less than one mole of carrier ion per mole of spacer material.
Embodiment 54. The secondary battery or electrode assembly set forth in any prior Embodiment wherein the spacer members comprise graphite or graphene.
Embodiment 55. The secondary battery or electrode assembly set forth in any prior Embodiment wherein the spacer members comprise a cathodically active material.
Embodiment 56. The secondary battery or electrode assembly set forth in any prior Embodiment wherein the spacer members comprise a polymeric material.
Embodiment 57. The secondary battery or electrode assembly set forth in any prior Embodiment wherein the spacer members comprise a homopolymer, copolymer or polymer blend).
Embodiment 58. The secondary battery or electrode assembly set forth in any prior Embodiment wherein the spacer members comprise a fluoropolymer derived from monomers containing vinylidene fluoride, hexafluoropropylene, tetrafluoropropene, a polyolefin such as polyethylene, polypropylene, or polybutene, ethylene-diene-propene terpolymer, polystyrene, polymethyl methacrylate, polyethylene glycol, polyvinyl acetate, polyvinyl butyral, polyacetal, and polyethyleneglycol diacrylate, methyl cellulose, carboxymethyl cellulose, styrene rubber, butadiene rubber, styrene-butadiene rubber, isoprene rubber, polyacrylamide, polyvinyl ether, polyacrylic acid, polymethacrylic acid, polyacrylonitrile, polyvinylidene fluoride polyacrylonitrile, polyethylene oxide, acrylates, styrenes, epoxies, silicones, polyvinylidene fluoride-co-hexafluoropropylene, polyvinylidene fluoride-co-trichloroethylene, polymethylmethacrylate, polyacrylonitrile, polyvinylpyrrolidone, polyvinyl acetate, polyethylene-co-vinyl acetate, polyethylene oxide, cellulose acetate, cellulose acetate butyrate, cellulose acetate propionate, cyanoethylpullulan, cyanoethyl polyvinylalcohol, cyanoethylcellulose, cyanoethylsucrose, pullulan, carboxymetyl cellulose, acrylonitrile-styrene-butadiene copolymer, polyimide, polyvinylidene fluoride-hexafluoro propylene, polyvinylidene fluoride-trichloroethylene, polymethyl methacrylate, polyacrylonitrile, polyvinyl pyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile styrene butadiene copolymer, polyimide, polyethylene terephthalate, polybutylene terephthalate, polyester, polyacetal, polyamide, polyetheretherketone, polyether sulfone, polyphenylene oxide, polyphenylene sulfide, polyethylene naphthalene, and/or combinations or a copolymer thereof.
Embodiment 59. The secondary battery or electrode assembly set forth in any prior Embodiment wherein the spacer members comprise a fluoropolymer.
Embodiment 60. The secondary battery or electrode assembly set forth in any prior Embodiment wherein the spacer members comprise a polyolefin.
Embodiment 61. The secondary battery or electrode assembly set forth in any prior Embodiment wherein the spacer members comprise a polyolefin selected from the group consisting of homopolymers, copolymers and polymer blends of polyethylene, polypropylene, and polybutene.
Embodiment 62. The secondary battery or electrode assembly set forth in any prior Embodiment wherein the spacer members comprise polyethylene or polypropylene.
Embodiment 63. The secondary battery or electrode assembly set forth in any prior Embodiment wherein the spacer members comprise an adhesive tape having a base and an adhesive layer provided on one surface of the base.
Embodiment 64. The secondary battery or electrode assembly set forth in any prior Embodiment wherein the spacer members comprise an adhesive tape having a base and an adhesive layer provided on one surface of the base wherein the adhesive tape base comprises a polymeric film selected from the group consisting of polyethylene, polypropylene, polyethylene terephthalate, polybutylene terephthalate, polyphenylene sulfide, polyimide, and polyamide films, and combinations, thereof.
Embodiment 65. The secondary battery or electrode assembly set forth in any prior Embodiment wherein the spacer members comprise an adhesive tape having a base and an adhesive layer provided on one surface of the base wherein the adhesive tape base comprises a polymeric film selected from the group consisting of polyolefin, polyethylene terephthalate and polyimide films.
Embodiment 66. The secondary battery or electrode assembly set forth in any prior Embodiment wherein the spacer members comprise an adhesive tape having a base and an adhesive layer provided on one surface of the base wherein the adhesive tape base has a thickness in the range of about 4 to 200 µm.
Embodiment 67. The secondary battery or electrode assembly set forth in any prior Embodiment wherein the spacer members comprise an adhesive tape having a base and an adhesive layer provided on one surface of the base wherein the adhesive tape base has a thickness in the range of about 6 to 150 µm.
Embodiment 68. The secondary battery or electrode assembly set forth in any prior Embodiment wherein the spacer members comprise an adhesive tape having a base and an adhesive layer provided on one surface of the base wherein the adhesive tape base has a thickness in the range of about 25 to 100 µm.
Embodiment 69. The secondary battery or electrode assembly set forth in any prior Embodiment wherein the spacer members comprise an adhesive tape having a base and an adhesive layer provided on one surface of the base wherein the adhesive constituting the adhesive layer of the adhesive tape comprises a rubber-based adhesive, an acrylic adhesive, a silicone-based adhesive or a combination thereof.
Embodiment 70. The secondary battery or electrode assembly set forth in any prior Embodiment wherein the spacer members comprise the same material as the separator layer.
Embodiment 71. The secondary battery or electrode assembly set forth in any prior Embodiment wherein the spacer members comprise an electrically conductive material.
Embodiment 72. The secondary battery or electrode assembly set forth in any prior Embodiment wherein the spacer members comprise the same material as the electrode layer.
Embodiment 73. The secondary battery or electrode assembly set forth in any prior Embodiment wherein the spacer members define, in part, transverse terminus of the unit cell.
Embodiment 74. The secondary battery or electrode assembly set forth in any prior Embodiment wherein the spacer members accommodate expansion of at least one of the electrode layer and the counter-electrode layer in the longitudinal direction while the battery is cycling between the charged state and the discharged state.
Embodiment 75. The secondary battery or electrode assembly set forth in any prior Embodiment wherein the spacer members accommodate expansion of the electrode layer.
Embodiment 76. The secondary battery or electrode assembly set forth in any prior Embodiment wherein a first portion of the separator layer lies in a first plane defined by the x and z axes, and a pair of second portions of the separator layer lies in a second plane defined by the x and z axes, the second plane being offset from the first plane in the longitudinal direction.
Embodiment 77. The secondary battery or electrode assembly set forth in any prior Embodiment wherein the first portion of the separator layer is disposed in face-to-face engagement with the counter-electrode layer, and the second portions of the separator layer is disposed adjacent a first end and a second end of the counter-electrode layer.
Embodiment 78. The secondary battery or electrode assembly set forth in any prior Embodiment wherein the electrode layer has a transverse extent and the counter-electrode layer has a transverse extent, the transverse extent of the electrode layer being greater than the transverse extend of the counter-electrode layer.
Embodiment 79. The secondary battery or electrode assembly set forth in any prior Embodiment wherein the transverse extent of the electrode layer is less than 500 µm greater than the transverse extend of the counter-electrode layer.
Embodiment 80. The secondary battery or electrode assembly set forth in any prior Embodiment wherein the transverse extent of the electrode layer is less than 400 µm greater than the transverse extend of the counter-electrode layer.
Embodiment 81. The secondary battery or electrode assembly set forth in any prior Embodiment wherein the transverse extent of the electrode layer is less than 300 µm greater than the transverse extend of the counter-electrode layer.
Embodiment 82. The secondary battery or electrode assembly set forth in any prior Embodiment wherein the transverse extent of the electrode layer is less than 200 µm greater than the transverse extend of the counter-electrode layer.
Embodiment 83. The secondary battery or electrode assembly set forth in claim 82 wherein the transverse extent of the electrode layer is less than 100 µm greater than the transverse extend of the counter-electrode layer.
Embodiment 84. The secondary battery or electrode assembly set forth in any prior Embodiment wherein the electrode layer has a transverse extent and the counter-electrode layer has a transverse extent, the transverse extent of the electrode layer being equal to the transverse extend of the counter-electrode layer.
Embodiment 85. The secondary battery or electrode assembly set forth in any prior Embodiment wherein the unit cell has a height measured in the vertical direction and the spacer members have a height measured in the vertical direction, the height of the unit cell being equal to the height of the spacer members.
Embodiment 86. The secondary battery or electrode assembly set forth in any prior Embodiment wherein the unit cell has a height measured in the vertical direction and the spacer members have a height measured in the vertical direction, the height of the unit cell being greater than the height of the spacer members.
Embodiment 87. The secondary battery or electrode assembly set forth in any prior Embodiment wherein the unit cell has a height measured in the vertical direction and the spacer members have a height measured in the vertical direction, the height of the unit cell being less than the height of the spacer members.
Embodiment 88. The secondary battery or electrode assembly set forth in any prior Embodiment wherein the pair of spacer members defines a first pair of spacer members and the subset of the unit cell population further comprises a second pair of spacer members located in the stacked succession between the electrode current collector layer and the counter-electrode current collector layer.
Embodiment 89. The secondary battery or electrode assembly set forth in any prior Embodiment wherein the spacer members of the first pair of spacer members are disposed on one side of the separator layer and the spacer members of the second pair of spacer members are disposed on the opposite side on the separator layer.
Embodiment 90. The secondary battery or electrode assembly set forth in any prior Embodiment wherein the spacer members of the first pair of spacer members are disposed between the separator layer and the counter-electrode current collector layer, and the spacer members of the second pair of spacer members are disposed between the separator layer and the electrode current collector layer.
Embodiment 91. The secondary battery or electrode assembly set forth in any prior Embodiment wherein one of the electrode active material and the counter-electrode material is an anodically active material selected from the group consisting of: (a) silicon (Si), germanium (Ge), tin (Sn), lead (Pb), antimony (Sb), bismuth (Bi), zinc (Zn), aluminum (Al), titanium (Ti), nickel (Ni), cobalt (Co), and cadmium (Cd); (b) alloys or intermetallic compounds of Si, Ge, Sn, Pb, Sb, Bi, Zn, Al, Ti, Ni, Co, or Cd with other elements; (c) oxides, carbides, nitrides, sulfides, phosphides, selenides, and tellurides of Si, Ge, Sn, Pb, Sb, Bi, Zn, Al, Ti, Fe, Ni, Co, V, or Cd, and their mixtures, composites, or lithium-containing composites; (d) salts and hydroxides of Sn; (e) lithium titanate, lithium manganate, lithium aluminate, lithium-containing titanium oxide, lithium transition metal oxide, ZnCo₂O₄; (f) particles of graphite and carbon; (g) lithium metal; and (h) combinations thereof.
Embodiment 92. The secondary battery or electrode assembly set forth in any prior Embodiment wherein one of the electrode active material and the counter-electrode material is an anodically active material selected from the group consisting of silicon (Si), germanium (Ge), tin (Sn), lead (Pb), antimony (Sb), bismuth (Bi), zinc (Zn), aluminum (Al), titanium (Ti), nickel (Ni), cobalt (Co), and cadmium (Cd).
Embodiment 93. The secondary battery or electrode assembly set forth in any prior Embodiment wherein one of the electrode active material and the counter-electrode material is an anodically active material selected from the group consisting of alloys and intermetallic compounds of Si, Ge, Sn, Pb, Sb, Bi, Zn, Al, Ti, Ni, Co, or Cd with other elements.
Embodiment 94. The secondary battery or electrode assembly set forth in any prior Embodiment wherein one of the electrode active material and the counter-electrode material is an anodically active material selected from the group consisting of oxides, carbides, nitrides, sulfides, phosphides, selenides, and tellurides of Si, Ge, Sn, Pb, Sb, Bi, Zn, Al, Ti, Fe, Ni, Co, V, and Cd.
Embodiment 95. The secondary battery or electrode assembly set forth in any prior Embodiment wherein one of the electrode active material and the counter-electrode material is an anodically active material selected from the group consisting of oxides, carbides, nitrides, sulfides, phosphides, selenides, and tellurides of Si.
Embodiment 96. The secondary battery or electrode assembly set forth in any prior Embodiment wherein one of the electrode active material and the counter-electrode material is an anodically active material selected from the group consisting of silicon and the oxides and carbides of silicon.
Embodiment 97. The secondary battery or electrode assembly set forth in any prior Embodiment wherein one of the electrode active material and the counter-electrode material is anodically active material comprising lithium metal.
Embodiment 98. The secondary battery or electrode assembly set forth in any prior Embodiment wherein one of the electrode active material and the counter-electrode material is an anodically active material selected from the group consisting of graphite and carbon.
Embodiment 99. The secondary battery or electrode assembly set forth in any prior Embodiment wherein within the enclosure the secondary battery further comprises a non-aqueous, organic electrolyte.
Embodiment 100. The secondary battery or electrode assembly set forth in any prior Embodiment wherein within the enclosure the secondary battery further comprises a non-aqueous electrolyte comprising a mixture of a lithium salt and an organic solvent.
Embodiment 101. The secondary battery or electrode assembly set forth in any prior Embodiment wherein within the enclosure the secondary battery further comprises a polymer electrolyte.
Embodiment 102. The secondary battery or electrode assembly set forth in any prior Embodiment wherein within the enclosure the secondary battery further comprises a solid electrolyte.
Embodiment 103. The secondary battery or electrode assembly set forth in any prior Embodiment wherein within the enclosure the secondary battery further comprises a solid electrolyte selected from the group consisting of sulfide-based electrolytes.
Embodiment 104. The secondary battery or electrode assembly set forth in any prior Embodiment wherein within the enclosure the secondary battery further comprises a solid electrolyte selected from the group consisting of lithium tin phosphorus sulfide (Li₁₀SnP₂S₁₂), lithium phosphorus sulfide (β-Li₃PS₄ ) and lithium phosphorus sulfur chloride iodide (Li₆PS₅Cl_{0.9}I_{0.1}).
Embodiment 105. The secondary battery or electrode assembly set forth in any prior Embodiment wherein within the enclosure the secondary battery further comprises a polymer based electrolyte.
Embodiment 106. The secondary battery or electrode assembly set forth in any prior Embodiment wherein within the enclosure the secondary battery further comprises a polymer electrolyte selected from the group consisting of PEO-based polymer electrolyte, polymer-ceramic composite electrolyte (solid), polymer-ceramic composite electrolyte, and polymer-ceramic composite electrolyte.
107. The secondary battery or electrode assembly set forth in any prior Embodiment wherein within the enclosure the secondary battery further comprises a solid electrolyte selected from the group consisting of oxide based electrolytes.
Embodiment 108. The secondary battery or electrode assembly set forth in any prior Embodiment wherein within the enclosure the secondary battery further comprises a solid electrolyte selected from the group consisting of lithium lanthanum titanate (Li_{0.34}La_{0.56}TiO₃), Al-doped lithium lanthanum zirconate (Li_{6.24}La₃Zr₂Al_{0.24}O_{11.98}), Ta-doped lithium lanthanum zirconate (Li_{6.4}La₃Zr_{1.4}Ta_{0.6}O₁₂) and lithium aluminum titanium phosphate (Li_{1.4}Al_{0.4}Ti_{1.6}(PO₄)₃).
Embodiment 109. The secondary battery or electrode assembly set forth in any prior Embodiment wherein one of the electrode active material and the counter-electrode material is a cathodically active material selected from the group consisting of intercalation chemistry positive electrodes and conversion chemistry positive electrodes.
Embodiment 110. The secondary battery or electrode assembly set forth in any prior Embodiment wherein one of the electrode active material and the counter-electrode material is a cathodically active material comprising an intercalation chemistry positive electrode material.
Embodiment 111. The secondary battery or electrode assembly set forth in any prior Embodiment wherein one of the electrode active material and the counter-electrode material is a cathodically active material comprising a conversion chemistry positive electrode active material.
Embodiment 112. The secondary battery or electrode assembly set forth in any prior Embodiment wherein one of the electrode active material and the counter-electrode material is a cathodically active material selected from the group consisting of S (or Li₂S in the lithiated state), LiF, Fe, Cu, Ni, FeF₂, FeO_{d}F_{3.2d}, FeF₃, CoF₃, CoF₂, CuF₂, NiF₂, where 0 ≤ d ≤ 0.5.
Embodiment 113. A method of manufacturing a unit cell for use with a secondary battery, the method comprises stacking an electrode current collector layer, an electrode layer, a separator layer, a counter-electrode layer, and a counter-electrode current collector layer in succession in the longitudinal direction, the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, and placing a pair of spacer members in the stacked succession between the electrode current collector layer and the counter-electrode current collector layer, one of the spacer members being spaced in a transverse direction from the other spacer member, at least a portion of the counter-electrode active material of the counter-electrode layer being located between the spacer members such that the portion of the counter-electrode active material and the spacer members lie in a common plane defined by an x axis and a z axis.
Embodiment 113A. A method of manufacturing an electrode assembly for use with a secondary battery. The method comprises stacking an electrode current collector layer, an electrode layer, a separator layer, a counter-electrode layer, and a counter-electrode current collector layer in succession in the longitudinal direction. The electrode layer comprises an electrode active material, and the counter-electrode layer comprises a counter-electrode active material. One of the electrode active material and the counter-electrode material is a cathodically active material and the other of the electrode active material and the counter-electrode material is an anodically active material. The method includes placing a pair of spacer members in the stacked succession between the electrode current collector layer and the counter-electrode current collector layer. One of the spacer members is spaced in a transverse direction from the other spacer member. At least a portion of the counter-electrode active material of the counter-electrode layer is located between the spacer members such that the portion of the counter-electrode active material and the spacer members lie in a common plane defined by an x axis and a z axis.
Embodiment 113B. A method of preparing an electrode assembly for a battery configured to cycle between a charged state and a discharged state, the method comprising: stacking an electrode current collector layer, an electrode layer, a separator layer, a counter-electrode layer, and a counter-electrode current collector layer in stacked succession in the longitudinal direction; wherein the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, adhering a tape spacer to at least one of the electrode current collector layer, the electrode layer, the separator layer, the counter-electrode layer, or the counter-electrode current collector layer within a first edge margin and a second edge margin such that the first edge margin and the second edge margin comprises (i) the electrode current collector layer, the separator layer, and the counter-electrode current collector layer, and (ii) the tape spacer, wherein the counter-electrode layer has a first end and a second end spaced in the transverse direction from the first end to define a transverse extent of the counter-electrode layer, and the counter-electrode layer is provided such that the transverse extent of the counter electrode layer terminates prior to the first edge margin and second edge margin.
Embodiment 113C. A method of manufacturing a secondary battery or electrode assembly as set forth in any of Embodiments 1 - 112, the method comprising the method of any of Embodiments 113, 113A and 113B.
Embodiment 113D. A method of manufacturing a unit cell for use with a secondary battery, the unit cell having mutually perpendicular transverse, longitudinal, and vertical axes corresponding to the x, y and z axes, respectively, of a three-dimensional Cartesian coordinate system the method comprising: stacking an electrode current collector layer, an electrode layer, a separator layer, a counter-electrode layer, and a counter-electrode current collector layer in succession in the longitudinal axis direction, the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, and placing a pair of spacer members in the stacked succession between the electrode current collector layer and the counter-electrode current collector layer, one of the spacer members being spaced in a transverse direction from the other spacer member, at least a portion of the counter-electrode active material of the counter-electrode layer being located between the spacer members such that the portion of the counter-electrode active material and the spacer members lie in a common plane defined by the x axis and the z axis.
Embodiment 114. The method set forth in any of Embodiments 113 - 113C wherein the spacer members are placed between the separator layer and the electrode layer.
Embodiment 115. The method set forth in any prior Embodiment wherein the spacer members are placed between the separator layer and the electrode current collector layer.
Embodiment 116. The method set forth in any prior Embodiment wherein the spacer members placed between the separator and the counter-electrode layer.
Embodiment 117. The method set forth in any prior Embodiment wherein the spacer members are placed between the separator layer and the counter-electrode current collector layer.
Embodiment 118. The method set forth in any prior Embodiment wherein the spacer members are adhered to at least one of the electrode current collector layer, the electrode layer, the separator layer, the counter-electrode layer, and the counter-electrode current collector layer.
Embodiment 119. The method set forth in any prior Embodiment wherein the spacer members are adhered to the electrode current collector layer.
Embodiment 120. The method set forth in any prior Embodiment wherein the spacer members are adhered to the electrode layer.
Embodiment 121. The method set forth in any prior Embodiment wherein the spacer members are adhered to the separator layer.
Embodiment 122. The method set forth in any prior Embodiment wherein the spacer members are adhered to the counter-electrode current collector layer.
Embodiment 123. The method set forth in any prior Embodiment further comprising placing a supplemental spacer in the stacked succession between the electrode current collector layer and the counter-electrode current collector layer.
Embodiment 124. The method set forth in any prior Embodiment wherein a first portion of the separator layer is stacked in face-to-face engagement with the counter-electrode layer, and second portions of the separator layer are stacked adjacent a first end and a second end of the counter-electrode layer.
Embodiment 125. The method set forth in any prior Embodiment wherein the electrode current collector layer, the electrode layer, the separator layer, the counter-electrode layer, and the counter-electrode current collector layer are stacked on alignment pins.
Embodiment 126. The method set forth in any prior Embodiment wherein the pair of spacer members is placed on the alignment pins between the electrode current collector layer and the counter-electrode current collector layer.
Embodiment 127. A method for merging a plurality of webs of electrode materials, the process comprises: unwinding a first web of the electrode material along a first web merge path, the first web comprising a population of electrode sub-units delineated by corresponding weakened tear patterns and a population of first conveying features, unwinding a second web of the electrode material along a second web merge path downstream of the first web merge path, the second web comprising a population of electrode sub-units delineated by corresponding weakened tear patterns and a population of second conveying features; conveying a belt comprising a plurality of projections in a web merge direction adjacent the first web merge path and the second web merge path, the plurality of projections configured to engage with the first conveying features of the first web and the second conveying features of the second web; inserting a population of spacer members between the first web of electrode material and the second web of electrode material; and overlaying the second web of the electrode material on the first web of electrode material at a second web merge location downstream of the first web merge location, the population of spacer members being captured between the first web of electrode material and the second web of electrode material.
Embodiment 127A. A method for merging a plurality of webs of electrode materials, the process comprising: unwinding a first web of the electrode material along a first web merge path, the first web comprising a population of electrode sub-units delineated by corresponding weakened tear patterns and a population of first conveying features, unwinding a second web of the electrode material along a second web merge path downstream of the first web merge path, the second web comprising a population of electrode sub-units delineated by corresponding weakened tear patterns and a population of second conveying features; conveying a belt comprising a plurality of projections in a web merge direction adjacent the first web merge path and the second web merge path, the plurality of projections configured to engage with the first conveying features of the first web and the second conveying features of the second web; inserting a population of spacer members between the first web of electrode material and the second web of electrode material; and overlaying the second web of the electrode material on the first web of electrode material at a second web merge location downstream of the first web merge location, the population of spacer members being captured between the first web of electrode material and the second web of electrode material.
Embodiment 128. The method set forth in any prior Embodiment wherein inserting a population of spacer members between the first web of electrode material and the second web of electrode material comprises unwinding a web comprising a population of spacer members and merging the web of spacer members between the first web of electrode material and the second web of electrode material.
Embodiment 129.The method set forth in any prior Embodiment wherein inserting a population of spacer members between the first web of electrode material and the second web of electrode material comprises unwinding a web comprising a population of spacer members and unwinding a web comprising a plurality of separator members, and merging the web of spacer members adjacent to the web of separator members and between the first web of electrode material and the second web of electrode material.
This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

The following non-exhaustive list of aspects also forms part of the present disclosure.
Aspect 1. A secondary battery for cycling between a charged state and a discharged state, the battery comprising an enclosure and an electrode assembly disposed within the enclosure, wherein:
   the electrode assembly has mutually perpendicular transverse, longitudinal, and vertical axes corresponding to the x, y and z axes, respectively, of a three-dimensional Cartesian coordinate system,
   the electrode assembly comprises a population of unit cells, each unit cell comprising an electrode current collector layer, an electrode layer, a separator layer, a counter-electrode layer, and a counter-electrode current collector layer in stacked succession in a longitudinal direction,
   the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material,
   a subset of the unit cell population further comprising a pair of spacer members located in the stacked succession between the electrode current collector layer and the counter-electrode current collector layer, one of the spacer members being spaced in a transverse direction from the other spacer member of the pair of spacer members, at least a portion of the counter-electrode active material of the counter-electrode layer being located between the pair of spacer members such that the portion of the counter-electrode active material and the spacer members lie in a common plane defined by the x and z axes.
Aspect 2. The secondary battery set forth in Aspect 1 wherein the counter-electrode layer has a central portion and a pair of flank portions on opposite sides of the central portion, the flank portions having a width equal to or less than 50 percent of a width of the central portion and wherein the central portion is the portion of the counter-electrode active material that lies in the common plane.
Aspect 3. The secondary battery set forth in Aspect 1 wherein the counter-electrode layer has a central portion and a pair of flank portions on opposite sides of the central portion, the flank portions having a width equal to or less than 30 percent of a width of the central portion and wherein the flank portion is the portion of the counter-electrode active material that lies in the common plane.
Aspect 4. The secondary battery set forth in any preceding Aspect wherein the counter-electrode layer has a maximum width measured between an interface with the counter-electrode current collector layer and an interface with the separator layer, the common plane occurring over at least 50 percent of the maximum width.
Aspect 5. The secondary battery set forth in any preceding Aspect wherein each of the spacer members have a length extending in the transverse direction, the length of the spacer members being equal to or less than 500 µm.
Aspect 6. The secondary battery set forth in any preceding Aspect wherein the counter-electrode layer has a first end and a second end spaced in the transverse direction from the first end, the first end of the counter-electrode layer being adjacent to one of the spacer members and the second end of the counter-electrode layer being adjacent to the other one of the spacer members.
Aspect 7. The secondary battery set forth in Aspect 6 wherein the first end and the second end correspond to the pair of flank portions.
Aspect 8. The secondary battery set forth in any preceding Aspect wherein the spacer members are disposed between the separator layer and the electrode layer.
Aspect 9. The secondary battery set forth in any preceding Aspect wherein the spacer members are disposed between the separator layer and the electrode current collector layer.
Aspect 10. The secondary battery set forth in any preceding Aspect wherein the spacer members are disposed between the separator and the counter-electrode layer.
Aspect 11. The secondary battery set forth in any preceding Aspect wherein the spacer members are disposed between the separator layer and the counter-electrode current collector layer.
Aspect 12. The secondary battery set forth in any preceding Aspect wherein the spacer members are adhered to at least one of the electrode current collector layer, the electrode layer, the separator layer, the counter-electrode layer, and the counter-electrode current collector layer.
Aspect 13. The secondary battery set forth in any preceding Aspect wherein the electrode layer has a first end and a second end spaced in the transverse direction from the first end to define a transverse extent of the electrode layer, the transverse extent of the electrode layer terminating prior to a terminus of the unit cell.
Aspect 14. The secondary battery set forth in any preceding Aspect wherein (i) the members of the unit cell population are in stacked succession in the longitudinal direction, (ii) the unit cell population comprises two sets of adjacent pairs of unit cells (iii) one of the two sets of the adjacent pairs share a common electrode current collector layer and the other of the two sets of the adjacent pairs share a common counter-electrode current collector layer.
Aspect 15. The secondary battery set forth in any preceding Aspect wherein the spacer members comprise an electrically insulating material.
Aspect 16. The secondary battery set forth in any preceding Aspect wherein the unit cell comprises a supplemental spacer comprising stabilized lithium metal particles.
Aspect 17. The secondary battery set forth in any preceding Aspect wherein the spacer members comprise an adhesive tape having a base and an adhesive layer provided on one surface of the base.
Aspect 18. The secondary battery set forth in any preceding Aspect wherein the spacer members comprise the same material as the separator layer.
Aspect 19. The secondary battery set forth in any preceding Aspect wherein the spacer members define, in part, a transverse terminus of the unit cell.
Aspect 20. The secondary battery set forth in any preceding Aspect wherein the spacer members accommodate expansion of at least one of the electrode layer and the counter-electrode layer in the longitudinal direction while the battery is cycling between the charged state and the discharged state.
Aspect 21. The secondary battery set forth in any preceding Aspect wherein a first portion of the separator layer lies in a first plane defined by the x and z axes, and a pair of second portions of the separator layer lies in a second plane defined by the x and z axes, the second plane being offset from the first plane in the longitudinal direction.
Aspect 22. The secondary battery set forth in Aspect 21 wherein the first portion of the separator layer is disposed in face-to-face engagement with the counter-electrode layer, and the second portions of the separator layer is disposed adjacent a first end and a second end of the counter-electrode layer.
Aspect 23. A method of manufacturing a unit cell for use with a secondary battery, the unit cell having mutually perpendicular transverse, longitudinal, and vertical axes corresponding to the x, y and z axes, respectively, of a three-dimensional Cartesian coordinate system the method comprising:
   stacking an electrode current collector layer, an electrode layer, a separator layer, a counter-electrode layer, and a counter-electrode current collector layer in succession in a longitudinal axis direction, the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, and
   placing a pair of spacer members in the stacked succession between the electrode current collector layer and the counter-electrode current collector layer, one of the spacer members being spaced in a transverse direction from the other spacer member, at least a portion of the counter-electrode active material of the counter-electrode layer being located between the spacer members such that the portion of the counter-electrode active material and the spacer members lie in a common plane defined by the x axis and the z axis.
Aspect 24. The method set forth in Aspect 23 wherein the spacer members are placed between the separator layer and the electrode layer or the counter-electrode layer.
Aspect 25. The method set forth in Aspect 23 wherein the spacer members are placed between the separator layer and the electrode current collector layer or the counter-electrode current collector layer.
Aspect 26. The method set forth in Aspect 23 wherein the spacer members are adhered to at least one of the electrode current collector layer, the electrode layer, the separator layer, the counter-electrode layer, and the counter-electrode current collector layer.
Aspect 27. The method set forth in Aspect 23 wherein the pair of spacer members is placed between the electrode current collector layer and the counter-electrode current collector layer.
Aspect 28. A method for merging a plurality of webs of electrode materials, the process comprising:
   unwinding a first web of the electrode material along a first web merge path, the first web comprising a population of electrode sub-units delineated by corresponding weakened tear patterns and a population of first conveying features,
   unwinding a second web of the electrode material along a second web merge path downstream of the first web merge path, the second web comprising a population of electrode sub-units delineated by corresponding weakened tear patterns and a population of second conveying features;
   conveying a belt comprising a plurality of projections in a web merge direction adjacent the first web merge path and the second web merge path, the plurality of projections configured to engage with the first conveying features of the first web and the second conveying features of the second web;
   inserting a population of spacer members between the first web of electrode material and the second web of electrode material; and
   overlaying the second web of the electrode material on the first web of electrode material at a second web merge location downstream of the first web merge location, the population of spacer members being captured between the first web of electrode material and the second web of electrode material.
Aspect 29. The method set forth in Aspect 28 wherein inserting a population of spacer members between the first web of electrode material and the second web of electrode material comprises unwinding a web comprising a population of spacer members and merging the web of spacer members between the first web of electrode material and the second web of electrode material.
Aspect 30. The method set forth in Aspect 29 wherein the first web of electrode material comprises a central portion and a pair of flank portions on opposite sides of the central portion, the flank portions having a width equal to or less than 50 percent of a width of the central portion, and wherein inserting the population of spacer members comprises merging the web of spacer members at the flank portions of the first web of electrode.

## Claims

1. A secondary battery for cycling between a charged state and a discharged state, the battery comprising an enclosure and an electrode assembly disposed within the enclosure, wherein:
the electrode assembly has mutually perpendicular transverse, longitudinal, and vertical axes corresponding to the x, y and z axes, respectively, of a three-dimensional Cartesian coordinate system,
the electrode assembly comprises a population of unit cells, each unit cell comprising an electrode current collector layer, an electrode layer, a separator layer, a counter-electrode layer, and a counter-electrode current collector layer in stacked succession in a longitudinal direction,
the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material,
a subset of the unit cell population further comprising a pair of spacer members located in the stacked succession between the electrode current collector layer and the counter-electrode current collector layer, one of the spacer members being spaced in a transverse direction from the other spacer member of the pair of spacer members, at least a portion of the counter-electrode active material of the counter-electrode layer being located between the pair of spacer members such that the portion of the counter-electrode active material and the spacer members lie in a common plane defined by the x and z axes.

2. The secondary battery set forth in claim 1 wherein the counter-electrode layer has a central portion and a pair of flank portions on opposite sides of the central portion, the flank portions having a width equal to or less than 50 percent of a width of the central portion and wherein the central portion is the portion of the counter-electrode active material that lies in the common plane.

3. The secondary battery set forth in claim 1 wherein the counter-electrode layer has a central portion and a pair of flank portions on opposite sides of the central portion, the flank portions having a width equal to or less than 30 percent of a width of the central portion and wherein the flank portion is the portion of the counter-electrode active material that lies in the common plane.

4. The secondary battery set forth in any preceding claim wherein the counter-electrode layer has a maximum width measured between an interface with the counter-electrode current collector layer and an interface with the separator layer, the common plane occurring over at least 50 percent of the maximum width.

5. The secondary battery set forth in any preceding claim wherein each of the spacer members have a length extending in the transverse direction, the length of the spacer members being equal to or less than 500 µm.

6. The secondary battery set forth in any preceding claim wherein the counter-electrode layer has a first end and a second end spaced in the transverse direction from the first end, the first end of the counter-electrode layer being adjacent to one of the spacer members and the second end of the counter-electrode layer being adjacent to the other one of the spacer members, optionally wherein the first end and the second end correspond to the pair of flank portions.

7. The secondary battery set forth in any preceding claim wherein the electrode layer has a first end and a second end spaced in the transverse direction from the first end to define a transverse extent of the electrode layer, the transverse extent of the electrode layer terminating prior to a terminus of the unit cell.

8. The secondary battery set forth in any preceding claim wherein (i) the members of the unit cell population are in stacked succession in the longitudinal direction, (ii) the unit cell population comprises two sets of adjacent pairs of unit cells (iii) one of the two sets of the adjacent pairs share a common electrode current collector layer and the other of the two sets of the adjacent pairs share a common counter-electrode current collector layer.

9. The secondary battery set forth in any preceding claim wherein the spacer members comprise an electrically insulating material and/or comprise the same material as the separator layer.

10. The secondary battery set forth in any preceding claim wherein the unit cell comprises a supplemental spacer comprising stabilized lithium metal particles.

11. The secondary battery set forth in any preceding claim wherein the spacer members define, in part, a transverse terminus of the unit cell.

12. The secondary battery set forth in any preceding claim wherein the spacer members accommodate expansion of at least one of the electrode layer and the counter-electrode layer in the longitudinal direction while the battery is cycling between the charged state and the discharged state.

13. The secondary battery set forth in any preceding claim, wherein the spacer members define an expansion gap within the stacked unit cell, optionally wherein the expansion gap is defined between the separator layer and the electrode layer or the counter-electrode layer.

14. The secondary battery set forth in any preceding claim wherein a first portion of the separator layer lies in a first plane defined by the x and z axes, and a pair of second portions of the separator layer lies in a second plane defined by the x and z axes, the second plane being offset from the first plane in the longitudinal direction, optionally wherein the first portion of the separator layer is disposed in face-to-face engagement with the counter-electrode layer, and the second portions of the separator layer is disposed adjacent a first end and a second end of the counter-electrode layer.

15. A method of manufacturing a unit cell for use with a secondary battery, the unit cell having mutually perpendicular transverse, longitudinal, and vertical axes corresponding to the x, y and z axes, respectively, of a three-dimensional Cartesian coordinate system the method comprising:
stacking an electrode current collector layer, an electrode layer, a separator layer, a counter-electrode layer, and a counter-electrode current collector layer in succession in a longitudinal axis direction, the electrode layer comprises an electrode active material, and the counter-electrode layer comprises a counter-electrode active material, wherein one of the electrode active material and the counter-electrode material is a cathodically active material and the other of the electrode active material and the counter-electrode material is an anodically active material, and
placing a pair of spacer members in the stacked succession between the electrode current collector layer and the counter-electrode current collector layer, one of the spacer members being spaced in a transverse direction from the other spacer member, at least a portion of the counter-electrode active material of the counter-electrode layer being located between the spacer members such that the portion of the counter-electrode active material and the spacer members lie in a common plane defined by the x axis and the z axis.

16. The secondary battery set out in any one of claims 1 to 14 or the method set forth in claim 15 wherein the spacer members are placed between the separator layer and the electrode layer, between the separator layer and the counter-electrode layer, between the separator layer and the electrode current collector layer, and/or between the separator layer and the counter-electrode current collector layer.

17. The secondary battery set forth in any one of claims 1 to 14 or the method set forth in claim 15 wherein the spacer members are adhered to at least one of the electrode current collector layer, the electrode layer, the separator layer, the counter-electrode layer, and the counter-electrode current collector layer, optionally wherein the spacer members comprise an adhesive tape having a base and an adhesive layer provided on one surface of the base.

18. The method set forth in claim 15 wherein the pair of spacer members is placed between the electrode current collector layer and the counter-electrode current collector layer.

19. A method for merging a plurality of webs of electrode materials, the process comprising:
unwinding a first web of the electrode material along a first web merge path, the first web comprising a population of electrode sub-units delineated by corresponding weakened tear patterns and a population of first conveying features,
unwinding a second web of the electrode material along a second web merge path downstream of the first web merge path, the second web comprising a population of electrode sub-units delineated by corresponding weakened tear patterns and a population of second conveying features;
conveying a belt comprising a plurality of projections in a web merge direction adjacent the first web merge path and the second web merge path, the plurality of projections configured to engage with the first conveying features of the first web and the second conveying features of the second web;
inserting a population of spacer members between the first web of electrode material and the second web of electrode material; and
overlaying the second web of the electrode material on the first web of electrode material at a second web merge location downstream of the first web merge location, the population of spacer members being captured between the first web of electrode material and the second web of electrode material.

20. The method set forth in claim 19 wherein inserting a population of spacer members between the first web of electrode material and the second web of electrode material comprises unwinding a web comprising a population of spacer members and merging the web of spacer members between the first web of electrode material and the second web of electrode material, optionally wherein the first web of electrode material comprises a central portion and a pair of flank portions on opposite sides of the central portion, the flank portions having a width equal to or less than 50 percent of a width of the central portion, and wherein inserting the population of spacer members comprises merging the web of spacer members at the flank portions of the first web of electrode.
